# EUROPÄISCHE PATENTSCHRIFT

(11) **EP 1 380 382 B1**
(45) Veröffentlichungstag und Bekanntmachung des Hinweises auf die Patenterteilung: **19.10.2005**
(21) Anmeldenummer: 03015295.3
(22) Anmeldetag: 07.07.2003
(51) Int. Cl.: B23Q 1/62

(54) **Bearbeitungsstation mit Werkstückschlitten**
Machining station with workpiece carriage
Station d'usinage avec chariot porte-pièce

(30) Priorität: 09.07.2002 DE 10231043; 18.07.2002 DE 10232777; 16.08.2002 DE 10238386; 19.11.2002 DE 20217937 U; 05.12.2002 DE 20218805 U; 21.03.2003 DE 20304653 U
(43) Veröffentlichungstag der Anmeldung: 14.01.2004
(73) Patentinhaber: Grob-Werke Burkhart Grob e.K., 87719 Mindelheim (DE)
(72) Erfinder: Grob, Burkhart, Dr. h.c.mult. Dipl.-Ing., 86825 Bad Wörishofen (DE)
(74) Vertreter: Pfister, Stefan Helmut Ulrich

(56) Entgegenhaltungen:
- EP-A- 0 614 724
- EP-A- 0 816 012
- WO-A-02/00387
- DE-A- 19 525 419

## Beschreibung

Die Erfindung betrifft eine Bearbeitungsstation, wobei für das Bearbeiten von mindestens einem Werkstück zumindest eine Bearbeitungseinheit vorgesehen ist und das Werkstück an eine Übergabestelle herantransportiert wird. An der Übergabestelle wird das Werkstück von zumindest einem Werkstückschlitten aufgenommen. (siehe, z.B., WO-02/00387-A).

Vorgenannte Bearbeitungsstationen werden zum Beispiel in Transferstraßen eingesetzt. In Transferstraßen werden an Werkstücken eine Vielzahl, oftmals auch komplexer Bearbeitungen vorgenommen. Hierzu werden eine Vielzahl von Bearbeitungsstationen, insbesondere zur spanenden Bearbeitung hintereinander angeordnet und durch eine Transportbahn miteinander verbunden. Von der Bearbeitungsstation werden einige wenige Bearbeitungsschritte ausgeführt, die Vielzahl der hintereinander angeordneten Bearbeitungsstationen erlauben aber eine vielfältige und auch komplexe Bearbeitung des Werkstückes.

Dabei kommt es natürlich auf eine hochgenaue Positionierung des Werkstückes bezüglich der Bearbeitungseinheit beziehungsweise des Werkzeugkopfes oder der Werkzeugspindel an.

Der Stand der Technik kennt daher sogenannte Übersetzer oder einen Obentransfer, die das Werkstück von der Transportbahn abnehmen und auf einen Bearbeitungsplatz setzen.

So zeigt zum Beispiel die deutsche Patentschrift 44 22 416 ein Bearbeitungszentrum, bei welchem das Werkstück an einem Werkstückträger festgespannt ist. Der Werkstückträger läßt sich in eine Werkstückwechselstation verfahren, in welcher ein Werkstückwechsel stattfindet. Diese Werkstückwechselstation befindet sich entfernt von der Bearbeitungseinheit, also nicht im unmittelbaren Bereich der Bearbeitungsspindel. Der Werkstückträger ist dabei entlang einer vertikalen Achse (Y-Achse) absenkbar, um das Werkstück in der Wechselstation aufzunehmen. Des Weiteren ist der Werkstückträger horizontal (in Z-Richtung) bewegbar, um das Werkstück an die Werkzeugspindel heranzuführen. Des Weiteren ist nach diesem Stand der Technik vorgesehen, daß das Werkstück um eine vertikale Achse (B-Achse) drehbar ist.

Nachteilig bei diesem Stand der Technik ist, daß der konstruktive Aufbau für die beiden Linearachsen und die eine Drehachse des Werkstückes sehr groß ist. Die beiden Linearachsen in Y-und Z-Richtung sind als Kreuzschlitten ausgeführt und bedürfen für eine ausreichend hohe Positioniergenauigkeit entsprechenden Aufwand, was zu entsprechend hohen Massen (und somit zu großen Antrieben und hohen Kosten) führt. Dabei ist zu berücksichtigen, daß auf der zum Beispiel als Portal ausgeführten Anordnung auch noch die vertikale Drehachse des Werkstückes in dem Werkstückträger zu berücksichtigen ist.

Neben diesem sehr hohen Aufwand ist diese Anordnung auch nicht geeignet, eine hohe Effizienz zu erreichen, da der Werkstückträger aus dem Bearbeitungsraum, also aus der Nähe der Bearbeitungsspindel wegfahren muß, um auf einem entlegenen Werkstückwechselplatz ein bearbeitetes Werkstück abzusetzen und ein neues Werkstück aufzunehmen.

Einen ähnlichen Vorschlag zeigt auch das Gebrauchsmuster 298 15 125. Auch in dieser Vorrichtung wird das Werkstück an einer Werkstückübergabestelle einem entlang zumindest zweier Achsen X und Z verfahrbaren Werkstückhalter angeboten, der dieses einer Mehrzahl von hintereinander angeordneten Bearbeitungsstationen zuführt.

Die vorliegende Erfindung hat es sich zur Aufgabe gemacht, bekannte Bearbeitungsstationen einfacher zu gestalten. Durch einfache Ausbildung vorgenannter Bearbeitungsstation würden sich günstigere Herstellkosten der Bearbeitungsstation erzielen lassen.

Zur Lösung dieser Aufgabe schlägt die Erfindung eine Bearbeitungsstation nach dem Anspruch 1 vor.

Der erfindungsgemäße Vorschlag verzichtet bewußt auf den Einsatz des aufwendigen Obentransfers oder eines Übersetzers, der entlang mehrerer Linearachsen eine Bewegung des Werkstückes erlaubt. Die Funktion des Obentransfers wird zusammengefaßt mit der Bewegung des Werkstückschlittens, der das Werkstück bezüglich der Bearbeitungseinheit positioniert.

Im Gegensatz zu den Lösungen nach dem Stand der Technik erlaubt der erfindungsgemäße Vorschlag einen geringeren Aufwand für die Positionierung des Werkstückes relativ zur Bearbeitungsspindel. Es ist grundsätzlich möglich, daß mit der einen Linearachse des Werkstückschlittens auch mehrere Drehachsen für das Werkstück verbunden sind. Da aber der konstruktive Aufwand für die Werkstückschlitten bewußt beschränkt wird, können nunmehr zusätzliche Rotationsachsen in den Werkstückschlitten integriert werden und so eine hohe Komfortabilität und Flexibilität der erfindungsgemäßen Bearbeitungsstation gewährleisten.

Verglichen mit den Lösungen nach dem Stand der Technik werden also mit geringerem Aufwand die gleichen Bearbeitungsmöglichkeiten (drei Linearachse und eine Rotationsachse) realisiert beziehungsweise mit ungefähr vergleichbaren Aufwand eine zusätzliche Rotationsachse angeboten.

Dabei ergibt die erfindungsgemäße Ausgestaltung auch den Vorteil, daß eine der drei (orthogonal bzw. rechtwinklig zueinander orientierten) Bewegungs- bzw. Linearachsen (was in diesem Zusammenhang gleichartig ist) für die Bearbeitung in die Bewegung des Werkstückschlittens integriert ist und daher auch der Aufwand für die Ausbildung der Bewegungsachsen der Bearbeitungseinheit verringert wird. Durch eine Aufteilung der verschiedenen Bewegungsachsen auf die beiden relativ zueinander zu positionierenden Elemente, nämlich dem Werkstück einerseits und der Bearbeitungseinheit andererseits, wird der konstruktive Aufwand zusätzlich deutlich verringert. Dieser Effekt geht parallel einher mit der Einsparung des nunmehr überflüssigen Obentransfers.

Die erfindungsgemäße Ausbildung erlaubt aber auch, daß das Werkstück während der Bearbeitung durch die Bearbeitungseinheit bewegt wird. Die Bewegungsachse des Werkstückschlittens wird also nicht nur zur Positionierung, sondern auch während der Bearbeitung eingesetzt.

In einer bevorzugten Ausgestaltung der Erfindung ist vorgesehen, daß sich die Übergabestelle in der Bearbeitungsstation bzw. im Arbeitsraum befindet. Der Vorteil dieser Ausgestaltung liegt darin, daß das zu bearbeitende Werkstück bereits sehr nahe an die Bearbeitungseinheit herantransportiert ist. Eine erfindungsgemäße Variante vermeidet lange Transportwege des Werkstückes, was zu notwendigem Stillstand der Arbeitsstation führt und somit zu Lasten der Zerspanleistung geht. Die Erfindung sieht dabei vor, daß sich die Übergabestelle in der Bearbeitungsstation beziehungsweise im Arbeitsraum befindet. Insofern zählt es auch zum Arbeitsraum, wenn die Transportbahn, die sich durch die Bearbeitungsstation hindurch erstreckt, zum Beispiel durch eine Türe, einen Spanschutz oder dergleichen im Betrieb verdeckt wird. Auch wenn insofern der Arbeitsraum unterteilt wird, so ist die Übergabestelle doch sehr nah bei der Bearbeitungseinheit, worauf es letztendlich ankommt, nämlich daß kurze Wege für den Transport des Werkstückes realisiert sind.

Da nunmehr auf den Einsatz eines Obentransfers verzichtet wird, bauen die erfindungsgemäßen Bearbeitungsstationen entsprechend günstiger. Gleichzeitig wird aber auch eine Beschleunigung der Bearbeitung erreicht, da der notwendige Transport des Werkstückes bis zur Bearbeitungseinheit nach der Erfindung, verglichen mit der Lösung nach dem Stand der Technik, deutlich verringert wird.

Die erfindungsgemäße Bearbeitungsstation gibt also nicht nur einen Vorteil bei der Herstellung dieser Station, sondern bietet auch entsprechende Vorteile bei ihrem Einsatz, da sie Werkstücke rationeller zu bearbeiten vermag.

Es ist von Vorteil, wenn sich der Werkstückschlitten im Wesentlichen vertikal bewegt. Die vertikale Achse wird dabei üblicherweise als Y-Achse bezeichnet, wobei die drei Raumachsen X, Y, Z orthogonal aufeinandergestellt eine Positionierung des Werkstückes relativ zur Werkzeugspindel an jeder Position des Raumes erlaubt. Als Z-Achse wird dabei oftmals die Richtung der Rotationsachse der Werkzeugspindel angesehen. Die X-Achse beschreibt, soweit zutreffend, die Richtung der Transportbahn. Der Einsatz der Erfindung ist auf eine vertikale Orientierung der Bewegungsbahn des Werkstückschlittens nicht beschränkt. Sie bietet aber den Vorteil, daß durch die vertikale Bewegung einerseits das Werkstück in geschickter Weise von der Transportbahn beziehungsweise der Übergabestelle abgehoben werden kann und gleichzeitig entlang einer Bewegungsachse für die mehrachsige Bewegung der Bearbeitungseinheit zugeführt werden kann. Gerade in dem Ausnützen dieser beiden Effekte liegt ein wesentlicher Vorteil dieser erfindungsgemäßen Variante. Da die vertikale Positionierung von dem Werkstückschlitten geleistet wird, benötigt die Bearbeitungseinheit keine vertikale Beweglichkeit oder allgemein eine Beweglichkeit parallel zur Bewegung des Werkstückschlittens.

Es ist günstig, wenn das Werkstück auf einem Werkstückträger aufgespannt ist. Die Verwendung eines Werkstückträgers, zum Beispiel, einem Vorrichtungswagen, einer Palette, einer Platte und so weiter erlaubt es, daß auch unterschiedliche Werkstücke entlang der oftmals vollautomatisierten Fertigung problemlos transportiert und auch bearbeitet werden können. Dabei weisen die Werkstückträger ansich bekannte Indexierungen auf, damit eine hochgenaue Positionierung der Werkstücke für deren komplexe Bearbeitung möglich ist.

Gemäß der Erfindung ist dabei vorgesehen, daß das Werkstück entweder stehend, hängend, seitlich oder schräg auf dem Werkstückträger aufgespannt ist. In einem Fall ist vorgesehen, daß das Werkstück auf der Platte stehend aufgespannt und auch so transportiert wird. Als Transportbahn dient in einem solchen Fall zum Beispiel eine Rollenbahn (z.B. eine Friktionsrollenbahn). Es ist aber auch möglich, daß das Werkstück auf dem Werkstückträger hängend aufgespannt ist und so inbesondere eine trockene Bearbeitung möglich ist, da dann die Späne bei der spanabhebenden Bearbeitung frei nach unten fallen können. Anstelle von einer Transportbahn, die von Rollen gebildet ist, kann dabei zum Beispiel dann eine Transportbahn vorgesehen werden, die seitliche Führungsleisten mit Rädern aufweist, auf welchen die Palette aufliegt und das Werkstück zwischen den beiden Führungleisten der Transportbahn nach unten vorsteht. Günstigerweise wird dabei das Werkstück auf dem Werkstückträger so aufgespannt, daß die Bearbeitung möglichst optimiert durchführbar ist. Sind zum Beispiel schräge Bohrungen einzubringen, so wird geschickterweise das Werkstück entsprechend schräg auf dem Werkstückträger aufgespannt, nämlich unter dem jeweils gewünschten Winkel. Die Spindelachse verbleibt bei einem solchen Ausführungsbeispiel in der horizontalen Lage und benötigt keinen zusätzlichen Verschwenkantrieb. Das schräge oder seitliche Aufspannen verbessert gegebenenfalls auch das Abtropfen von Kühlschmiermittel, welches ansonsten auf dem Werkstück verbleiben würde.

Die Erfindung sieht vor, daß der Werkstückschlitten das Werkstück beziehungsweise den das Werkstück tragenden Werkstückträger von oben, von der Seite und/oder von unten ergreift und hält. Die verschiedenen Anordnungen ergeben sich aus dem jewelligen Anwendungsbereich. Es kann hierbei manchmal günstig sein, das Werkstück bezüglich der Transportrichtung der Transportbahn vorne und hinten seitlich zu ergreifen, es ist aber auch möglich, das Werkstück von oben, zum Beispiel für eine unterseitige Bearbeitung, zu ergreifen und zu spannen. Selbstverständlich ist es auch möglich, daß der Werkstückschlitten das Werkstück beziehungsweise den das Werkstück tragenden Werkstückträger schräg ergreift und hält. Auch hier treten die gleichen Vorteile zutage, wie bei einem schrägen Aufspannen des Werkstückes auf dem Werkstückträger.

In einer bevorzugten Ausgestaltung der Erfindung ist vorgesehen, daß eine Wendestation vorgesehen ist. Dadurch ist es zum Beispiel möglich, daß in der Bearbeitungsstation hängend geführte Werkstücke zwischen den Bearbeitungsstationen stehend oder auch schräg gehalten transportiert werden. Zum Beispiel werden hierzu Rhönräder zum Wenden der auf den Werkstückträger gespannten Werkstücke eingesetzt. Es ist aber auch möglich, anders gestaltete Wendestationen einzusetzen. Im Zusammenhang mit der Erfindung wird als Wendestation auch eine Anordnung gesehen, die das Werkstück auf dem Werkstückträger wendet beziehungsweise anders aufspannt. Auch hierbei kann ein Wenden des Werkstückes bezüglich des Werkstückträgers vorgesehen sein, wodurch die entsprechende Bearbeitung optimiert wird.

In einer bevorzugten Ausgestaltung der Erfindung ist vorgesehen, daß der Werkstückschlitten tischartig ausgebildet ist und das Werkstück auf dem Werkstücktisch des Werkstückschlittens aufliegt. Eine solche Ausgestaltung bietet sich zum Beispiel bei einfachen Bearbeitungsschritten günstig an, wobei gleichzeitig die Führung des Tisches in einfacher Weise realisierbar ist. Gleichzeitig ist eine große Zugänglichkeit des Werkstückes für Bearbeitungen gegeben.

Ist es geplant, daß das Werkstück von mehreren Seiten nacheinander bearbeitet werden soll, so ist es günstig, wenn das Werkstück beziehungsweise der Werkstückträger drehbar ist. In einem solchen Fall bietet es sich auch an, daß der Werkstückschlitten rahmenartig oder wippenartig ausgebildet ist um in einfacher Weise die Ausbildung eines entsprechenden Schwenklagers zu erreichen. Dadurch ist es möglich, eine Drehachse zu realisieren, die z.B. parallel zur A-, B- oder C-Achse der Maschine ist. Das Schwenklager vermag gegebenenfalls auch um eine horizontal orientierte Achse drehbar zu sein.

In einer bevorzugten Ausgestaltung der Erfindung ist vorgesehen, daß der Werkstückschlitten das Werkstück zumindest um eine Drehachse zu drehen vermag. Diese erfindungsgemäße Weiterentwicklung ergibt zusätzliche Vorteile. Es ist nämlich möglich, das Werkstück an mehreren Seiten zur Bearbeitung anzubieten. Insbesondere ist es von Vorteil, wenn das Werkstück an dem Werkstückschlitten durch eine entsprechende Schwenkeinrichtung um 0° bis 360° schwenkbar ist. Es ist so nicht nur eine Bearbeitung der Mantelfläche des Werkstückes möglich, sondern es können auch raumschräge Bearbeitungen, wie zum Beispiel das schräge Bohren eines Auslaßventiles in einen Zylinderkopf oder dergleichen, problemlos ausgeführt werden. Dabei ist es günstig, daß der Werkstückschlitten wiederum in Y-Richtung positionierbar ist und so eine entsprechende hochgenaue Positionierung auch bei schräg anzusetzenden Bohrungen erlaubt, eine Y-Beweglichkeit der Bearbeitungseinheit ist hierbei ebenfalls nicht notwendig.

In einer weiteren bevorzugten Ausgestaltung der Erfindung ist vorgesehen, daß die Drehachse rechtwinklig zur Spindelachse einerseits und rechtwinklig zur Bewegungsrichtung des Werkstückschlittens andererseits ist. Oftmals wird bei dieser Ausgestaltung die Drehachse dann auch parallel zur Transportrichtung des Werkstückes auf der Transportbahn sein. Die so definierte Drehachse wird oftmals entsprechend der Nomenklatur im Maschinenbau als A-Achse bezeichnet. Durch das seiner Längsachse nach aufgespannte Werkstück wird dieses bei einer Rotation um die Drehachse an seinen Mantelflächen bearbeitbar, nur an den Stirnseiten ist eine Bearbeitung so noch nicht möglich, da hier die entsprechende Halterung des Werkstückschlittens stören kann. Es ist aber möglich, am Werkstückschlitten eine zusätzliche Drehachse, zum Beispiel parallel zur vertikalen Achse (dies wird als B-Achse gekennzeichnet), vorzusehen. Durch eine solche erfindungsgemäße Weiterentwicklung wird eine tatsächliche allseitige Bearbeitung des Werkstückes möglich. Dabei ist es möglich, daß die B-Achse entweder in dem Werkstückträger realisiert ist, dieser also zweigeteilt ist und eine Verdrehbarkeit erlaubt, oder aber daß der Werkstückschlitten als solcher drehbar ist. Als C-Achse wird hierbei eine Drehachse angesehen, die parallel zur Spindelachse angeordnet ist.

Neben den vorgenannten Möglichkeiten einer rechtwinkligen oder parallelen Anordnung der Drehachse bezüglich der vertikalen Bewegungsrichtung des Werkstückschlittens ist es natürlich auch möglich, die Drehachse winklig, z.B. in 45° zur C- bzw. B-Achse zu orientieren, um in dieser Weise ein Wenden bzw. Drehen des Werkstückes zuzulassen. Günstigerweise wird dabei der Werkstückträger hängend ausgeführt.

In einer weiteren, erfindungsgemäßen Ausgestaltung ist vorgesehen, daß der Werkzeugschlitten das Werkstück um zwei oder drei, jeweils aufeinander rechtwinklig stehenden Achsen, zu drehen vermag. Durch eine hohe Zahl von Rotationsachsen werden entsprechende komplexe Bearbeitungen möglich. Es ist zum Beispiel vorgesehen, eine Fünfachsbearbeitung durchzuführen, das heißt, zu den drei translatorischen Achsen X, Y, Z treten noch zwei Rotationsachsen (Achse A, B oder C) hinzu. Theoretisch sind auch Sechsachsbearbeitungen möglich, wobei dann zum Beispiel drei Drehachsen im Werkstückschlitten angeordnet sind.

Der Werkstückschlitten ist erfindungsgemäß entweder hängend oder auch stehend (tischartig) ausgebildet. In beiden erfindungsgemäßen Varianten sind dabei verschiedenen Konzepte realisierbar.

Zunächst ist vorgesehen, in dem Werkstückschlitten die Y-Achse mit der A-Achse zu kombinieren. Des Weiteren ist es möglich, die Y-Achse mit der B-Achse zu kombinieren, wobei sich zum Beispiel bei einer tischartigen (stehenden) Ausgestaltung dieser Rotationsachse eine einfache Verkettung als Anschluß für einen Weitertransport des Werkstückes ergibt. Günstiger ist es allerdings für den freien Späneabfall, daß die Anordnung der B-Achse hängend realisiert wird. Für eine Fünfachsbearbeitung ist zum Beispiel eine Kombination der translatorischen Y-Achse mit der B- und A-Rotationsachse oder der C- und A-Rotationsachse vorgesehen. Die translatorische X- beziehungsweise Z-Achse wird von der Bewegung der Werkzeugspindel abgeleitet.

Bezüglich der Anzahl und der Ausrichtung der verschiedenen Drehachsen unterliegt die Erfindung keinen Beschränkungen. Es ist möglich, daß die Erfindung sowohl eine wie auch mehrere Drehachsen gleichzeitig einsetzt. Ebenfalls beschränkt die Erfindung nicht die Orientierung des Werkstückes bezüglich des Werkstückträgers oder des Werkstückschlittens. Es ist möglich, eine ein-, zwei- oder dreiachs Rotation beziehungsweise Drehung des Werkstückes an stehend, hängend oder schräg aufgespannten Werkstücken einzusetzen. Alle möglichen Varianten sind erfindungsgemäß möglich.

In einer bevorzugten Ausgestaltung der Erfindung ist vorgesehen, daß der Werkstückschlitten in einem Rahmen geführt ist und der Werkstückschlitten über zwei Schlitten auf den vertikal orientierten Ständerteilen geführt ist. Alternativ dazu ist es natürlich möglich, für den Werkstückschlitten einen Ständer vorzusehen. Die Ausbildung in einem Rahmen bietet den Vorteil, daß eine Bearbeitung von hinten, also durch den Rahmen hindurch, möglich ist. Diese erfindungsgemäße Variante erlaubt es auch, daß eine zweiseitige Bearbeitung, insbesondere von beiden Seiten bezüglich der Transportbahn erfolgen kann. Beidseitig der Transportbahn ist dann je eine Bearbeitungseinheit vorgesehen und die Zerspanleistung bzw. Bearbeitungsleistung steigt erheblich. Gleichzeitig erlaubt der Rahmen eine hohe Stabilität, die zur Erreichung der hochexakten Bearbeitung günstig ist. Für den Antrieb der zwei Schlitten sind zum Beispiel Kugelrollspindeln oder aber auch Linearantriebe oder dergleichen einsetzbar.

In einer erfindungsgemäßen Variante ist vorgesehen, daß der Ständer für die Führung des Werkstückschlittens im Bereich der Übergabestelle auf der der Bearbeitungseinheit gegenüberliegenden Seite angeordnet ist. Dabei wird zwar der Platz für die Anordnung einer zweiten Bearbeitungseinheit für die Anordnung des Ständers eingesetzt, jedoch ist so ein sehr stabiler Ständer realisierbar, der insbesondere bei entsprechend schweren Werkstücken bzw. entsprechend stabilen Werkstückschlitten und deren Führungen von Vorteil ist. Günstigerweise wird dabei der Ständer, welcher den Werkstückschlitten trägt, mit dem Maschinenständer der Bearbeitungseinheit verbunden, wodurch sich eine höhere Stabilität ergibt. Es ist aber auch möglich, daß die beiden Ständer voneinander getrennt an der Transportbahn aufgebaut werden und gegebenenfalls nur gemeinsam verkleidet werden.

Alternativ ist vorgesehen, daß sich der Rahmen, welcher den Werkstückschlitten trägt, im Bereich der Übergabestelle auf beiden Seiten der Übergabestelle erstreckt bzw. abstützt. Bei dieser erfindungsgemäßen Variante wird der Rahmen letztendlich über der Übergabestelle vorgesehen, wodurch eine Zugänglichkeit von zwei Seiten zu dem Werkstück verbleibt. Dies ist gerade bei einer mehrseitigen gleichzeitigen Bearbeitung des Werkstückes von Vorteil.

Günstigerweise ist vorgesehen, daß die vertikal orientierten Ständer bzw. Rahmenteile Führungsschienen aufweisen, auf welchen sich je mindestens ein, bevorzugt zwei Führungsschuhe des Werkstückschlittens bewegen. Ein Satz von zwei Führungsschienen pro Seite ergibt eine höhere Verwindungsfestigkeit und führt daher zu höherer Präzision bei der Bearbeitung.

In einer erfindungsgemäßen Variante ist vorgesehen, daß sich der Werkstückschlitten auch horizontal, bevorzugt rechtwinklig zur Spindelachse bewegt. Die für die Bearbeitung des Werkstückes notwendigen Bewegungsachsen werden dabei zwischen Bearbeitungseinheit (zum Beispiel Werkzeugspindel) einerseits und der Bewegung des Werkstückes andererseits aufgeteilt. Dabei ist es problemlos möglich, den Werkstückschlitten zum Beispiel durch eine entsprechende Kreuzschlittenführung auch entlang einer zweiten Achse beweglich auszugestalten, wobei günstigerweise diese beiden Bewegungen jeweils rechtwinklig zur Spindelachse orientiert sind.

In einer weiteren erfindungsgemäßen Variante wird vorgeschlagen, daß der Werkstückschlitten ein Werkzeugmagazin für die Bearbeitungseinheit trägt und der Werkstückschlitten für einen Werkzeugwechsel an der Bearbeitungseinheit entsprechend positionierbar ist. Durch diese erfindungsgemäße Weiterentwicklung wird ein zusätzlicher Vorteil sichtbar. Der Werkzeugwechsel erfolgt in der Regel ebenfalls von der gleichen Position aus, an der ansonsten das Werkstück zur Bearbeitung angeboten wird. Dies ist aber gerade der Bereich, der von dem Werkstückschlitten überfahren wird. Während eines Werkzeugwechsels ist sowieso eine Positionierung des Werkstückes nicht möglich, das heißt der Werkstückschlitten ist sowieso nicht einsetzbar. Nutzt man aber den Werkstückschlitten indem dieser günstigerweise das Werkzeugmagazin trägt, so werden Synergien freigesetzt. Just in der Zeit, in der sowieso kein Werkstück bearbeitet werden kann, wird trotzdem der Werkstückschlitten für einen Werkzeugwechsel eingesetzt, wobei dann einfach der Werkstückschlitten so positioniert wird, daß ein Werkzeugwechsel in gewohnter Weise stattfinden kann. Dabei trägt der Werkstückschlitten alle notwendigen Elemente, um den Werkzeugwechsel auszuführen.

In einer erfindungsgemäßen Variante ist vorgesehen, daß, unabhängig von der Bewegung des Werkstückschlittens, auch das Werkzeugmagazin verfahrbar und positionierbar ist. Zum Beispiel ist das Magazin als von der Spindel beziehungsweise dem Werkzeugschlitten getrennte Baugruppe ausgeführt und weist eine eigene Y-Achse (oder allgemein einen Antrieb parallel zur Bewegung des Werkstückschlittens) auf.

In diesem Fall sitzt das Magazin nicht mehr oberhalb des Werkstückschlittens (zum Beispiel eines Rundtisches), sondern (in Draufsicht), zwischen Verfahrbereich des Werkstückschlittens und hinterster Spindelstellung (in Richtung der Z-Achse). Dadurch wird erreicht, daß ein Werkzeugwechsel unabhängig von der Stellung der Y-Achse des Werkstückschlittens beziehungsweise der Verdrehung des Werkstückschlittens beziehungsweise des Werkstückes hierauf erfolgt.

Es ist von Vorteil, wenn eine Spannvorrichtung vorgesehen ist, um das Werkstück bzw. den das Werkstück tragenden Werkstückträger mit dem Werkstückschlitten zu verbinden. Die Spannvorrichtung kann dabei vorteilhafterweise entweder an dem Werkstückschlitten oder aber auch an dem Werkstückträger oder sogar an dem Werkstück selber angeordnet sein. Günstigerweise wird man die Spannvorrichtung am Werkstückschlitten anordnen, da die Gesamtanzahl der Werkstückschlitten bei entsprechenden Anlagen geringer ist als die Anzahl der Werkstückträger, die darin zu transportieren sind. Prinzipiell sind aber alle verschiedenen Varianten möglich.

Es wird vorgeschlagen, die Relativbewegung des Werkstückschlittens zu einem Ergreifen bzw. Lösen des Werkstückes bzw. des Werkstückträgers von dem Werkstückschlitten zu nutzen. Für das Aufnehmen, Ergreifen bzw. Loslassen oder Lösen des Werkstückes bzw. des Werkstückträgers wird ein möglichst einfaches mechanisches Konzept gewählt, welches daher auch nicht störungsanfällig ist. Ein solches Konzept kann zum Beispiel mit Kulissen oder Anfahrkanten usw. realisiert werden, die in einfacher Weise eine entsprechende mechanische Steuerung erlauben. Natürlich ist es auch möglich, ensprechend komplexere Systeme, zum Beispiel mit elektrischen, magnetischen oder optischen Überwachungs- und Steuerungselementen, vorzusehen.

In einer weiteren, bevorzugten Ausgestaltung der Erfindung ist vorgesehen, daß, während der Werkstückschlitten ein erstes Werkstück aufgenommen hat, zumindest ein weiteres Werkstück durch die Bearbeitungsstation gefördert wird. Hieraus ergibt sich ein wichtiger Vorteil für diese Variante der Erfindung. Zur Bearbeitung von weiteren Werkstücken, wird der Werkstückschlitten so weit nach oben verfahren, wobei der Hub natürlich entsprechend groß genug gewählt sein muß, daß weitere Werkstücke während der Bearbeitung durch die Bearbeitungsstation hindurch zur nächsten fahren können. Hieraus resultiert ein enormer Vorteil. Es gelingt hierdurch sowohl seriell als auch parallel Stationen miteinander zu verbinden, also zu verketten. Bei einer seriellen Anordnung wird hierbei jeder Station in Flußrichtung eine unterschiedliche Bearbeitung zugeordnet, wohingegen eine parallele Bearbeitung derart realisiert wird, daß mehrere Stationen (oder Maschinen) mit den gleichen Bearbeitungsaufgaben ausgestattet sind. Die Flexibilität einer solchen, erfindungsgemäß ausgestatteten Bearbeitungsanlage, die später noch geschildert wird, steigt enorm. Es können beide Strategien nacheinander gefahren werden. Bei einem Werkstücktyp werden die Werkstücke nacheinander in jeder der entlang des Bandes aufgestellten Stationen bearbeitet, beim anderen Typ werden Werkstücke nur in bestimmten Stationen bearbeitet und fahren durch andere hindurch. Beim Ausfall einer Station wird die defekte Maschine einfach durchfahren, die Bearbeitung wird dann durch eine andere Station übernommen.

Es ist hierbei von Vorteil, daß ein Spanschutz vorgesehen ist, der vermeidet, daß Späne auf die durch die Bearbeitungsstation geförderten Werkstücke fallen. Es ist oftmals nicht wünschenswert, daß die unter dem Werkstückschlitten durchfahrenden Werkstücke durch herabfallende Späne entsprechend beschmutzt werden. Dabei gibt es verschiedene Varianten, wie ein Spanschutz realisiert werden kann. Zum Beispiel wird erfindungsgemäß vorgeschlagen, daß der Spanschutz als am Werkstückschlitten mitfahrende Klappe oder Platte ausgebildet ist und so automatisch ein "Dach" ergibt, wenn ein nachfolgendes Werkstück das voranlaufende Werkstück, welches sich im Werkstückschlitten befindet, überholt.

In einer anderen, erfindungsgemäßen Variante ist vorgesehen, daß als Spanschutz unterhalb des Werkstückschlittens eine Tür eingebracht zum Beispiel eingeschwenkt oder eingeschoben wird. Zum Schutz gegen Späne ist vorgesehen, zwischen der Bearbeitungszone (die sich oben befindet) und dem unten angeordneten Transportkanal eine Türe einzuschieben. Diese Türe ist dabei zum Beispiel Teil des Maschinengehäuses und öffnet automatisch mit der Bewegung des Werkstückschlittens.

Des Weiteren besteht jederzeit die Möglichkeit, die Werkstücke erst dann durch die Bearbeitungsstation durchfahren zu lassen, wenn eine Bearbeitungspause, zum Beispiel während einer Werkzeugwechselpause, besteht. Ein entsprechendes Signal ist dabei von der Werkzeugstation an die Transporteinheit zu geben.

In einer weiteren bevorzugten Ausgestaltung der Erfindung ist vorgesehen, daß an dem Schwenklager ein Gewichtsausgleich vorgesehen ist. Dieser Gewichtsausgleich dient dazu, das Gewicht bwz. das Moment des Trägers bzw. des von dem Träger aufgenommenen Werkstückträgers (einschließlich des Gewichtes des Werkstückes) auszugleichen. Der Gewichtsausgleich dient dazu, das Drehmoment bzw. das Gewicht soweit zu reduzieren, daß die notwendigen Antriebe nicht auch gegen diese Gewichte bzw. Drehmomente wirken müssen.

In einer bevorzugten Ausgestaltung der Erfindung ist vorgesehen, daß der Gewichtsausgleich von einem Arbeitszylinder gebildet ist, der auf einer Kurbel des Trägers wirkt. Die Kurbel sitzt dabei nicht auf der Drehachse. Durch die Kurbellänge und die Kolbenfläche des Arbeitszylinders bestehen nun zwei Variablen die derart einstellbar sind, daß sie das auftretende Moment weitgehend kompensieren. Dabei bleibt die beliebige Drehbarkeit des Trägers erhalten, der Gewichtsausgleich ist in jeder Stellung des Trägers einsetzbar.

Die Erfindung betrifft auch eine Bearbeitungsanlage, insbesondere eine Transferstraße, welche aus mindestens einem oder mehreren der vorgenannten Bearbeitungsstationen besteht, wobei an allen Bearbeitungsstationen für den An- und Abtransport des Werkstückes eine Transportbahn vorgesehen ist. Die vorbeschriebenen Vorteile der Bearbeitungsstation werden insbesondere bei einer Vielzahl von hintereinander angeordneten Bearbeitungsstationen in einer Bearbeitungsanlage, insbesondere in einer Transferstraße, deutlich. Insbesondere die verkürzten Zyklen für die Bearbeitung, die von einer Einsparung des Obentransfers herrühren, summieren sich bei einer Vielzahl von Bearbeitungen entlang einer Transferstraße günstigerweise auf. Die Rentabilität einer solchen, auch komplexe Arbeiten ausführenden Bearbeitungsanlage steigt erheblich. Dabei ist es natürlich möglich, im Sinne der Erfindung, die Bearbeitungsanlage mit Bearbeitungsstationen wie ebenfalls erfindungsgemäß beschrieben auszustücken und natürlich zu mischen mit Bearbeitungsstationen entsprechend dem Stand der Technik. Der erfindungsgemäße Effekt tritt dann nicht ganz so deutlich hervor, ist aber gleichwohl ebenfalls vorhanden.

Des Weiteren ist es von Vorteil, daß hintereinander zwei oder mehrere Bearbeitungsstationen vorgesehen sind und angeförderte Werkstücke durch eine erste Bearbeitungsstation durchgeführt werden, zu einer freien Bearbeitungsstation. Durch die erfindungsgemäße Ausgestaltung wird erreicht, daß die Flexibilität einer entsprechenden erfindungsgemäßen Bearbeitungsanlage enorm gesteigert wird. Der Grund, wieso hierbei ein Werkstück in der ersten Bearbeitungsstation nicht bearbeitbar ist, ist unerheblich. Die erste Station mag belegt sein, sie kann aber auch für die Bearbeitung unpassend oder aufgrund einer notwendigen Reparatur nicht verwendbar sein. Gegebenenfalls überholt dabei ein nachfolgendes Werkstück ein gerade in Bearbeitung befindliches Werkstück, wobei es dann auch von Vorteil ist, daß jedes Werkstück beziehungsweise jeder Werkstückträger ein gegebenenfalls auch beschreibbares Identifikationselement trägt. Das Identifikationselement ist dabei zum Beispiel ein Schreib-Lese-Chip, der zum einen das Werkstück identifiziert, aber auch den Bearbeitungsfortschritt dokumentiert. Alternativ ist es möglich, durch das Identifikationselement der Bearbeitungsstation die Möglichkeit zu eröffnen, den jeweiligen Bearbeitungsstand des Werkstückes in der zentralen Steuerung abzufragen, in welcher die jeweiligen Bearbeitungsschritte aufprotokolliert werden.

In einer weiteren bevorzugten Ausgestaltung der Erfindung wird ein Verfahren für das Positionieren eines Werkstückes an einer Bearbeitungseinheit vorgeschlagen, wobei das Werkstück auf einer Transportbahn an die Übergabestelle transportiert wird, dort von einem Werkstückschlitten aufgenommen, insbesondere angehoben wird und der Werkstückschlitten das Werkstück an die Bearbeitungseinheit transportiert und/oder der Werkstückschlitten das Werkstück während der Bearbeitung durch die Bearbeitungseinheit bewegt und das Werkstück nach Abschluß der Bearbeitung vom Werkstückschlitten in der Übergabestelle wieder abgelegt wird und das Werkstück hernach auf der Transportbahn abtransportiert wird, wobei das Werkstück entlang nur einer Linearachse durch den Werkstückschlitten bewegt wird.

Vergleicht man den bekannten Ablauf nach dem Stand der Technik, bietet das erfindungsgemäß vorgeschlagene Verfahren erhebliche Zeitvorteile.

Es ist von Vorteil, wenn sich die Übergabestelle im Arbeitsraum bzw. in der Bearbeitungsstation befindet. Günstigerweise endet die Transportbahn im Arbeitsraum oder nahe daran.

In einer bevorzugten Ausführungsform der Erfindung ist vorgesehen, daß das Transportmittel vor der Bearbeitungsstation auf der Transportbahn wartende Werkstücke bzw. Werkstückträger in die Bearbeitungsstation hereintransportiert. Daher ist vorgesehen, daß die Bearbeitungsstation Transportmittel für die Bewegung des Werkstückes bzw. des Werkstückträgers auf der Transportbahn, zumindest im Bereich der Bearbeitungsstation aufweist. Die Transportmittel können dabei von dem Antriebsmittel der Transportbahn getrennt oder mit diesen identisch sein. Zum Beispiel ist es möglich, daß als Transportmittel ein Schlitten mit Mitnehmer vorgesehen ist, der die vor der Bearbeitungsstation wartenden Werkstückträger erfasst und in die Bearbeitungsstation an die Übergabestelle eintransportiert. Alternativ ist es möglich, daß das Transportmittel dafür sorgt, daß die fertig bearbeiteten Werkstücke aus der Bearbeitungsstation ausgefördert werden. Neben dem Einsatz eines separaten Schlittens ist es möglich, z.B. steuerbare Friktionsrollen der Transportbahn als Transportmittel einzusetzen. Die Transportbahn dient zur Verkettung der einzelnen in Flußrichtung hintereinander angeordneten Bearbeitungsstationen, wobei es von Vorteil ist, daß diese nahe an die Bearbeitungsstation bzw. in diese hinein reicht, um so möglichst auch auf zusätzliche Antriebe innerhalb der Bearbeitungsstation einsparen zu können.

In einer weiteren erfindungsgemäßen Ausgestaltung ist vorgesehen, daß die Bearbeitungsstationen hintereinander angeordnet sind und die Abtransportbahn der ersten Bearbeitungsstation die Antransportbahn der zweiten Bearbeitungsstation bildet. Hiermit ist in einfacher Weise ein effektives Verkettungssystem zwischen den einzelnen Bearbeitungsstationen realisiert. Dieses Prinzip ist z.B. dann einsetzbar, wenn Werkstücke durch eine erste Bearbeitungsstation durchgefördert werden zu einer freien weiteren Bearbeitungsstation.

Alternativ schlägt die Erfindung aber auch vor, daß mehrere Bearbeitungsstationen zwischen einer für die Bearbeitungsstation gemeinsame Antransportbahn und Abtransportbahn angeordnet sind. Zum Beispiel ist vorgesehen, daß die Antransportbahn parallel im Abstand zu einer Abtransportbahn angeordnet ist. Zwischen diesen beiden Bändern oder Bahnen stehen beliebig viele einander ersetzende Bearbeitungsstationen, die parallel in den Materialfluß eingebunden sind. Die Steuerung legt fest, welche der parallel laufenden Stationen gerade belegt bzw. frei ist und steuert entsprechend den Fluß der zu bearbeitenden Werkstücke. Diese vielen parallel laufenden Stationen werden dabei aus einem gemeinsamen großen Puffer mit Werkstücken versorgt. Auf die vorher genannte Durchschleusung kommt es hierbei nicht zwingend an. Hierbei ist zu beachten, daß dieses Konzept auch bei Bearbeitungsstationen realisierbar ist, die nicht zwingend mit einem vertikal verschiebbaren Werkstückschlitten ausgestattet sind. Gegebenenfalls erhebt die Erfindung auf diesen Gedanken unabhängig eigenständigen Schutz.

Neben der Möglichkeit, in diesem Konzept mehrere im wesentlichen identische oder ähnliche Bearbeitungsstationen parallel einzusetzen, ist es möglich, in diesem Konzept auch Stationen mit unterschiedlichen Bearbeitungsschritten einzubauen. Das System ist daher auch vielseitig einsetzbar.

Im Übrigen ist es günstig, daß von der Abtransportbahn eine Verbindungsbahn zur Antransportbahn besteht, damit bereits bearbeitete Werkstücke nochmals auf der Antransportbahn zur Bearbeitung herangeführt werden. Eine weitere Bearbeitung kann dabei z.B. durch die gleiche Bearbeitungsstation (gegebenenfalls mit anderen Werkzeugen, in Art eines Bearbeitungszentrums) oder von einer anderen Bearbeitungsstation erfolgen.

Es ist von Vorteil, wenn der Werkstückschlitten für den Abtransport des Werkstückes angehoben wird. Es ist insbesondere vorgesehen, den Werkstückschlitten an den Seiten wangenartig auszubilden, um eine Lagerung für die Drehachse zu schaffen. Dabei ist es günstig, daß der Werkstückschlitten zumindest eine, bevorzugt zwei seitliche Wangen aufweist. Bereits mit einer seitlichen Wange ist prinzipiell eine Verdrehbarkeit des Werkstückes möglich. Stabiler wird die Anordnung dann, wenn das Werkstück zwischen zwei seitlichen Wangen, gegebenenfalls an einem Werkstückschlitten oder an zwei Werkstückschlitten angeordnet wird. Hieraus ergibt sich, daß das Werkstück zwischen den seitlichen Wangen des Werkstückschlittens angeordnet ist und so einen Abtransport des Werkstückes behindern kann. Dies wird sicherlich dadurch vermieden, wenn der Werkstückschlitten für den Abtransport des Werkstückes angehoben wird. Hierauf kann allerdings verzichtet werden, wenn zum Beispiel der Werkstückträger so ausgebildet ist, daß der Werkstückschlitten diesen an seinem oberen Rand ergreift und ein Zurückfahren nicht notwendig ist.

Gleiches gilt auch, wenn das Werkstück eingefördert wird. Hierbei ist es auch von Vorteil, daß der Werkstückschlitten erst dann an die Übergabestelle heranfährt, wenn das Werkstück eingefördert wurde.

In einer bevorzugten Ausgestaltung der Erfindung ist vorgesehen, daß die Bearbeitungsstation für die Bewegung des Werkstückes zwei Türme aufweist, jeder Turm einen verfahrbaren Werkstückschlitten trägt und die Werkstückschlitten gegebenenfalls gemeinsam mindestens ein Werkstück tragen. Die Erfindung erlaubt auch eine Aufteilung der vertikalen Bewegung des Werkstückes auf zwei Werkstückschlitten, die nebeneinander angeordnet das Werkstück bewegen. Die turmartige Ausgestaltung bietet Platzvorteile, da der Turm leichter in der Bearbeitungsstation zu positionieren ist, also eine aufwendige, rahmenähnliche Ständerkonstruktion für den entsprechend groß dimensionierten Werkzeugschlitten, wie oben beschrieben. Dieser Vorschlag erleichtert also den Einsatz der Erfindung. Darüberhinaus erlaubt die Erfindung auch, daß in der Bearbeitungsstation mehr als nur ein Werkstück vorgesehen bzw. vorgehalten wird. In diesem Fall würde zum Beispiel jeder Werkstückschlitten je ein Werkstück tragen.

In einer weiteren, erfindungsgemäßen Ausgestaltung wird vorgeschlagen, daß je ein Turm auf je einer Seite des Transportweges angeordnet ist. Bei dieser vorteilhaften Ausgestaltung befindet sich das Transportmittel beziehungsweise der Transportweg zwischen den beiden Türmen. Eine solche Anordnung ist bezüglich der Stabilität der gesamten Bearbeitungsstation günstig. Die Anordnung kann so gewählt werden, daß sich der Schwerpunkt des Werkstückes beziehungsweise des Werkstückes mit Werkstückträger (Palette) zwischen den beiden Türmen befindet und so nur sehr geringe Momente entstehen. Insofern steht diese Variante alternativ zu den Ständerbauweisen, bei welchen das Werkstück von einem Werkstückschlitten aufgenommen wird, der in der Regel seitlich neben der Transportbahn angeordnet ist. Bei dieser erfindungsgemäßen Variante ist es möglich, den Werkstückschlitten über dem Werkstück zu positionieren.

In einer weiteren Variante der Erfindung wird vorgeschlagen, daß die Bearbeitungsstation für die Bewegung des Werkstückes zwei Türme aufweist, die Türme in Transportrichtung der Werkstücke hintereinander angeordnet sind und sich jeder Turm auf beiden Seiten des Transportweges abstützt, wofür jeder Turm eine Öffnung für den Transportweg besitzt.

Die vorgenannte zweite Variante für den Einsatz von Türmen eröffnet eine Großzahl von interessanten Möglichkeiten. Auch hier ist das Konzept so angelegt, daß das Werkstück so aufgenommen wird, daß möglichst geringe Momente auftreten. Idealerweise befindet sich das Werkstück zwischen den beiden Türmen. Sind bei der soeben geschilderten Variante die Türme noch beidseitig des Transportweges angeordnet, so sind bei dieser zweiten Variante die Türme längs des Transportweges hintereinander angeordnet, mit der Möglichkeit, daß die Werkstücke durch Öffnungen in den Türmen hindurchzubewegen sind und so problemlos zur Übergabestelle gelangen. Dabei ist dieses Konzept geeignet, daß mit einer Variante von Türmen sowohl die Anordnung längs, hintereinander am Transportweg wie auch die Anordnung beidseitig des Transportweges realisierbar ist.

Gleichzeitig löst diese Ausgestaltung zusätzlich Probleme bei dem Fluß der Werkstücke. Es werden zum Beispiel die erfindungsgemäßen Bearbeitungsstationen entlang eines allgemeinen Transportbandes, welches seriell verkettete Stationen versorgt, angeordnet, so ist es prinzipiell möglich, daß die Türme verhältnismäßig nah an dem Transportband angeordnet werden und die Förderlängen für das Einfördern des Werkstückes von der Transportbahn über das Transportmittel an die Übergabestelle sehr gering werden.

Bei der anderen Variante, bei welcher die Bearbeitungsstationen längs des Transportwege hintereinander zwei Türme besitzt, ist es sogar möglich, das Werkstück rückseitig weiterzufördern, wodurch sich ein serielles Bearbeitungsanlagenkonzept mit den erfindungsgemäßen Bearbeitungsstationen in einfachster Weise realisieren läßt.

Bei dieser Anordnung, in welcher Türme längs des Transportweges hintereinander vorgesehen sind, befinden sich geschickterweise die Werkzeugspindeln zwischen den beiden Türmen. Hingegen sind die Werkzeugspindeln dann parallel zur Transportrichtung des Werkstückes im Bereich des Transportmittels angeordnet, wenn die beiden Türme beidseitig des Transportweges angeordnet sind. Bei der anderen Variante, bei welcher die Türme längs des Weges hintereinander angeordnet sind, schließt die Werkzeugspindelachse mit der Transportrichtung einen spitzen, insbesondere rechten Winkel ein.

Gemäß der Erfindung ist auch vorgesehen, daß anstelle von zwei Türmen auch nur ein Turm eingesetzt wird. Dieser Turm ist dann gegebenenfalls ständerähnlich ausgebildet.

Das erfindungsgemäße Konzept bietet in diesem Bereich aber auch noch weitere Möglichkeiten. Werden zum Beispiel die beiden Türme mit jeweils einem eigenständigen Werkstückschlitten ausgestattet, so wird eine Vielzahl von Einsatzmöglichkeiten erreicht.

Zunächst ist es möglich, daß jeder Turm mit seinem Werkstückschlitten autonom eingesetzt wird. Bei einer geschickten Hintereinanderanordnung der Bearbeitungsschritte kann daher der zweite Werkstückschlitten des zweiten Turmes bereits das nächste Werkstück heranfördern, während das erste Werkstück von dem ersten Werkstückschlitten des ersten Turmes gerade endbearbeitet wird. Bei dieser Variante trägt jeder Werkstückschlitten ein eigenes Werkstück.

Bei einer anderen Variante der Erfindung ist es vorgesehen, daß das Werkstück beziehungsweise der das Werkstück tragende Werkstückträger von beiden Werkstückschlitten der beiden Türme bewegt wird. Hierbei ist es von Vorteil, daß beide Türme einen Antrieb für ihren jeweiligen Werkstückschlitten aufweisen. Da der Antrieb auf die beiden Türme verteilt wird, können diese entsprechend klein dimensioniert gewählt werden, um trotzdem gleiche Bearbeitungsgeschwindigkeiten zu erreichen.

Hierbei ist es natürlich von Vorteil, daß die Antriebe der beiden Werkstückschlitten in den Türmen zueinander synchronisiert sind, also die gleichen Bewegungen ausführen. Dies ist aber durch entsprechende Steuerungsmöglichkeiten problemlos möglich.

Erfindungsgemäß ist vorgesehen, daß die Türme einzeln stehend ausgebildet sind. In einer weiteren erfindungsgemäßen Variante ist es aber auch möglich, daß die Türme im oberen Bereich verbunden sind, wodurch sie sich gegenseitig aussteifen und sich die Stabilität entsprechend erhöht.

Das erfindungsgemäße Konzept mit den Türmen erlaubt insbesondere den Einsatz der Bearbeitungsstationen sowohl in einer seriell wie auch in einer parallel arbeitenden Bearbeitungsanlage, ohne allzugroßen Umbauaufwand für die Bearbeitungsstationen.

Die erfindungsgemäßen Bearbeitungsstationen werden für Drei-, Vier- oder Fünfachbearbeitungen eingesetzt. Neben den drei translatorischen Achsen X, Y, Z sind natürlich auch Drehachsen A, B vorgesehen. Auch diese können bei der Ausgestaltung der Erfindung mit Türmen realisiert werden.

Es wird dabei vorgesehen, daß die Werkstückschlitten beider Türme eine gemeinsame Drehachse, hier als Drehachse A bezeichnet, aufweisen. Dadurch ist es möglich, daß zumindest eine Vierachbearbeitung mit dem erfindungsgemäßen Konzept erreichbar ist. Da gemäß diesem Konzept zwei Werkstückschlitten (je einer an einem Turm) für die Bewegung des Werkstückes vorgesehen ist, besitzt auch jeder Werkstückschlitten je einen Drehantrieb für die gemeinsame Drehachse, wobei natürlich auch diese Drehantriebe vorteilhafterweise zueinander synchronisierbar sind. Alternativ besitzen die beiden Werkstückschlitten jeweils unabhängige Drehachsen A.

Natürlich ist auch vorgesehen, daß der Werkstückschlitten für das Werkstück einen Drehantrieb für eine Drehachse B aufweist, die parallel zur Bewegungsrichtung des Werkstückschlittens ist. Auch hier eröffnet die Erfindung erhebliche Vorteile. Es ist prinzipiell möglich, daß die Bearbeitungsstation gleichzeitig zwei oder mehrere Werkstücke bearbeitet. In diesem Fall kann pro Werkstück eine eigenständige Drehachse B (parallel zur Bewegungsrichtung des Werkstückschlittens) angeboten werden. Alternativ ist es natürlich auch möglich, daß nur eine solche Drehachse vorgesehen ist.

Günstig ist es dabei zum Beispiel, die Werkstückschlitten beider Türme durch eine Brücke miteinander zu verbinden, wobei die Brücke das Werkstück um eine zur Bewegungsrichtung der Werkstückschlitten parallelen Drehachse B zu drehen vermag. Durch den Einsatz der Brücke ist es prinzipiell möglich, daß nicht nur ein, sondern auch mehrere Werkstücke aufgenommen werden und von den beiden Werkstückschlitten bewegt werden. Auch dies stellt eine Möglichkeit dar, mehrere Werkstücke in die Bearbeitungsstation zu bringen, wobei insbesondere in Verbindung mit einer mehrspindligen Bearbeitungseinheit entsprechende Bearbeitungsvorteile erzielt werden.

Dabei wird in einer erfindungsgemäßen Weiterentwicklung auch vorgesehen, daß jedes einzelne Werkstück gegebenenfalls untereinander auch unabhängig um parallele Drehachsen B drehbar sind.

In einer weiteren erfindungsgemäßen Ausgestaltung ist vorgesehen, daß das Transportmittel sowohl den An- wie auch den Abtransport der unbearbeitenten beziehungsweise bearbeiteten Werkstücke leistet. Es sei an dieser Stelle darauf hingewiesen, daß für den Transport des Werkstückes verschiedenen Begriffe gewählt werden, ohne hieraus aber einen konstruktiven Unterschied sehen zu wollen. Die unterschiedlichen Begriffe sind für eine eindeutige Bezeichnung der Gegenstände gewählt. Es ist durchaus möglich, daß auch eine Transportbahn entsprechende Abtransport- und Antransportaufgabe ausführt, wie das vorgenannte Transportmittel. Umgekehrt ist es möglich, daß das Transportmittel allgemein Teil der Transportbahn ist.

Das Transportmittel wird insbesondere in Abhängigkeit des Anlagenkonzeptes (parallele oder serielle Bearbeitung) ausgestaltet. Bei einem parallelen Anlagenkonzept sind günstigerweise zwei voneinander unabhängige Bänder vorgesehen, wobei das erste Rohteile und das zweite Fertigteile, jeweils bezogen auf den Bearbeitungsschritt, transportiert. Dementsprechend wird das Transportmittel unbearbeitete Rohteile zuliefern und fertig bearbeitete Werkstücke zurückliefern. Die Anordnung der beiden Bänder erfolgt hierbei günstigerweise entweder nebeneinander oder auch übereinander. Eine Anordnung übereinander spart Platz ein. Bei einem Seriellanlagenkonzept ist es möglich, nur ein Transportmittel einzusetzen.

In einer vorteilhaften Ausgestaltung ist vorgesehen, daß das Transportmittel ein Anförder- und ein Abfördermittel aufweist, wobei auf dem Anfördermittel die unbearbeiteten Werkstücke angefördert und auf dem Abfördermittel die bearbeiteten Werkstücke abtransportiert werden. Selbstverständlich ist ein solches Konzept sowohl bei einer seriell wie auch bei einer parallel eingesetzten Maschine einsetzbar. Um Platz einzusparen wird vorgeschlagen, daß das Anfördermittel und das Abfördermittel übereinander angeordnet sind. Auf eine gewisse Reihenfolge kommt es dabei nicht an, diese kann gegebenenfalls auch wechseln.

Des Weiteren schlägt die Erfindung vor, daß zwei oder mehrere Werkstücke gemeinsam auf einem Werkstückträger oder auf einer Brücke zwischen dem Werkstückschlitten der beiden Türme aufgespannt sind. Durch eine solche Vorgehensweise ist es möglich, daß gleichzeitig mehrere Werkstücke bearbeitet werden, wodurch die Zerspanleistung einer erfindungsgemäßen Bearbeitungsstation entsprechend erhöht wird. Hierbei ist es von Vorteil, daß die Bearbeitungsstation zwei oder mehrere Werkzeugspindeln aufweist und die Bearbeitungsstation gleichzeitig zwei oder mehrere Werkstücke bearbeitet.

Gemäß der Erfindung ist es möglich, daß die Werkstücke auf dem Werkstückträger in Längsrichtung des Transportweges oder rechtwinklig hierzu angeordnet sind. Insbesondere wenn das Werkstück über den gleichen Transportweg wieder von der Bearbeitungsstation wegzutransportieren ist, wie es hertransportiert worden ist, ergeben sich bei einer Hintereinanderanordnung Vorteile bei der Bearbeitungsgeschwindigkeit beziehungsweise der Wechselgeschwindigkeit der Werkstücke.

Die Erfindung ist im Hinblick auf die Anzahl der in einer Bearbeitungsstation gleichzeitig zu bearbeitenden Werkstücke nicht begrenzt. Es ist durchaus möglich, daß mehrere Werkstücke von einem oder mehreren Werkstückschlitten gleichartig oder zumindest teilweise unterschiedlich bewegt beziehungsweise gedreht werden. Diese Anordnung ist sowohl bei Bearbeitungsstationen realisierbar, bei denen nur ein Werkstückschlitten für die Bewegung des Werkstückes vorgesehen ist, wie auch bei der Anordnung mit zwei Türmen ebenfalls realiserbar. Dabei legt sich die Erfindung in keinster Weise darauf fest, daß die Werkstücke bei einer solchen Anordnung nur gleichartig zu bewegen sind. Es ist grundsätzlich möglich, daß zumindest ein Teil der Werkstücke unterschiedlich bewegt oder auch gedreht wird.

Weitere erfindungsgemäße Varianten sind in den Unteransprüchen beschrieben. Die Erfindung ist schematisch in der Zeichnung dargestellt. Es zeigen:
- Fig. 1, 2, 3, 5, 6, 7, 8, 9, 12, 13, 14, 17, 18: jeweils in einer dreidimensionalen Ansicht verschiedene Varianten der Erfindung,
- Fig. 4: in einer Ansicht, teilweise geschnitten, ein Detail der Erfindung,
- Fig. 10: in einer Ansicht ein Detail der Erfindung,
- Fig. 11: eine Seitenansicht nach Fig. 10
- Fig. 15: in einer Ansicht ein weiteres Detail der Erfindung und
- Fig. 16: eine Seitenansicht nach Fig. 15
- Fig. 19: in einer Ansicht ein weiteres Detail der Erfindung
- Fig. 20, 21: in einer dreidimensionalen Ansicht eine weitere Variante der erfindungsgemäßen Bearbeitungsstation;
- Fig. 22: in einer Draufsicht eine schematische Skizze der Anordnung nach Fig. 21;
- Fig. 23 bis 27: jeweils in Ansichten verschiedene Details der Erfindung;
- Fig. 28: in einer schematischen Draufsicht eine weitere Variante der erfindungsgemäßen Bearbeitungsstation;
- Fig. 29: eine detailliertere Ansicht des Konzeptes nach Fig. 28, entlang des Pfeiles XXIX und
- Fig. 30, 31, 32: in einer Ansicht weitere verschiedene Varianten der Erfindung.

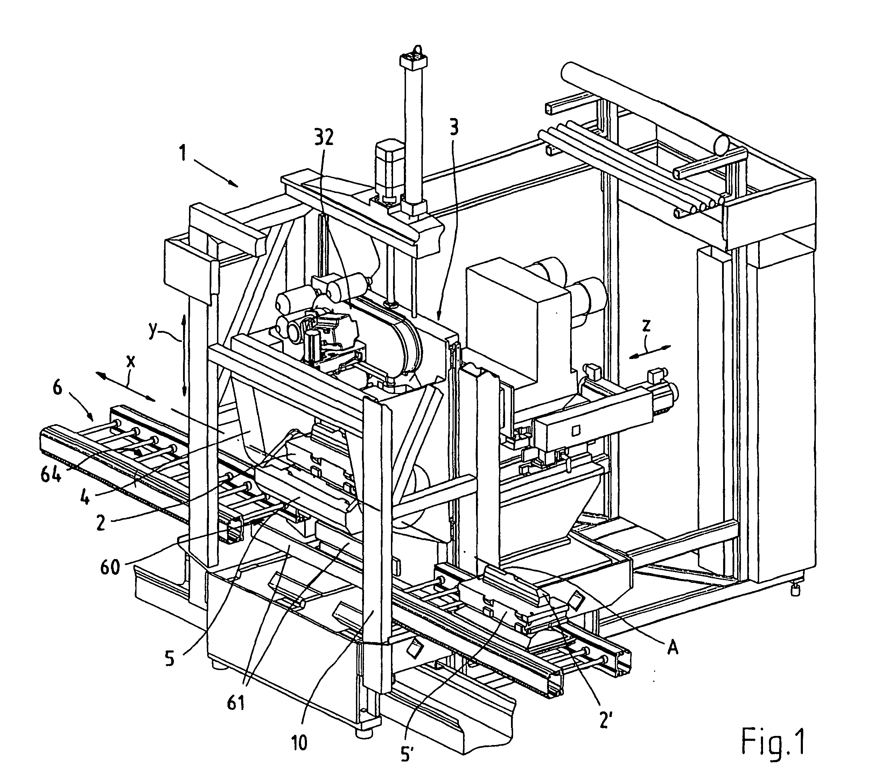

Die erfindungsgemäße Bearbeitungsstation 1 ist zum Beispiel in Fig. 1 gezeigt. Sie besteht im wesentlichen aus einer Bearbeitungseinheit 3, die dazu dient, Werkstücke 2 zu bearbeiten. Die Bearbeitungseinheit 3 weist eine Beweglichkeit entlang der Z-Achse, die parallel zur Spindelachse ist, auf und ist gegebenenfalls auch rechtwinklig hierzu in der X-Achse beweglich. Z-und X-Achse sind hierbei horizontal bzw. im wesentlichen horizontal orientiert. Die vertikale Achse (Y-Achse) wird durch den Werkstückschlitten 4 erbracht, welcher das Werkstück 2 insbesondere während der Bearbeitung oder zur Bearbeitung trägt.

Die erfindungsgemäße Bearbeitungsstation ist oftmals Teil einer ebenfalls erfindungsgemäßen Bearbeitungsanlage, zum Beispiel einer Transferstraße. Hierbei wird eine Vielzahl von hintereinander angeordneten Bearbeitungsstationen durch eine Transportbahn 6 miteinander verbunden. Mit 64 ist dabei der Bereich der Transportbahn 6 gekennzeichnet, bei welchem das Werkstück 2 hereingefördert wird. Fig. 1 zeigt die Situation, bei welcher das Werkstück 2', auf dem Werkstückträger 5' aufgespannt, die Bearbeitung gerade verläßt. Die Bearbeitung ist bereits abgeschlossen.

Der Werkstückschlitten 4 ist in einem Ständer 10 vertikal beweglich gelagert. Günstigerweise ist der Ständer 10 rahmenartig ausgebildet, um die Stabilität für die Bewegung des Werkstückschlittens 4 zu erhöhen. Der Ständer 10 besteht hierbei zum Beispiel aus vier im wesentlichen vertikal orientierten Säulen, die rahmenartig miteinander verbunden sind und eine Führung für die nicht weiter dargestellten Schlitten des Werkstückschlittens 4 bilden. Dabei kann der Schlitten 4 einen oder zwei oder mehrere Schlitten zur Führung auf den jeweiligen vertikalen Ständerteilen aufweisen. Im Bereich des Ständers 10, unterhalb des Schlittens 4, befindet sich die Übergabestelle 60. Davor und danach schließt sich jeweils an der Übergabestelle die Transportbahn 6 an. Die Transportbahn 6 ist oftmals als Friktionsrollenbahn ausgebildet und erlaubt einen eigenständigen Antrieb der Werkstückträger 5. Im Bereich der Übergabestelle 60 werden Gleitleisten 61 eingesetzt; es kann aber in gleicher Weise auch eine Friktionsrollenbahn durchgelegt sein.

Ein weiterer Vorteil der Erfindung liegt darin, daß der Y-Werkstückschlitten nicht nur eine Bewegung des Werkstückes zur Positionierung bzw. während der Bearbeitung des Werkstückes in Y-Richtung (vertikaler Richtung) erlaubt, sondern auch eine Verdrehung des Werkstückes erlaubt. Hierzu ist der Werkstückschlitten 4 wippenartig ausgebildet, das bedeutet, der von dem Werkstückschlitten 4 gehaltene Werkstückträger 5 ist um eine horizontale Achse A drehbar gelagert. Die horizontale Achse A ist dabei im wesentlichen parallel in Richtung der Transportbahn 6. Inbesondere ist die Drehachse A rechtwinklig zur Spindelachse 31 einerseits und rechtwinklig zur Bewegungsrichtung Y des Werkstückschlittens 4 andererseits.

Durch die Verdrehbarkeit des Werkstückes 2 um die Drehachse A wird es möglich, daß eine mehrseitige Bearbeitung des Werkstückes oder auch eine Bearbeitung unter Raumwinkeln möglich ist. Günstigerweise wird dabei eine Verdrehung des Werkstückes 2 um die Drehachse A um bis zu 360° eingerichtet.

In einer bevorzugten Ausgestaltung der Erfindung wird vorgeschlagen, daß die Lage der Drehachse A so gewählt ist, daß sie möglichst den Schwerpunkt des Werkstückes 2, gegebenenfalls den gemeinsamen Schwerpunkt von Werkstück 2 und Werkstückträger 5 beinhaltet. Durch eine solche Ausgestaltung werden Kippmomente möglichst gering gehalten oder sogar vermieden. Eine solche Ausgestaltung erhöht die Genauigkeit der Bearbeitung. Gegebenenfalls ist vorgesehen, den Lagerort des Werkstückträgers bezüglich des Werkstückschlittens zu variieren, um eine entsprechende Anpassung auch bei unterschiedlichen Werkstücken zu erreichen.

Günstigerweise ist die Bearbeitungseinheit 3 zum Beispiel durch eine oder mehrere Werkzeugspindeln 30 im wesentlichen rechtwinklig zur Bewegung des Werkstückschlittens 4 bewegbar und positionierbar. Dies entspricht einer Beweglichkeit der Bearbeitungseinheit in der durch die Achsen X und Z gekennzeichneten horizontale Ebene. Es kann aber auch nur eine Bewegung in Z-Richtung vorgesehen sein.

Wie bereits erläutert, bietet die Erfindung nicht nur einen Vorteil bei der Bearbeitung eines Werkstückes 2. Es wird auch vorgeschlagen, zum Beispiel das Werkzeugmagazin 32 auf dem Werkstückschlitten 4 zu lagern. Dadurch wird erreicht, daß bei Werkzeugwechseln, bei welchen sowieso eine Aufnahme eines Werkstückes durch den Werkstückschlitten 4 nicht möglich ist, trotzdem der Werkstückschlitten 4 sinnvoll eingesetzt wird. In diesem Fall wird der Werkstückschlitten soweit abgesenkt, daß das Werkzeugmagazin 32 an die Bearbeitungseinheit 3 heranführbar ist und der Werkzeugwechsel in gewohnter Weise ausgeführt werden kann. Die hierin verbundenen konstruktiven Vorteile, wie aber auch die rationelle Bearbeitungsführung, liegen auf der Hand.

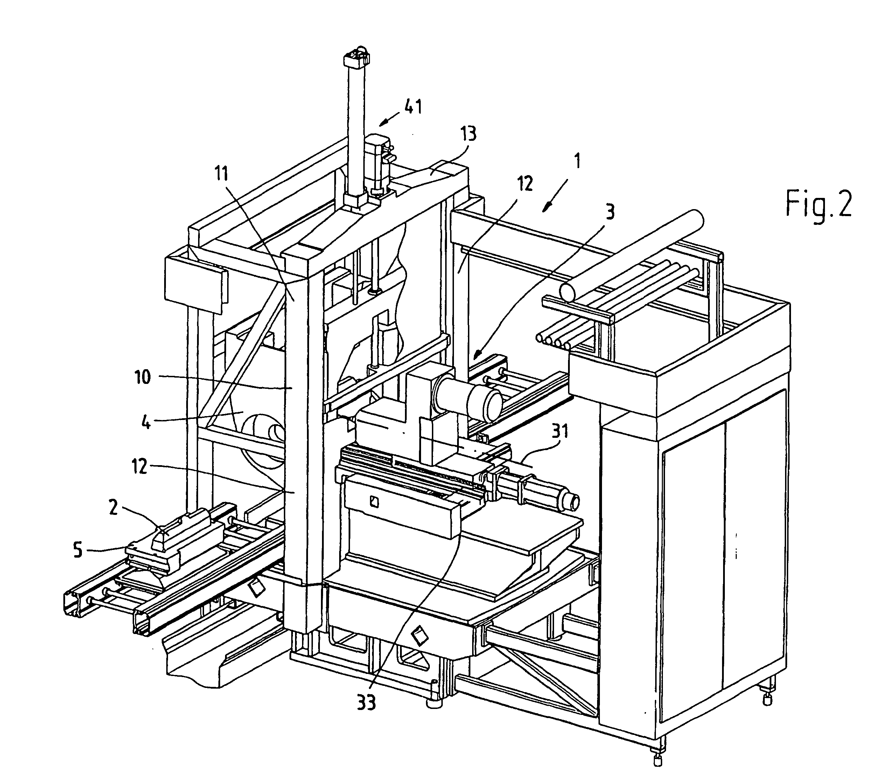

In Fig. 2 ist eine weitere Variante der erfindungsgemäßen Bearbeitungsstation 1 gezeigt. Die Bearbeitungseinheit 3 ist hierbei als Werkzeugspindel 30 ausgebildet. Es können aber auch andere Bearbeitungsgeräte, zum Beispiel ein Laserkopf oder dergleichen, eingesetzt werden. Die Bearbeitungseinheit 3 ist dabei parallel zur Spindelachse 31 auf der Führung 33 beweglich gelagert. Diese Bewegungsrichtung ist dabei rechtwinklig zur Bewegungsrichtung des Werkstückschlittens 4. Bei dieser Rückansicht ist gut zu erkennen, daß die Bearbeitungseinheit 3 von hinten durch eine rahmenartige Ausgestaltung 11 des Ständers 10 hindurchgreift und so das Werkstück 2 bearbeitet. Der Rahmen 11 wird dabei von im wesentlichen vertikal orientierten Ständerteilen 12 gebildet, die an ihrem oberen und gegebenenfalls auch an ihrem unteren Ende durch entsprechende Querträger 13 verbunden sind. Der obere Querträger 13 nimmt dabei Antriebselemente 41 des Werkstückschlittens 4 auf.

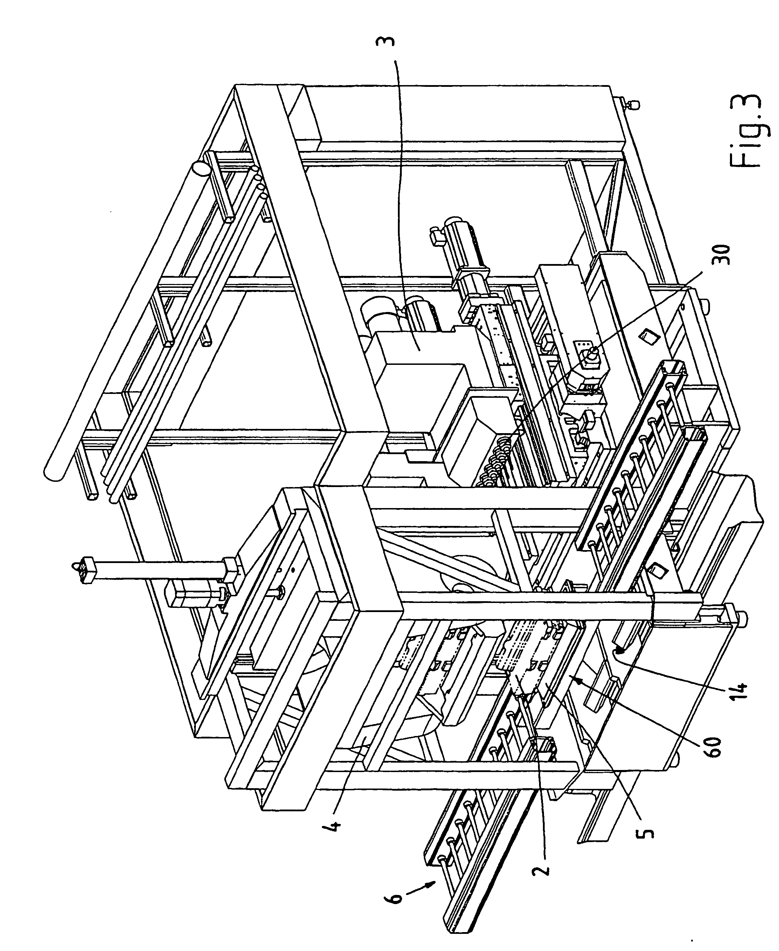

In Fig. 3 ist eine weitere Variante der erfindungsgemäßen Bearbeitungsstation 1 gezeigt. Anstelle von einer Werkzeugspindel 30 nach Fig. 2 befindet sich in diesem Ausführungsbeispiel eine Vielzahl von Werkzeugspindeln 30 nebeneinander auf einer Linie. Es können natürlich auch auf verschiedenen Höhenlagen entsprechende Werkzeugspindeln angeordnet werden. In dem hier gezeigten Ausführungsbeispiel ist die Bearbeitungseinheit 3 in Z-Richtung zurückgezogen. Die Werkzeuge, die auf den Werkzeugspindeln an ihrem vorderen Ende befestigt sind, sind nicht in Eingriff mit dem Werkstück 2.

Die Verdrehbarkeit des Werkstückes 2 um die Drehachse A erlaubt auch eine Trockenbearbeitung des Werkstückes, das heißt auf den Einsatz von Kühlflüssigkeiten kann verzichtet werden. Es wird dann dafür gesorgt, daß eine Bearbeitung des Werkstückes 2 so erfolgt, daß die Späne frei nach unten in die Spanförderrinne 14 fallen können und von dort abtransportiert werden. Gegebenenfalls führt dann die Bearbeitungseinheit 3 nicht eine im wesentlichen vertikal orientierte Bewegung aus, sondern ist gegebenenfalls auch im Raum verschwenkt, um eine Bearbeitung von unten zu erlauben. Eine entsprechende gegenseitige Orientierung der Lage der Spindelachse 31 und des Werkstückes 2 ist dabei problemlos möglich.

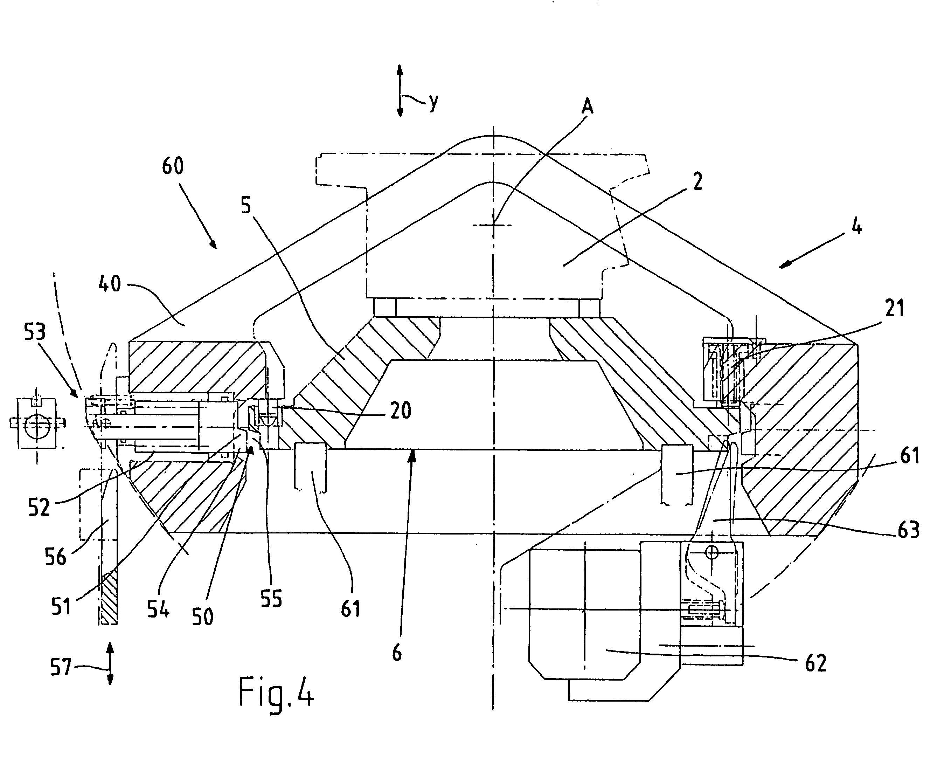

In Fig. 4 ist ein Detail der Bearbeitungsstation 1 gezeigt. Hier geht es insbesondere um die Spannvorrichtung 50. In dem hier gezeigten Ausführungsbeispiel liegt der Werkstückträger 5 zunächst auf den Gleitleisten 61 im Bereich der Übergabestelle 60 auf. Der Werkstückträger 5 trägt das Werkstück 2. Es ist gerade die Situation gezeigt, bei der der Werkstückschlitten 4 das Werkstück 2 bzw. den das Werkstück 2 tragenden Werkstückträger 5 ergreift. Für eine sichere Verbindung des Werkstückträgers 5 bzw. des Werkstückes 2 mit dem Werkstückschlitten 4 ist die Spannvorrichtung 50 vorgesehen. Diese ist im wesentlichen im linken Teil der Zeichnung angedeutet. Für eine sichere Positionierung des Werkstückträgers 5 bezüglich des Werkstückschlittens 4 ist eine Indexiereinheit 20 vorgesehen. Diese besteht aus zwei Positionierstiften, die am Werkstückschlitten angeordnet sind und in damit korrespondierende Bohrungen des Werkstückträgers 5 eintauchen. Dadurch wird eine genaue Positionierung des Werkstückträgers bezüglich des Werkstückschlittens 4 erreicht, was für eine hochexakte Bearbeitung notwendig ist. Das Eingreifen der Positionierstifte in die dazugehörigen Bohrungen erfolgt bei der sowieso vorgesehenen Absenkbewegung des Werkstückschlittens 4 in der Übergabestelle 60.

In dem hier gezeigten Ausführungsbeispiel wird die Spannvorrichtung 50 an dem Werkstückschlitten 4 von einem federbetätigten Halter 51 gebildet, der in der federentlasteten Stellung mit dem Werkstückträger 5 zusammenwirkt. Der Werkstückschlitten 4 ist hier zum Beispiel als Schwenkrahmen 40 ausgebildet. In dieser Stellung hält der Halter 51 den Werkstückträger 5. Der Halter 51 ist gegen die Kraft der Feder 52 derart zurückbewegbar, um den Werkstückträger 5 freizugeben. Der Halter 51 weist eine vorspringende Nase 54 auf, die durch eine entsprechende Hinterschneidung 55 am Werkstückträger 5 eingreift und so eine kraftschlüssige Verbindung herstellt. Die genaue Positionierung ist durch die Lage der Indexiereinheit 20 festgelegt.

Es ist eine Löseeinrichtung 53 vorgesehen, die bei einer Bewegung des Werkstückschlittens 4 auf die Übergabestelle 60 zu, insbesondere bei einer Absenkbewegung (in Y-Richtung) des Werkstückschlittens 4, den Halter 51 zur Freigabe oder zur Aufnahme des Werkstückträgers bewegt. Die Löseeinrichtung besteht aus dem Keil 56, der an seinem vorderen Ende eine Abflachung aufweist. Diese als Steuerkante wirkende Abflachung dient dazu, mit einer entsprechenden Ausnehmung an dem Halter 51 zusammenzuwirken und diesen entsprechend gegen die Kraft der Feder 52 zu bewegen. Im entlasteten Zustand der Feder 52 wird der Halter 51 nach rechts versetzt, und die Nase 54 greift in die Hinterschneidung 55 ein. Durch das Zusammenwirken des Keiles 56 mit der entsprechenden Ausnehmung wird eine Kraft entgegen der Federkraft der Feder 52 eingeprägt und der Halter 51 nach links versetzt, um entweder die abzugebenden Werkstückträger freizugeben oder aber bei einer Greifbewegung den Halter 51 zunächst soweit zurückzusetzen, daß dieser nicht mit dem Werkstückträger 5 kollidiert.

In dem hier gezeigten Ausführungsbeispiel ist die Löseeinrichtung 53 längs des Doppelpfeiles 57 beweglich ausgebildet, wodurch die Stelle, an der die Löseeinrichtung 53 auf den Halter 51 wirkt, für das Ergreifen bzw. Lösen des Werkstückträgers 5 variierbar ist. Dadurch ist es möglich, zum Beispiel den Halter in einer anderen Stellung zurücklaufen zu lassen, wie es zum Beispiel bei dem Ergreifen notwendig ist. Die Bewegungsrichtung, die durch Doppelpfeil 57 angedeutet ist, ist dabei parallel zur Bewegungsrichtung des Werkstückschlittens 4 (Y-Achse).

Um ein ungewolltes Verkanten des Werkstückträgers 5 mit dem Werkstückschlitten 4 gerade bei dessen Freigabe zu vermeiden, ist am Werkstückschlitten bzw. Werkstückträger eine Abdrückeinheit 21 vorgesehen. Diese besteht zum Beispiel aus einem oder mehreren federnd gelagerten Abdrückbolzen, deren Federkraft so gerichtet ist, daß sie den Werkstückträger 5 abzudrücken versuchen, wenn dieser freigegeben wird. Durch die Verwendung der Feder wird ein passives, eigentlich immer funktionierendes Mittel zur Verfügung gestellt.

der Transportbahn 6 entsprechende Friktionsrollenantriebe vorgesehen. Diese auf Reibung funktionierenden angetriebenen Walzen sind ein bewährtes Mittel zum Antrieb von Stückgütern, wie zum Beispiel werkstückhaltenden Werkstückträgern. Auf dieses Konzept kann alternativ auch in der Übergabestelle 60 zurückgegriffen werden. Alternativ wird hier aber auch vorgeschlagen, die Werkstückträger 5 auf Gleitleisten 61 zu lagern und eine separate Ein- und Ausschiebeeinrichtung 62 als Transportmittel 62 in der Übergabestelle vorzusehen. So kann zum Beispiel ein Pneumatikzylinder oder aber auch ein Spindelantrieb oder dergleichen vorgesehen sein, der durch eine ebenfalls gefederte Klinke 63 in eine entsprechende Nut auf der Unterseite des Werkstückträgers 5 kraftschlüssig eingreift und so eine Bewegung des Werkstückträgers 5 zumindest entlang der Gleitleisten bis zur Transportbahn.

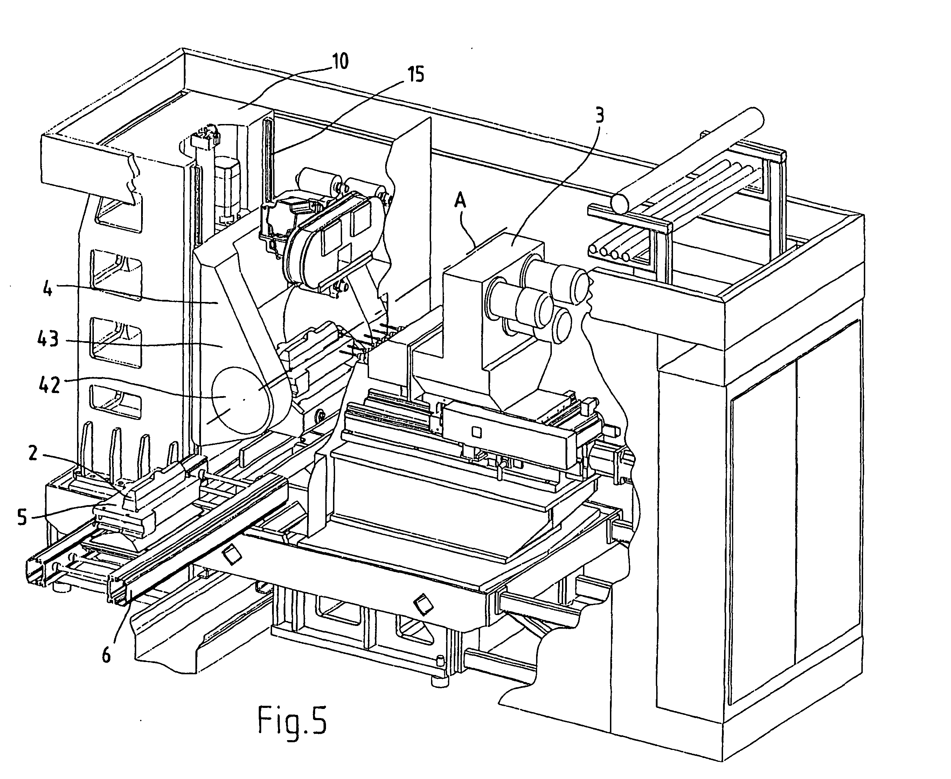

In Fig. 5 ist die Erfindung derart gezeigt, daß der Werkstückschlitten 4 nicht in einem Rahmen, wie in Fig. 1 oder Fig. 2 gezeigt, gelagert ist, sondern hierfür ein eigener Ständer 10 auf der der Bearbeitungseinheit direkt gegenüberliegenden Seite der Transportbahn 6 vorgesehen ist.

Deutlich zu erkennen ist das Schwenklager 42, welches eine Verdrehung des Werkstückträgers 5 bzw. des Werkstückes 2 um die Drehachse A erlaubt. Das Schwenklager 42 ist dabei wippenartig als 360°-Gelenk an seitlich vorstehenden Wangen 43 des Werkstückschlittens 4 vorgesehen. Es sind dabei zwei Wangen 43 vorgesehen, zwischen welchen das Werkstück 2 bzw. der Werkstückträger 5 angeordnet ist.

In den vertikal verlaufenden Teilen des Ständers 10 sind Führungsschienen 15 für die Lagerung der Führungsschuhe des Werkstückschlittens 4 angeordnet.

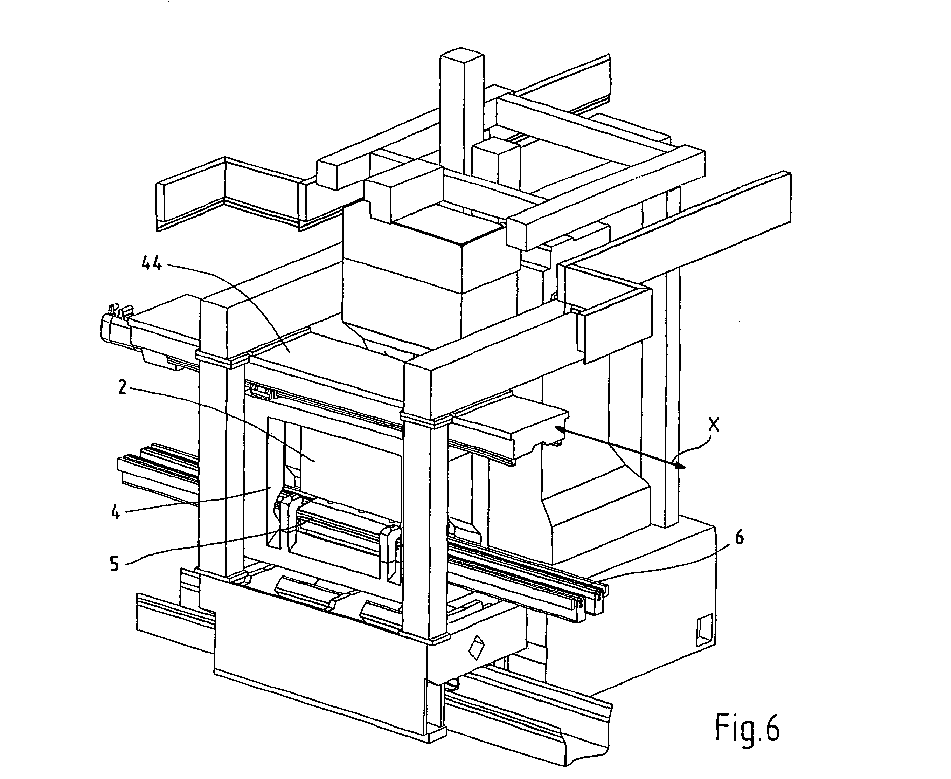

In Fig. 6 ist in einer weiteren Variante der Erfindung gezeigt, daß sich der Werkstückschlitten 4 auch horizontal bewegt. Diese Bewegung erfolgt längs der Führung 44, die an dem Rahmen im oberen Bereich an Querträgern vorgesehen ist und eine Beweglichkeit entlang der X-Achse (parallel zur Richtung der Transportbahn 6) erlaubt.

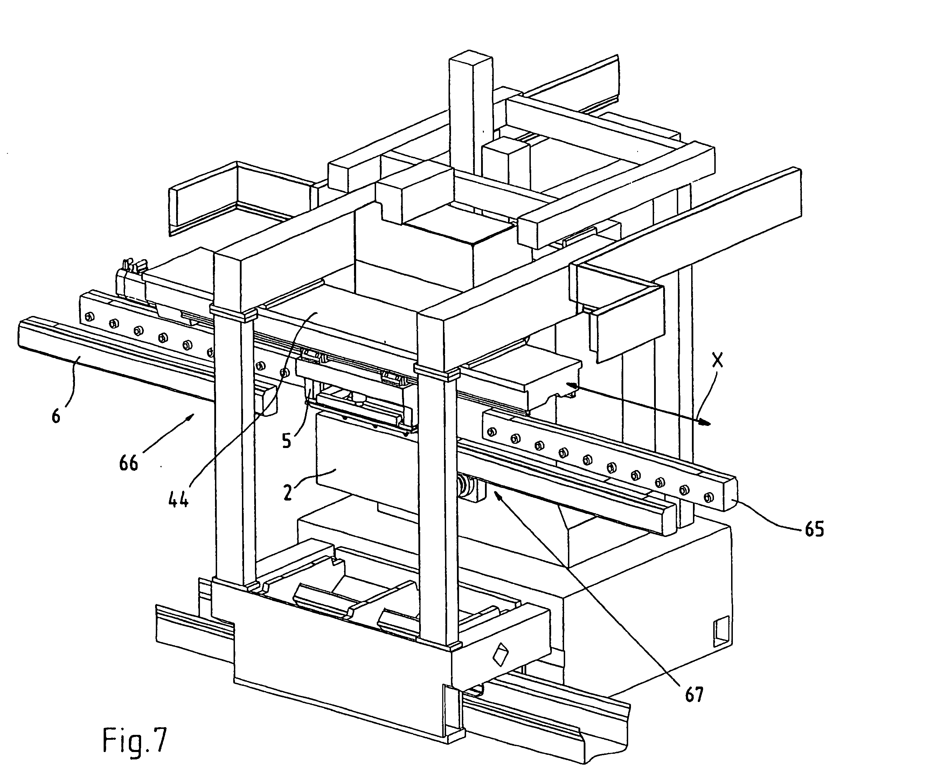

In Fig. 7 ist jedenfalls vorgesehen, daß das Werkstück 2 von dem Werkstückschlitten 4 nicht nur angehoben, sondern auch ebenfalls entlang der X-Achse bewegt wird.

In Fig. 7 ist ein hängender Transport des Werkstückes 2 an dem Werkstückträger 5 gezeigt. Das Werkstück 2 befindet sich dabei oftmals in einem sogenannten Korb unterhalb des Werkstückträgers 5. Der Werkstückträger 5 wird von oben vom Werkstückschlitten 4 ergriffen.

Es ist deutlich zu erkennen, daß die Transportbahn 6 im Bereich der Bearbeitungseinheit unterbrochen ist und hier ein Transfer durch den Werkstückschlitten in X-Richtung erfolgt. Dabei ist vorgesehen, daß die Bewegungsbahn 44 die jeweiligen End- bzw. Anfangsbereiche der anschließenden Transportbahn 6 soweit überdeckt, daß auf der Einlaufseite ein erster Übergabebereich 66 geschaffen wird und analogerweise im Auslaufbereich eine zweite Übergabestelle 67 für den Abtransport des Werkstückes. Dabei bleibt die Führung 44 ortsfest, der Schlitten ist auf dieser Führungsbahn geführt und erlaubt eine Bewegung in die hierzu rechtwinklige (vertikale) Y-Richtung.

Aufgrund der hängenden Anordnung des Werkstückes unterhalb des Werkstückträgers 5 besteht die Transportbahn 6 je aus zwei parallel verlaufenden Führungsleisten 65 mit seitlich angeordneten Auflagerollen. Das nach unten hängende Werkstück befindet sich somit zwischen den beiden Führungsleisten 65. Auch bei diesem Konzept wird der erfindungsgemäße Vorteil ausgenützt, nämlich daß der Werkstückschlitten 4 das Werkstück aufnimmt und ohne Weiterreichung an eine sonstige Positioniereinheit der Werkstückschlitten gleichzeitig auch für eine Positionierung und gegebenenfalls für eine Bewegung des Werkstückes bei der Bearbeitung sorgt.

Hier, wie auch in Fig. 6, kommt noch der Vorteil hinzu, daß das Werkstück nicht nur entlang einer, sondern entlang zweier Achsen, also in einer senkrecht stehenden Ebene, die senkrecht zur Spindelachse bevorzugt orientiert ist, bewegbar ist. Dadurch werden komplexere Arbeitsschritte möglich, die Aufteilung der verschiedenen Bewegungsachsen auf die beiden Aggregate, den Werkstückschlitten einerseits und die Bearbeitungseinheit andererseits, spart bei gleicher Komfortabilität Kosten bei der Realisierung.

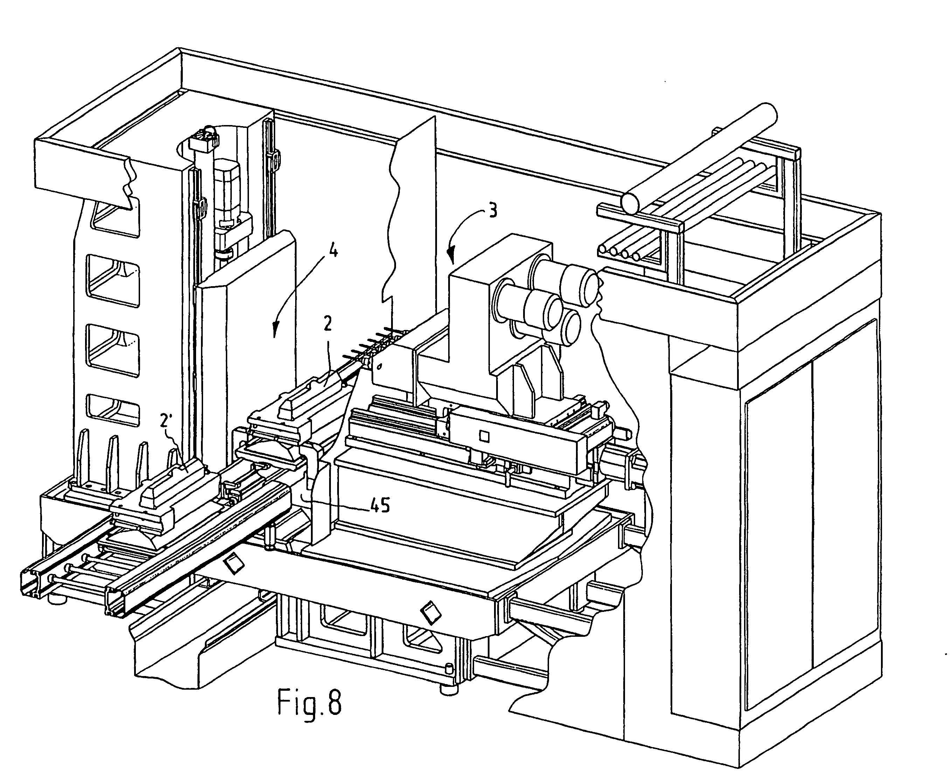

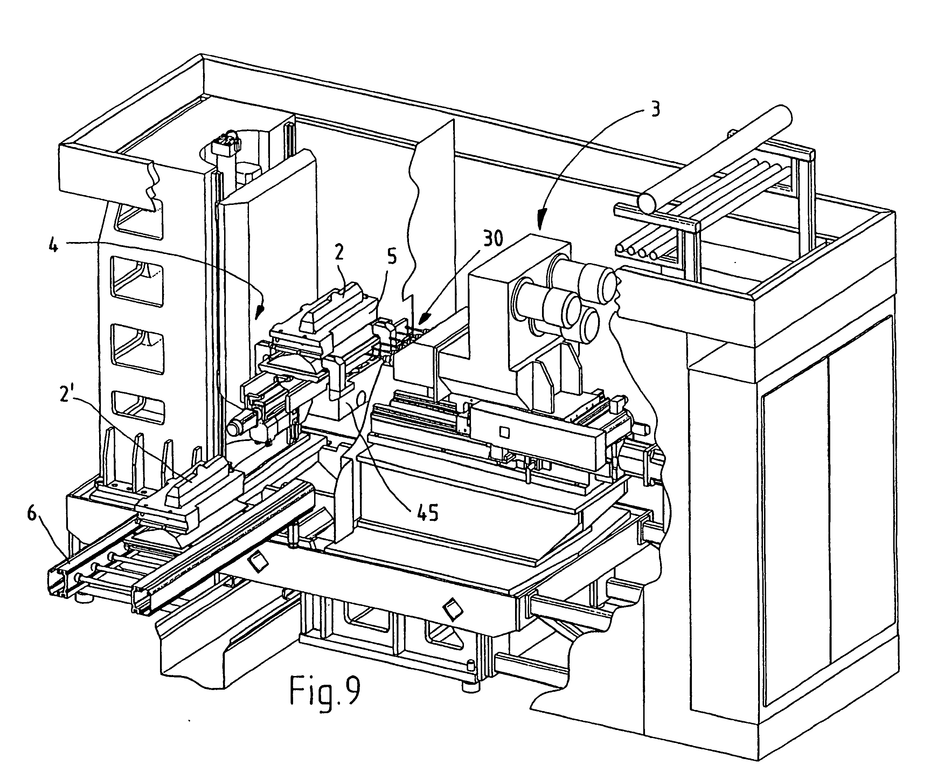

In Fig. 8, 9 ist, verglichen mit der Ausgestaltung nach Fig. 5, eine andere Variante der Erfindung gezeigt. Nach dem erfindungsgemäßen Vorschlag nach Fig. 5 wird der Werkstückträger 5 von Wangen 43 wippenartig, und somit drehbar gelagert gehalten.

In den Fig. 8, 9 wird eine einfachere Variante vorgeschlagen. Es wird ein Werkstücktisch 45 vorgeschlagen, welcher den Werkstückschlitten 4 bildet und so eine insbesondere vertikale Bewegung des Werkstückes 2 zur Positionierung und während der Bearbeitung durch die Bearbeitungseinheit 3 erlaubt. Ähnlich wie die Lösung nach Fig. 5 wird auch bei dieser Variante nach Fig. 8 beziehungsweise 9 der Ständer auf der der Bearbeitungseinheit gegenüberliegenden Seite der Transportbahn 6 angeordnet.

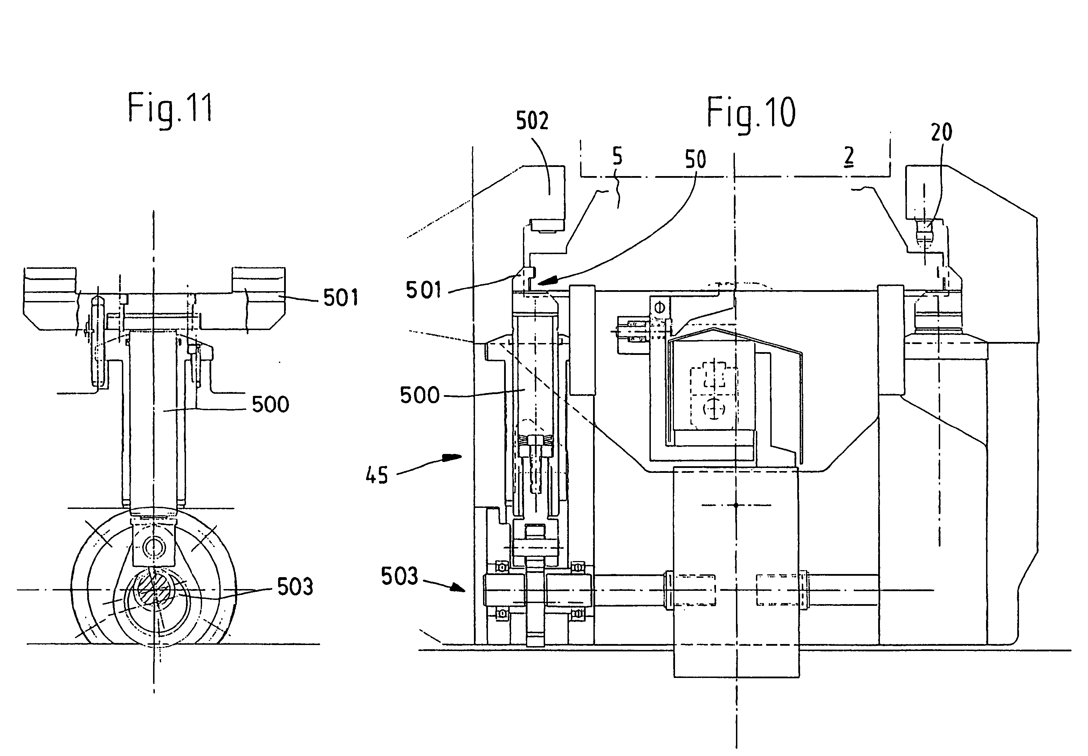

In Fig. 8 ist die noch abgesenkte Stellung des Werkstückschlittens 4 mit dem Werkstücktisch 45 gezeigt. Nachdem der Werkstückträger 5 mit dem Werkstück 2 ganz eingeschoben ist (ein Detail wird hierzu insbesondere in Fig. 10 erläutert), wird das Werkstück 2 durch den Werkstückschlitten 4 angehoben, wie es in Fig. 9 dargestellt ist.

Die Ausbildung des Werkstücktisches 45 bietet platzmäßig auch Vorteile. Es ist gut ersichtlich, daß der obere Bereich über dem Werkstück 2 für die verschiedensten Bearbeitungen frei ist. Die Spannvorrichtung zum Festhalten des Werkstückträgers 5 beziehungsweise des Werkstückes 2 befindet sich in dieser Variante unterhalb des Werkstückes 2 beziehungsweise im oder unter dem Werkstücktisch 45.

In Fig. 10 ist gezeigt, daß die hier realisierte Spannvorrichtung 50 an dem Werkstücktisch 4 durch einen heb- und senkbaren Greifer 500 gebildet ist, dessen oberes Ende 501 beim Einfördern des Werkstückträgers 5 in die Übergabestelle 60 in Nuten 58 des Werkstückträgers 5 eingreift und der Werkstückträger 5 durch ein Heben des Greifers 500 gegen ein Widerlager 502 auf den Werkstückschlitten 4 gespannt wird.

Bei dieser Variante der Erfindung steht der Werktstücktisch 45 konsolenartig an dem auf den Führungsschienen 15 geführten Werkstückschlitten 4 vor. Anstelle der Ständerbauweise könnte der Tisch aber auch durch ein Scherengelenk von unten angehoben werden.

Für das Heben und Senken des Greifers 500 ist ein Exzenterantrieb 503 vorgesehen (siehe Fig. 11). Der Exzenterantrieb 503 ist dabei unterhalb des Werkstücktisches 45 angeordnet und fährt mit diesem mit. Es ist gut zu erkennen, daß der Greifer 500 an seinem vorderen Ende 501 mehrere L-artig ausgebildete Kupplungselemente aufweist, die in die Nut 58 an dem Werkstückträger 5 eingreifen.

Die in die Nut eingreifenden Elemente sind dabei gabelartig, zur Erhöhung der Stabilität an dem Greifer 500 vorgesehen.

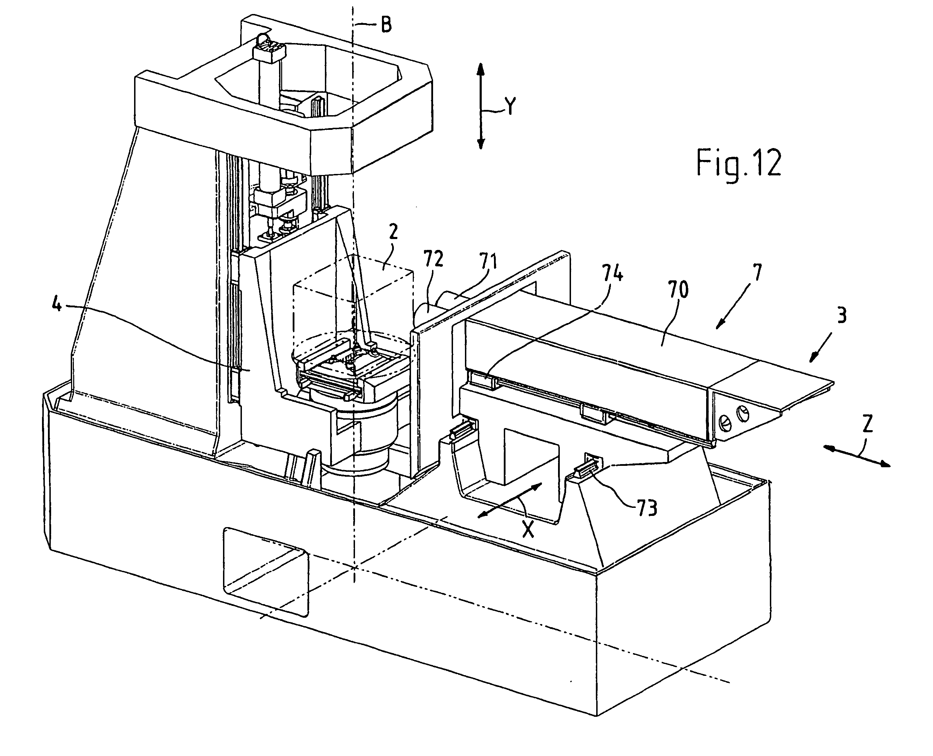

In Fig. 12 ist eine weitere, erfindungsgemäße Variante der Bearbeitungsstation gezeigt. Der Werkstückschlitten 4 nimmt das Werkstück 2 stehend auf. Der Werkstückschlitten 4 ist wiederum vertikal nach oben, entlang der Y-Achse verschiebbar. Der Werkstückschlitten 4 ist als Rundtisch ausgebildet und erlaubt eine Rotation um die Achse B, die ebenfalls vertikal orientiert ist.

Der Ständer des Werkstückschlittens 4 befindet sich dabei auf der einen Seite der Transferrichtung, auf der anderen Seite ist die Bearbeitungseinheit 3 angeordnet.

Diese besteht in diesem Ausführungsbeispiel aus einer Bearbeitungsspindel 7, welche in dem speziellen Ausführungsbeispiel zwei Spindeln 71, 72 besitzt. Diese sind in dem Spindelkasten 70 derart gelagert, daß sie über die Führung 74 entlang der Z-Achse beweglich sind.

Des Weiteren ist die komplette Bearbeitungseinheit auf einer Führung 73 gelagert, die ihrerseits entlang der X-Achse (rechtwinklig zur Z- beziehungsweise Y-Achse) beweglich ist, und so für die Bearbeitung zwei Achsen zur Verfügung stellt.

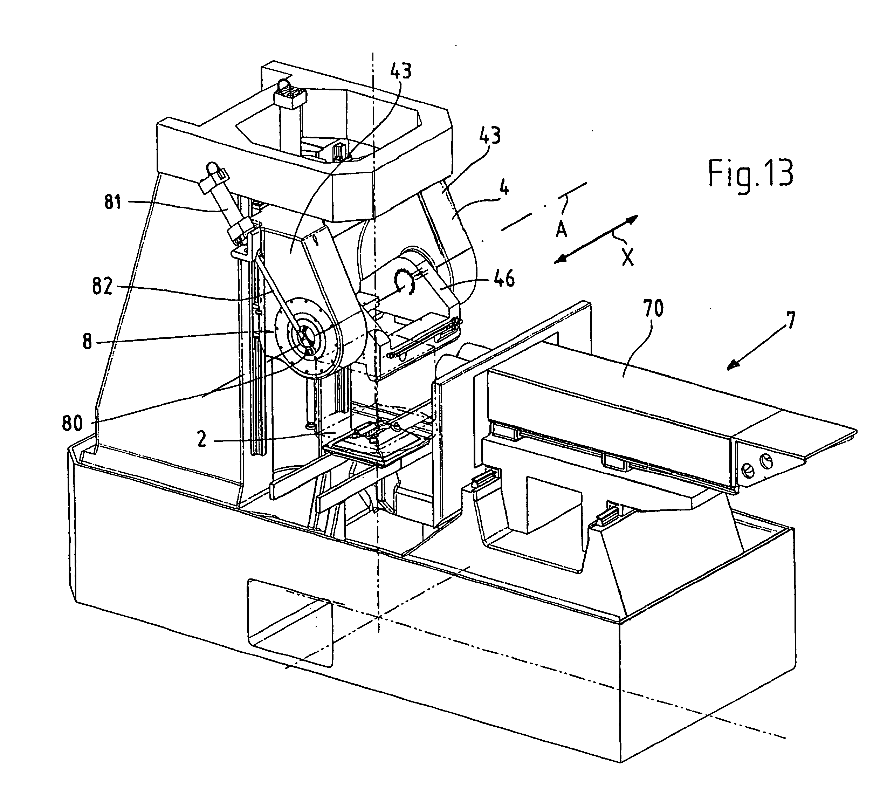

Im Gegensatz zu der in Fig. 12 gezeigten, stehend montierten Ausrichtung des Werkstückes 2, ist in Fig. 13 eine hängende Anordnung realisiert. Der Aufbau der Werkzeugspindel 7 entspricht dabei der Anordnung nach Fig. 12. Des weitern zeigt Fig. 13 den Gewichtsausgleich 8. Der Werkstückschlitten 4 wird in diesem Ausführungsbeispiel von zwei seitlich, vertikal bewegbaren, zusammenhängenden Wangen 43 gebildet, die zwischen sich den Träger 46 aufnehmen, der um die A-Achse drehbar ist. Ist nun der Schwerpunkt nicht auf der Drehachse A, so resultiert ein Drehmoment, welcher von den Verstellantrieben entsprechend aufzufangen ist. Um dies zu kompensieren, ist ein Gewichtsausgleich für die Schwenkachse vorgesehen. Hierzu weist der Träger 46 eine Kurbel 80 auf, die bezüglich der Drehachse A exzentrisch gelagert ist und an welcher rechtwinklig die Kolbenstange 82 eines Arbeitszylinders 81 angreift. Der Arbeitszylinder 81 ist nun so angesteuert, daß er dem auf die Kolbenstange 82 wirkenden Drehmoment entgegengerichtet ist und dieses kompensiert. Natürlich fährt der Arbeitszylinder 81 an dem Werkstückschlitten 4 mit.

Durch die Kolbenfläche und die Länge der Kurbel besitzt man nunmehr zwei Variablen, um das erforderliche Gegenmoment zu beeinflussen. Durch entsprechende Abstimmung von Kurbellänge und Kolbenfläche ist es möglich, diesen Gewichts- (oder Moment-) Ausgleich an die für Linearachsen bekannten Gewichtsausgleich anzuschließen. Dies erlaubt es, daß der gesamte Gewichts- bzw. Momentausgleich einer erfindungsgemässen Bearbeitungsstation mit nur einem Druckbehälter (Windkessel) auskommt. Zusätzlicher Überwachungsaufwand für den Gewichtsausgleich ist dann in diesem Fall nicht notwendig, da dies sowieso für den Gewichtsausgleich für Linearachsen realisiert ist. Die Erfindung beansprucht gegebenenfalls für das Detail des Gewichtsausgleiches auch eigenständigen Schutz.

Der Werkstückschlitten 4 erlaubt hierbei ein Verschwenken um die Drehachse A, die parallel ist zur Werkstückförderrichtung X.

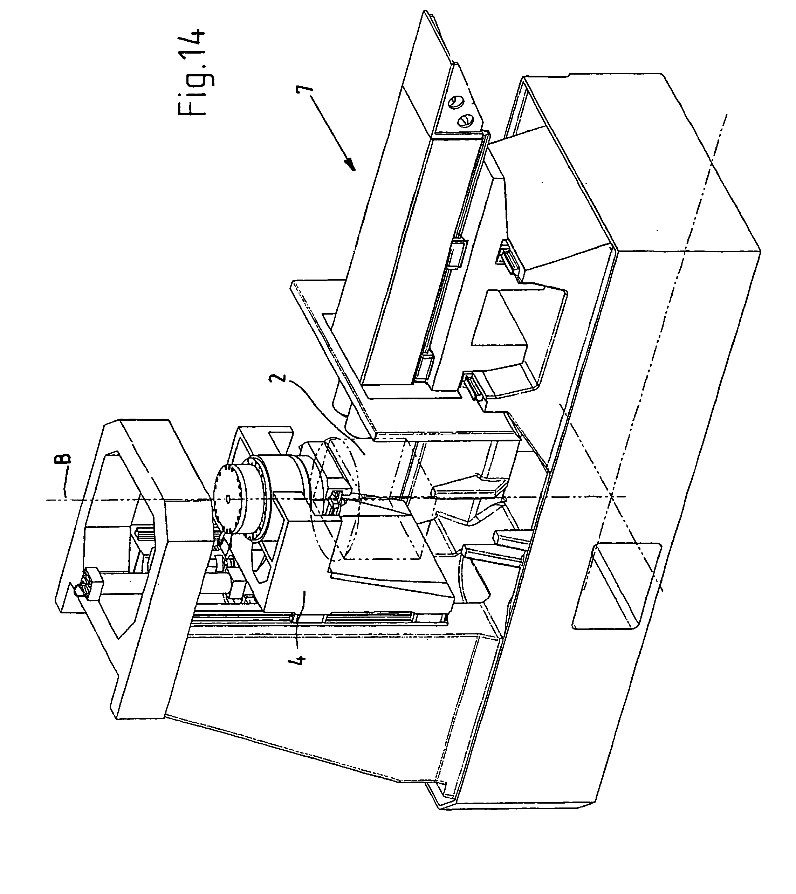

In Fig. 14 ist eine weitere, erfindungsgemäße Variante gezeigt. Das Werkstück 2 wird an dem Werkstückschlitten 4 hängend aufgenommen. Das Werkstück 2 ist dabei um die vertikal orientierte Drehachse B drehbar. Eine solche Anordnung erlaubt zum Beispiel eine trockene Bearbeitung, da die Späne frei nach unten abfallen können.

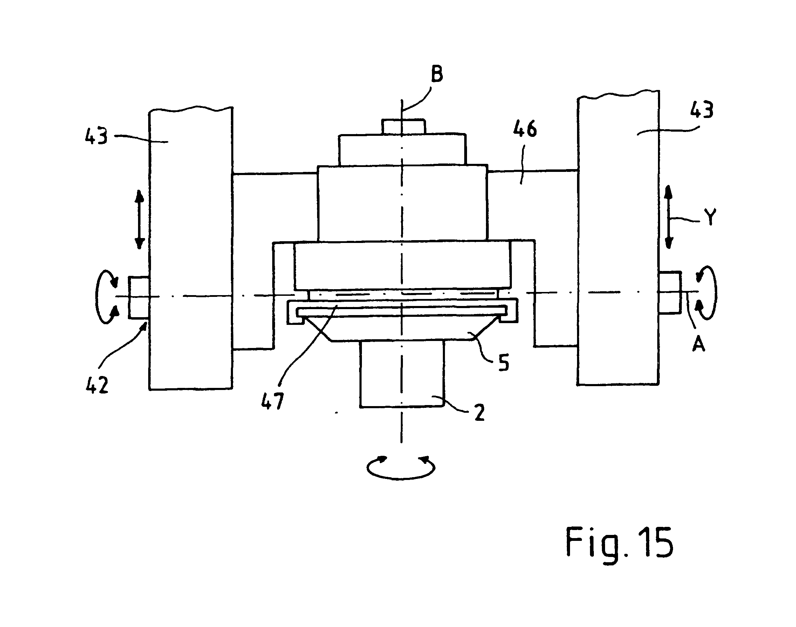

In Fig. 15 ist angedeutet, wie bei einer hängenden Bearbeitung des Werkstückes 2 sowohl die Drehachse A wie auch die Drehachse B realisierbar ist. Der Werkzeugschlitten 4 ist hier in einem Detail gezeigt, wobei die beiden seitlichen Wangen 43 das Schwenklager 42 für die Drehachse A aufnehmen. Zwischen den beiden Wangen 43 befindet sich der Träger 46, der bezüglich der Wangen 43 natürlich verdrehbar ist. Dieser Träger 46 trägt ein Karussel 47, das eine Rotation des Werkstückes 2 um die Rotationsachse B zuläßt. Dabei ist zu beachten, daß natürlich auch die Rotationsachse B um die Drehachse A rotiert, wenn der Träger 46 entsprechend verschwenkt wird. Dabei ist vorgesehen, daß an dem Werkstückschlitten 4 zwei seitliche Wangen 43 vorgesehen sind, welche drehbar den Träger 46 tragen und der Träger das Werkstück 2 oder den Werkstückträger 5 hält. Es ist dabei vorgesehen, daß das Werkstück 2 mittelbar oder unmittelbar mit dem Träger 46 verbunden ist. In dem hier dargestellten Ausführungsbeispiel ist das Werkstück 2 über den Werkstückträger 5 auf dem Karusell 47 aufgespannt und so mittelbar an dem Träger 46 gehalten.

Die Ausgestaltung mit Hilfe eines Karusells 47 erlaubt es, das Werkstück zusätzlich neben der A-Achse auch um eine B-Achse rotieren zu lassen.

Die X- und Z-Achsen werden dabei von dem Antrieb der Spindel abgeleitet, wodurch eine Fünfachsbearbeitung möglich ist.

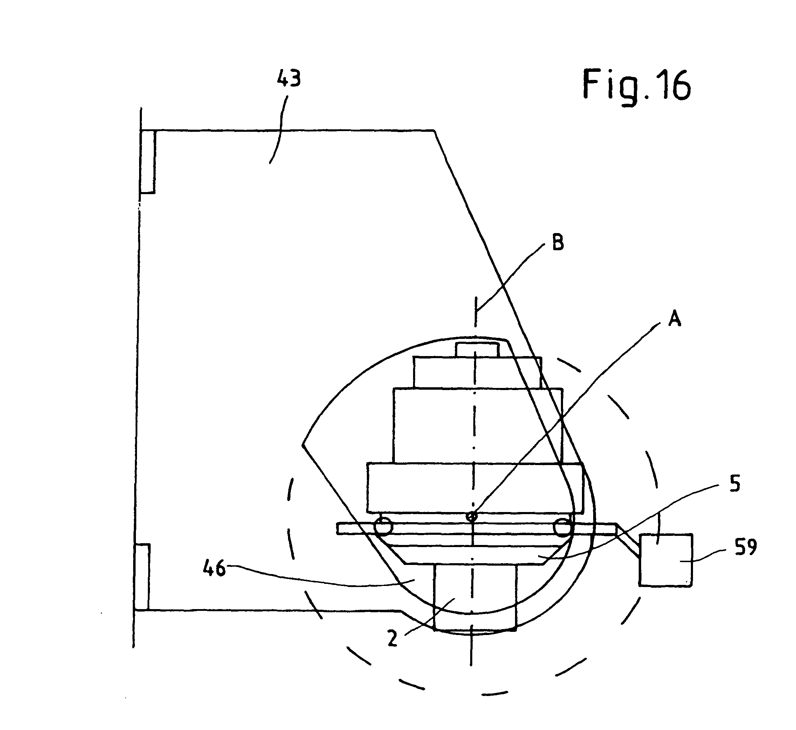

In Fig. 16 ist eine Seitenansicht nach Fig. 15 gezeigt. Der Träger 46 ist dabei um die Drehachse A (hier als Punkt aufgrund der Ansicht) drehbar und beschreibt den gestrichelten Bewegungskreis.

An dem Werkstückträger 5 ist ein Mitnehmer 59 für den Transfer vorgesehen. Die Transfereinrichtung, die die verschiedenen Bearbeitungsstationen miteinander verbindet, ergreift den Mitnehmer, um den losgelassenen Werkstückträger 5 weiterzutransportierten. Dies funktioniert selbstverständlich auch bei einer hängenden oder stehenden Anordnung des Werkstückes 2 oder jeder anderen, beliebigen Anordnung des Werkstückes 2 bezüglich des Werkstückträgers 5.

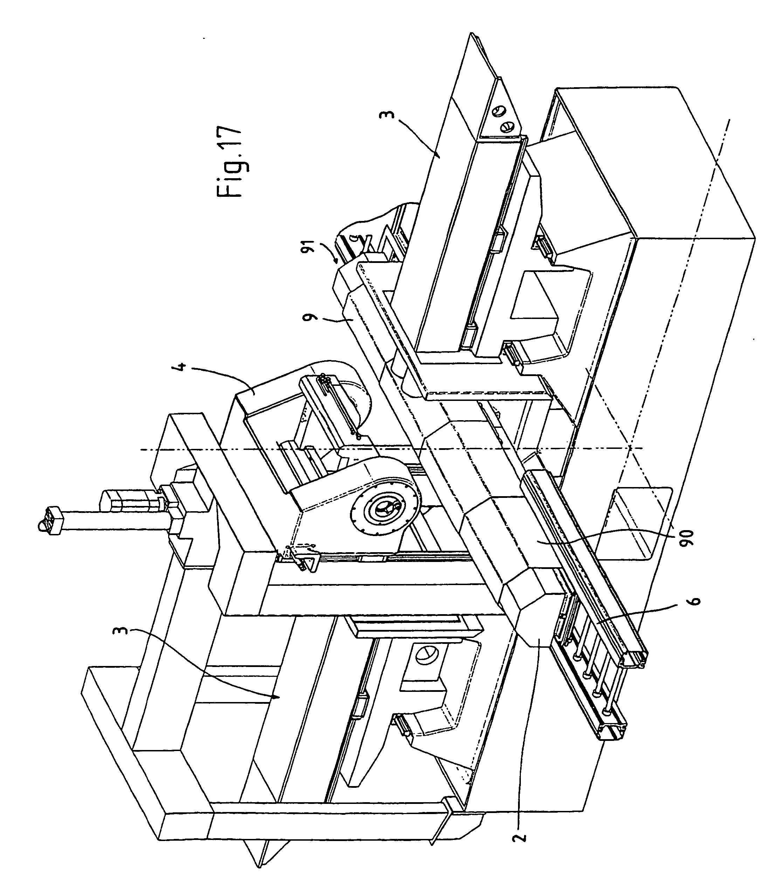

In Fig. 17 ist eine weitere Variante der Erfindung gezeigt. Zur Erhöhung der Zerspanleistungen ist eine Bearbeitungseinheit 3 auf beiden Seiten der Transportbahn 6 angeordnet. In diesem Fall besitzt die Bearbeitungsstation mehrere Bearbeitungseinheiten. Die Bearbeitungseinheiten 3 besitzen ihrerseits gegebenenfalls mehrere Werkzeugspindeln 7. Zur Erhöhung der Übersichtlichkeit ist in diesem Ausführungsbeispiel ein Werkstück 2 gezeigt. In dem Bearbeitungsfall befindet sich das Werkstück 2 zwischen den beiden Bearbeitungseinheiten der Bearbeitungsstation und es ist so eine vorder- und rückseitige Bearbeitung möglich. Auf die parallele Anordnung der jeweiligen Spindelachsen kommt es dabei nicht an. Wichtig im Sinne der Erfindung ist es, daß prinzipiell von zwei- oder auch mehreren Seiten Bearbeitungseinheiten vorgesehen sind, die das Werkstück bearbeiten.

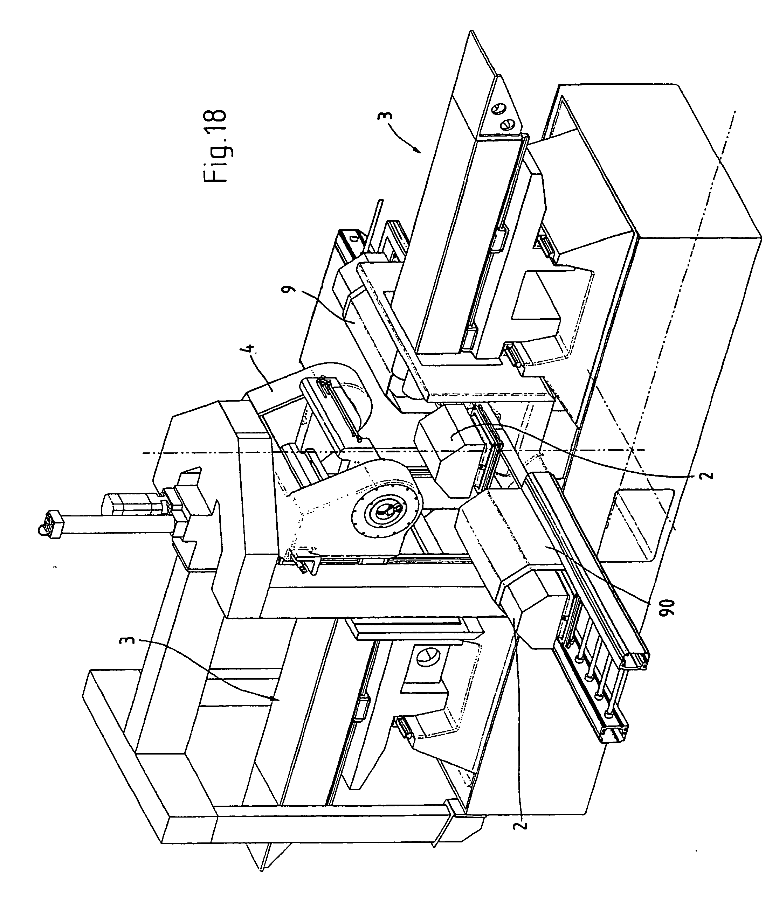

Des weiteren zeigt Fig. 17 und 18, wie ebenfalls erfindungsgemäß in einer Variante vorgeschlagen, den Spanschutz 9. Es ist empfehlenswert, den Spanschutz 9 dann zu aktivieren, wenn während der Bearbeitung in der Bearbeitungsstation weitere Werkstücke 2 durch die Bearbeitungseinheit durchgefördert werden sollen, um zu einer weiteren in Fließrichtung weiter hinten liegenden Bearbeitungsstation zu gelangen. Der hier dargestellte Spanschutz 9 besteht aus mehreren Abdeckungen 90, die tunnelartig ausgebildet sind und in X-Richtung oder gegebenenfalls auf der Transportbahn 6 geführt beweglich sind. In Fig. 17 ist der Spanschutz geschlossen dargestellt, es bildet sich so unterhalb des Werkstückschlittens 4 ein Transporttunnel 91 aus, der sicherstellt, daß keine Späne auf die durchtransportierten Werkstücke fallen.

In Fig. 18 ist der geöffnete Spanschutz 9 gezeigt. Die Abdeckung 90 ist derart zurückgezogen, daß das in der Übergabestelle liegende Werkstück 2 derart frei ist, daß der Werkstückschlitten 4 dieses aufnehmen kann.

Natürlich weist der Werkstückschlitten eine ausreichende Bewegung in vertikaler Richtung auf, um kollisionsfrei einen Durchtransport weiterer Werkstücke 2 zu erlauben. In Fig. 17, 18 sind jeweils hängende Vorrichtungen zur Aufnahme des Werkstückes vorgesehen. Hierauf ist die Erfindung nicht beschränkt, in gleicher Weise ist es möglich, eine stehende (tischartige) Aufnahme des Werkstückes durch den Werkstückschlitten 4 vorzusehen.

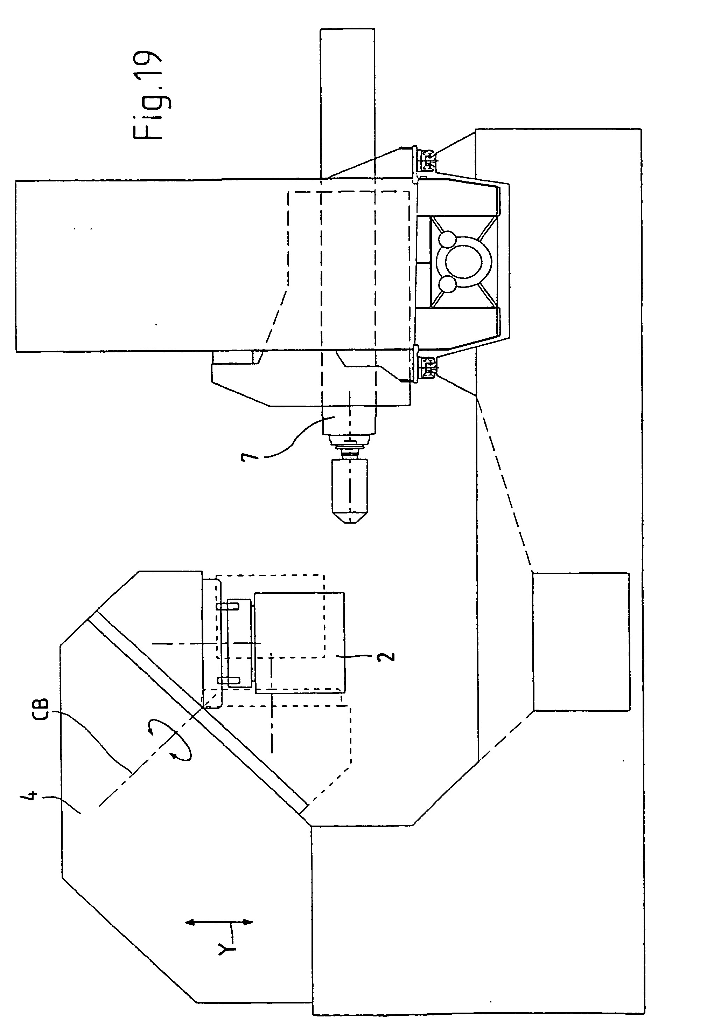

In Fig. 19 ist eine weitere Variante der Erfindung gezeigt. Im Gegensatz zu den entweder horizontal oder vertikal ausgerichteten Rotationsachen A, B oder C zeigt diese Variante eine schräg angeordnete Rotationsachse CB. Diese ist dabei in dem durch die C- und B-Achse aufgespannten Quadranten als Winkelhalbierende (45° geneigt gegenüber der vertikalen) ausgerichtet. Eine solche Ausgestaltung kann bei verschiedenen Bearbeitungsschritten von Vorteil sein. In diesem Fall ist das Werkstück 2 hängend an dem Werkstückschlitten 4 montiert. Es ist aber auch möglich, eine stehende Ausgestaltung zu realisieren. Der gesamte Werkstückschlitten 4 (einschließlich der Rotationsachse CB) ist wiederum in vertikaler Richtung Y verschiebbar.

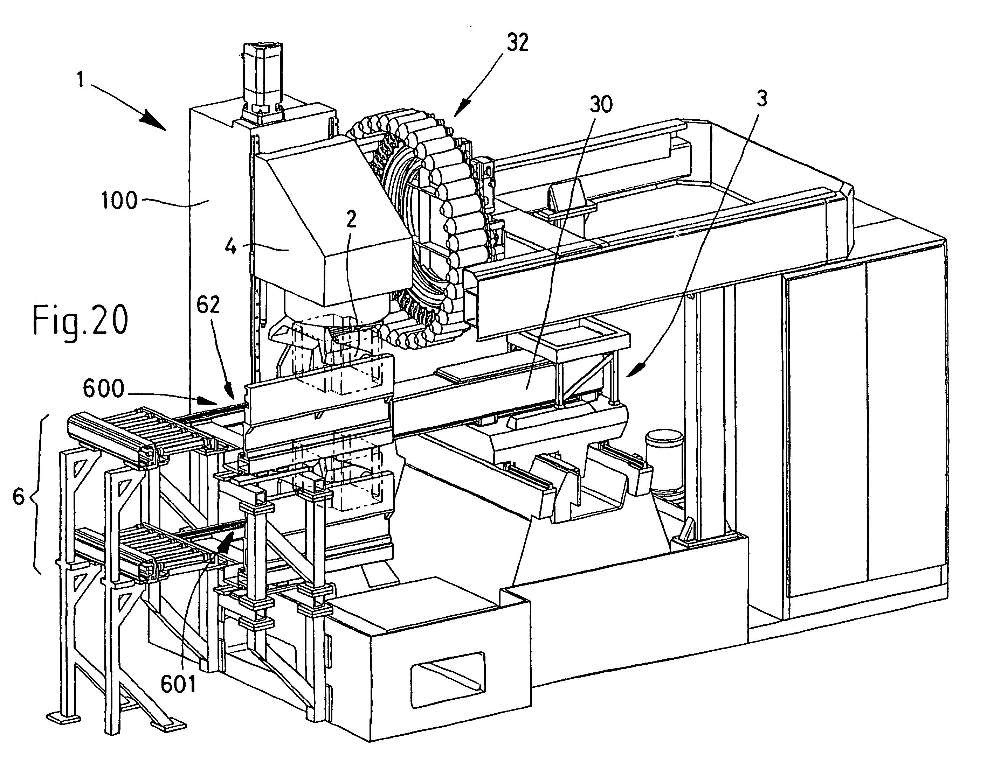

In Fig. 20 ist eine weitere erfindungsgemäße Bearbeitungsstation 1 gezeigt. Bei diesem Ausführungsbeispiel wird ein Turm 100 vorgeschlagen, welcher einen Werkstückschlitten 4 trägt. In diesem hier gezeigten Ausführungsbeispiel wird das Werkstück 2 hängend an dem Werkstückschlitten 4 gehalten. Dies ist zum Beispiel für Trockenbearbeitungen von Vorteil.

Die Transportbahn 6 ist in diesem Ausführungsbeispiel durch zwei übereinander angeordnete Rollbänder ausgeführt. Eine solche Ausgestaltung ist insbesondere bei Bearbeitungsanlagen, die ein paralleles Konzept verwenden, von Vorteil. Es wird dabei ein erster Teil der Transportbahn, zum Beispiel die untere Rollenbahn, als Zulieferbahn für die Rohteile und in diesem Ausführungsbeispiel die obere Bahn als Abförderbahn für die bearbeitenden Werkstücke eingesetzt.

Zum Beispiel wird über die Antransportbahn 601, die in dem hier gezeigten Beispiel unten liegt, ein Werkstück in die Bearbeitungsstation 1 hereintransportiert und darin in bereits beschriebenere Weise von dem Werkstückschlitten 4 an der Übergabestelle aufgenommen und zur beziehungsweise während der Bearbeitung bewegt. Nach Abschluß der Bearbeitung wird das Werkstück 2 nicht wieder auf die Antransportbahn 601 abgesetzt, sondern zu einer Abtransportbahn 600 transportiert. In diesem Ausführungsbeispiel wird auch gleichzeitig gezeigt, daß es gegebenenfalls zwei räumlich getrennte Übergabestellen für das Werkstück geben kann.

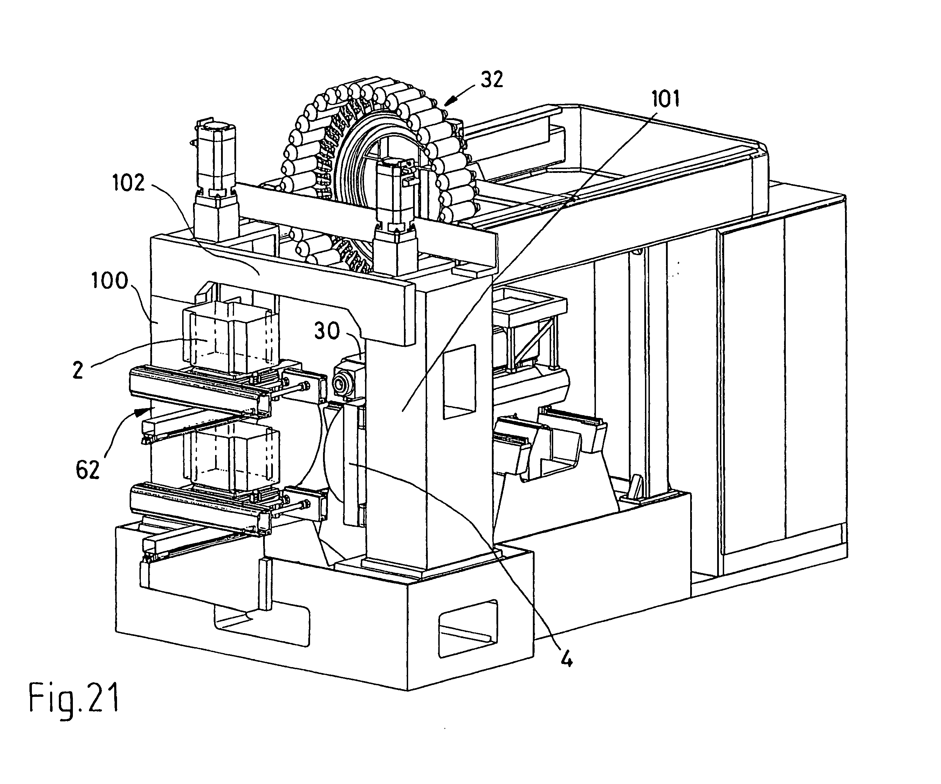

Das Konzept der Führung des Werkstückschlittens 4 an einem Turm 100 wird in Fig. 21 noch weiter verfeinert. In dem hier gezeigten Beispiel sind zwei Türme 100, 101 vorgesehen. Sie sind links und rechts neben dem Transportmittel 62 angeordnet, wobei das Transportmittel 62 einen Teil des Transportweges des Werkstückes 2 insbesondere des Transportweges in und aus der Bearbeitungsstation 1 beschreibt. In dem hier gezeigten Beispiel führt das Transportmittel 62 eine Bewegung parallel zur Spindelachse 31 der Bearbeitungsspindel 30 aus.

In Fig. 21 ist gezeigt, daß die beiden Türme 100, 101 durch eine Verbindung 102 verbunden sind. Es ergibt sich somit eine Öffnung, in welche das Werkstück 2 vor der Bearbeitung hinein und nach der Bearbeitung heraustransportiert wird. Günstigerweise kommt dabei das Werkstück 2 zwischen den beiden Türmen 100 und 101 in Position und wird dort durch ein oder zwei Werkstückschlitten 4 aufgenommen. Hierbei befindet sich an jedem Turm 100, 101 je ein Werkstückschlitten.

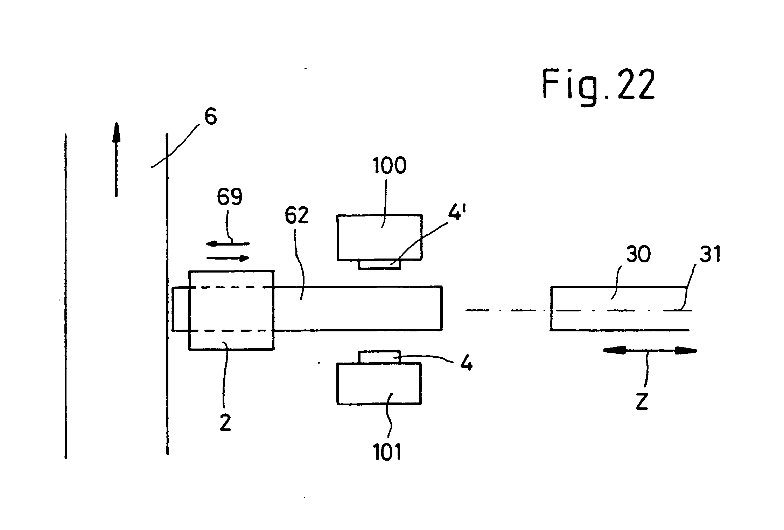

Dies wird insbesondere in der schematischen Ansicht nach Fig. 22 deutlich. Die in Fig. 21 verhältnismäßig detaillierte Ansicht ist in Fig. 22 in Draufsicht nur sehr schematisch dargestellt. Das Werkstück 2 wird entweder direkt oder mittelbar über einen Werkstückträger 5 (Palette) zwischen den beiden Türmen 100, 101 positioniert und dann jeweils von den beiden werkstückschlitten 4, 4' erfaßt. Die Werkzeugspindel 30 ist entlang der Z- und X-Achse beweglich, die Y-Achse wird von der Werkstückschlittenführung an den Türmen 100, 101 geleistet.

In Fig. 22 wird dabei gegebenenfalls das fertig bearbeitete Werkstück über den gleichen Transportweg zu der Transportbahn 6 zurückgefördert, wie es eingefördert worden ist. Dies kann zum Beispiel bei einer seriellen Bearbeitung einzusetzen sein.

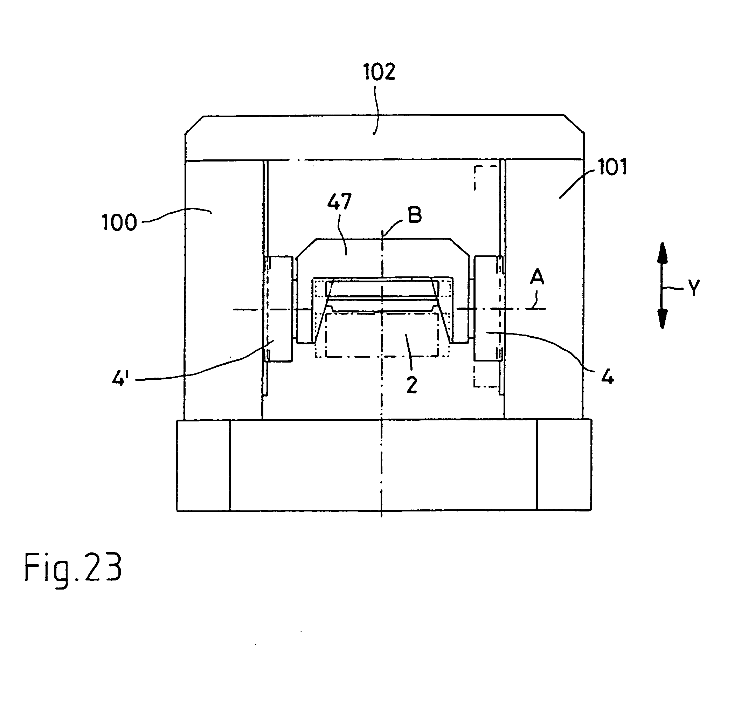

Fig. 23 zeigt ein Werkstück 2, welches hängend aufgenommen wurde. Hierzu sind die beiden Werkstückschlitten 4, 4', welche an den Türmen 101, 100 in Y-Richtung vertikal verfahrbar sind, durch ein brückenartiges Karussel 47 verbunden. Dieses Karussel 47 erlaubt eine Drehung des Werkstückes 2 um eine in dieser Ansicht vertikal orientierte Drehachse B. In diesem Fall ist diese Drehachse B auch parallel zur Bewegungsrichtung der Werkstückschlitten 4, 4'.

Zusätzlich ist vorgesehen, daß das Werkstück 2 auch um eine Drehachse A dehbar ist, wobei die Drehachse A rechtwinklig zur Drehachse B orientiert ist. Die Drehachse steht in diesem Fall auch rechtwinklig zur Bewegungsrichtung der Werkstückschlitten 4 (Y).

Da prinzipiell ein eigener Antrieb der Türme 100, 101 für die jeweiligen Werkstückschlitten 4, 4' vorgesehen sind, ist deren Synchronisation sowohl bei der translatorischen Vertikalbewegung wie auch bei der Drehbewegung um die Drehachse A von Vorteil. Dadurch werden die Kräfte gleichmäßig verteilt, es ist aber auch möglich, den zweiten Werkzeugschlitten bezüglich seiner translatorischen Bewegung wie auch bezüglich der Drehbewegung von dem anderen Werkstückschlitten mitzuschleppen. Damit sich die für die beiden Werkstückschlitten 4, 4' gemeinsame Drehachse A ausbildet, ist das Karussell 47 schaukel- oder wippenartig an den beiden Werkstückschlitten 4, 4' drehbar gelagert.

In diesem Ausführungsbeispiel ist eine hängende Bearbeitung vorgesehen, es sind aber auch hier wieder alle anderen Orientierungen zueinander einsetzbar.

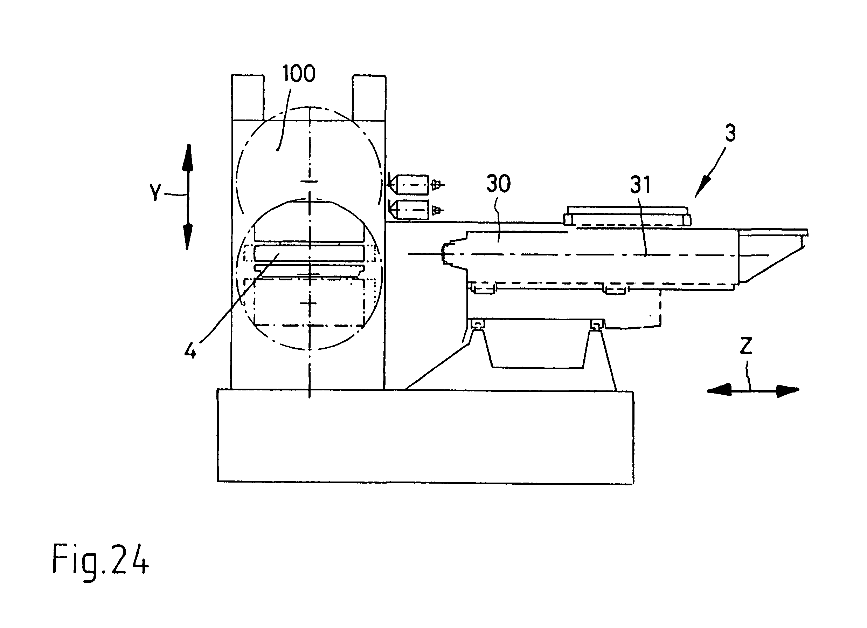

Fig. 24 zeigt eine Seitenansicht insbesondere der Anordnung gemäß Fig. 23.

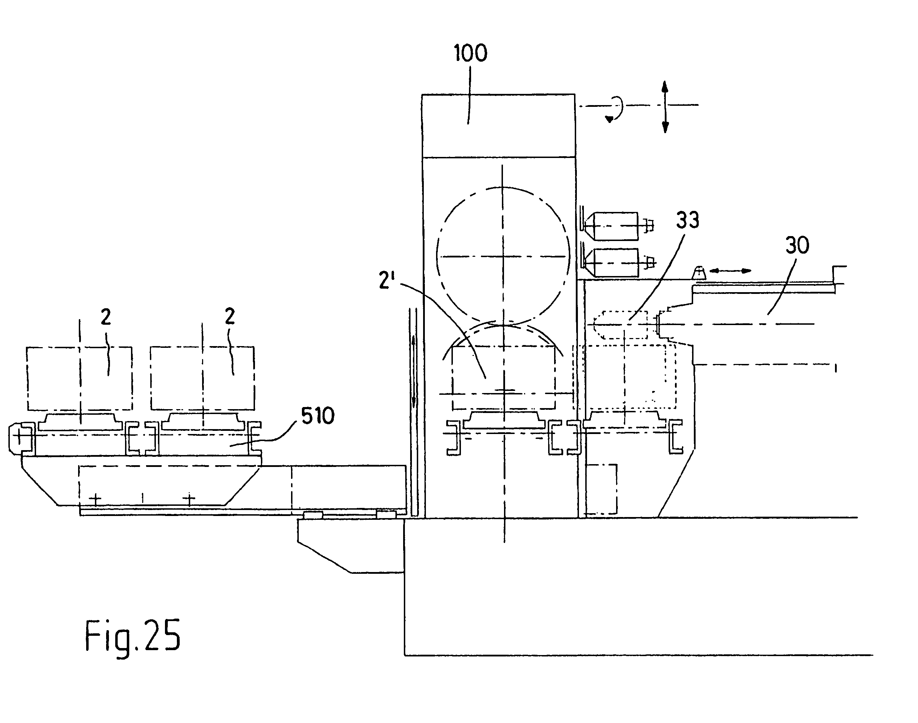

In Fig. 25 ist im Vergleich zu der Ausgestaltung nach Fig. 24 vorgesehen, daß die Werkstücke 2 nicht jeweils einzeln, sondern wie hier dargestellt, zwei Werkstücke auf einer gemeinsamen Beladeeinrichtung 510 zu der Bearbeitungsstation 1 herantransportiert werden. In dem hier gezeigten Beispiel befindet sich gestrichelt in einer weiteren dargestellten Stellung der Werkstückträger 5 bereits zwischen den beiden Türmen 100, 101, wobei das rechte Werkstück 2 unterhalb des Bearbeitungswerkzeuges 33 zu liegen kommt. Dies ist eine Wechselposition der Werkstücke 2. Das hintere Werkstück 2' wird zum Beispiel gerade auf die Beladeeinrichtung 510 abgegeben, da es fertig bearbeitet ist. Das andere Werkstück 2, welches im Moment noch rechts unterhalb des Bearbeitungswerkzeuges 33 liegt, ist schon in nächster Nähe zu den Werkstückschlitten 4, 4' positioniert und kann in kurzer Zeit an diese übergeben werden. Der Werkstückwechsel erfolgt daher sehr rasch. Der Werkstücktransport zur nächsten Bearbeitungsstation erfolgt in diesem Fall auf zwei Bändern, die nebeneinander (in diesem Fall nicht übereinander) angeordnet sind. Die Transportrichtung der Bänder hierzu ist senkrecht zur Blattebene, diese Transportbänder sind hier nicht gezeigt.

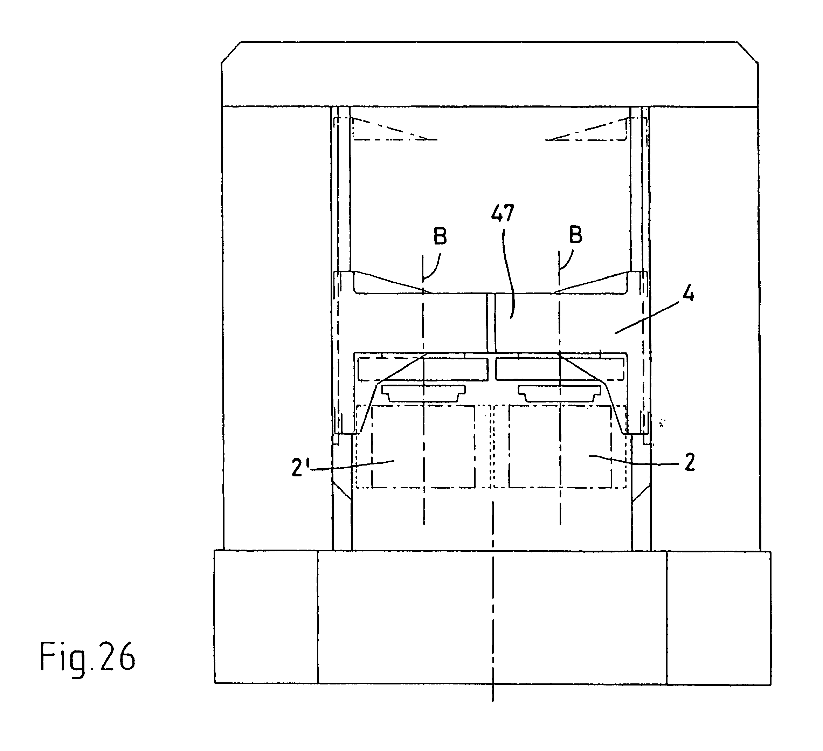

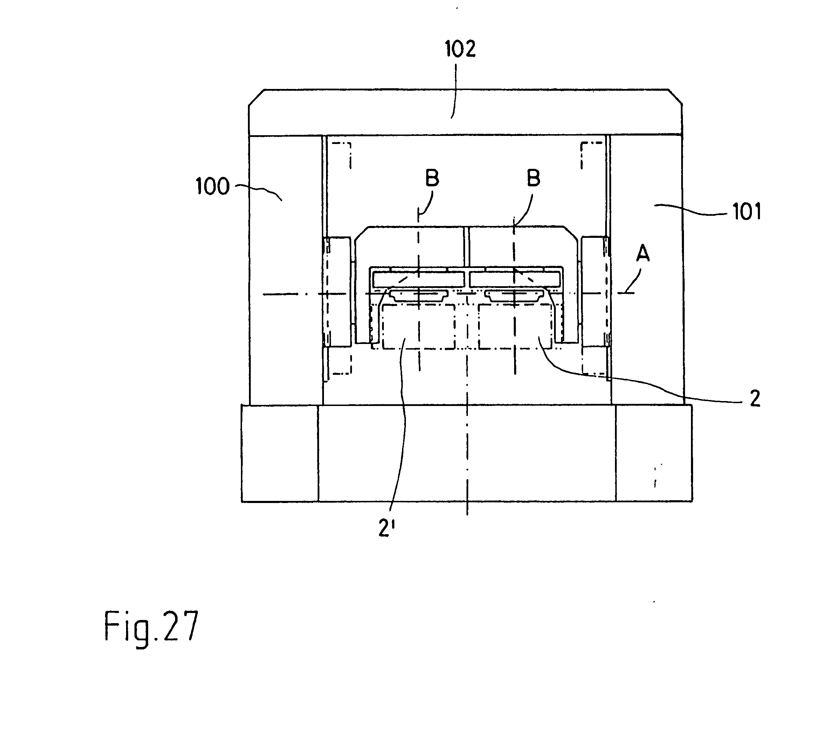

Fig. 26 und Fig. 27 zeigen zwei sehr ähnliche Einsatzbereiche einer weiteren erfindungsgemäßen Variante. An den zwei Türmen 100, 101 sind je autonom verfahrbare aber gegebenenfalls synchronisierbare Werkstückschlitten 4, 4' vorgesehen. Die hier gezeigte Bearbeitungsmaschine besitzt zwei aufgespannte Werkstücke 2, die gleichzeitig zu bearbeiten sind. Die Bearbeitungseinheit, die in diesem Fall zum Beispiel zwei Z-Achsen mit jeweils einer oder sogar zwei Bearbeitungsspindeln aufweist, ist rückseitig verdeckt angeordnet und in der Zeichnung nicht zu sehen. Die doppelte oder vierfache Spindelanzahl erhöht aber entsprechend die Zerspanleistung.

Die erfindungsgemäße Variante nach Fig. 26 besitzt nur eine vertikal orientierte Drehachse B. Der Werkstückschlitten 4 besitzt ein entsprechendes Drehkarussel. In Fig. 26 ist es auch prinzipiell möglich, daß die Bewegung des linken und des rechten Werkstückschlittens an den jeweiligen Türmen unabhängig voneinander erfolgen kann.

Hiergegen zeigt Fig. 27 noch zusätzlich die Möglichkeit einer Rotation um die horizontal orientierte Drehachse A. Diese mag für den linken und den rechten Werkstückschlitten gemeinsam sein, das heißt, eine Rotation ist für die Werkstücke 2, 2' nur gemeinsam möglich und auch hier ist es wiederum möglich, daß diese unabhängig voneinander rotieren. In diesem Fall besitzen die Werkstückschlitten 4, 4' keine feste Verbindung miteinander, damit diese unabhängig voneinander zu verfahren vermögen.

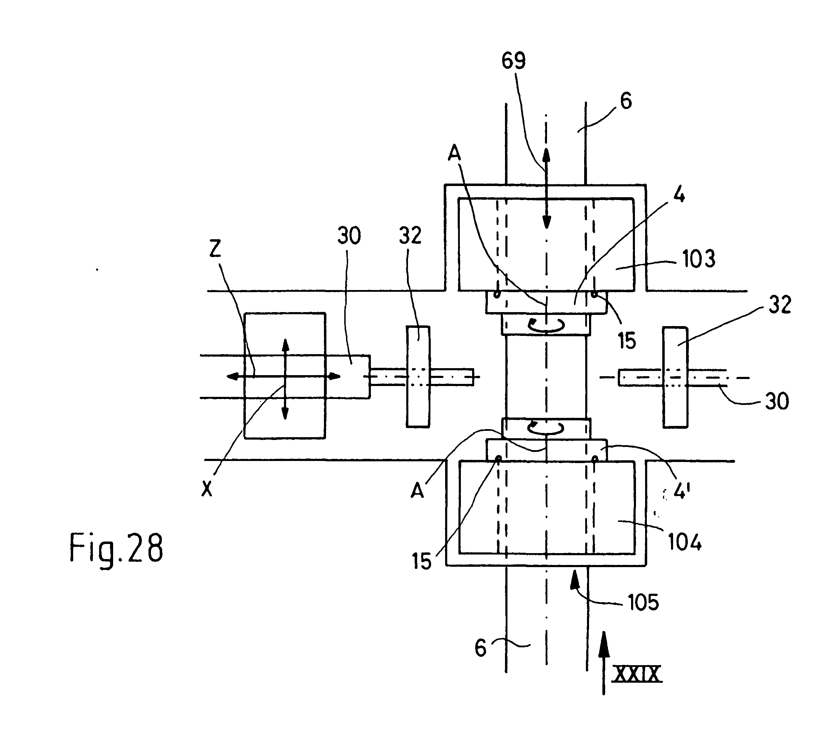

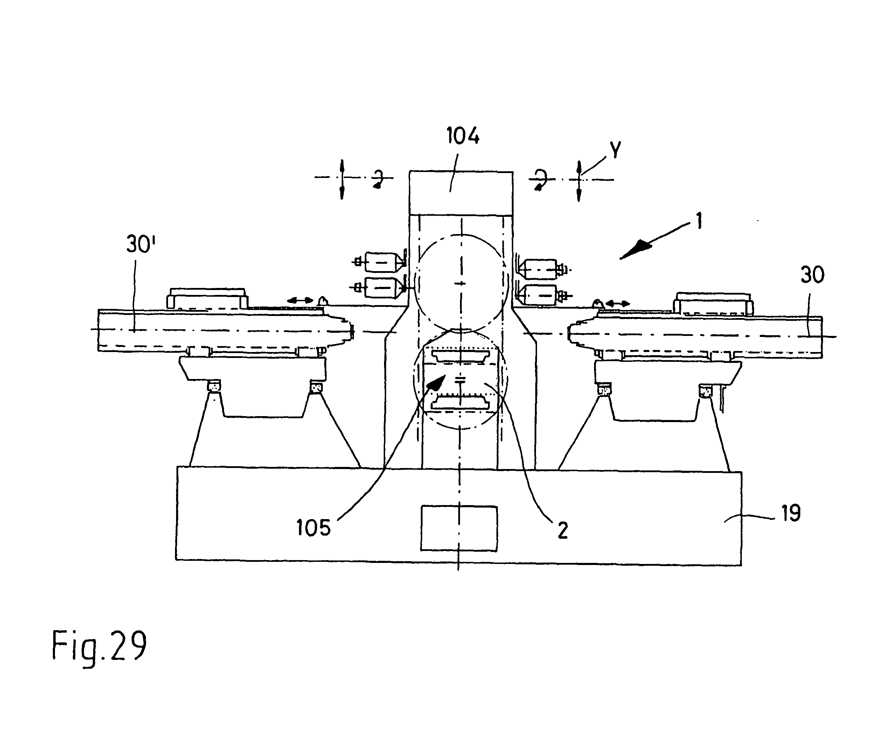

Fig. 28 und Fig. 29 zeigen eine weitere, erfindungsgemäße Variante. Im Vergleich zu Fig. 22, wo die Transportrichtung 69 parallel zur Spindelachse ist, ist in Fig. 28 die Transportrichtung der Werkstücke 2 zu den Spindelachsen 30 rechtwinklig. Dadurch ist es möglich, daß eine zweiseitige Bearbeitung des Werkstückes erfolgt, das heißt, das Werkstück befindet sich zwischen den beiden Bearbeitungsspindeln 30. Entlang des Transportweges befinden sich in dieser Variante hintereinander zwei Türme 103, 104. Die Türme sind zum Beispiel identisch ausgebildet, insbesondere weisen beide eine Öffnung 105 auf, durch die insbesondere die Werkstücke 2 auf dem Transportweg transportabel sind. Die Türme 103, 104 stützen sich wiederum beidseits der Transportbahn 6 ab. Die Übergabestelle 60 befindet sich zwischen den beiden Türmen 103 und 104. Gegebenenfalls sind auch diese beiden Türme durch eine Verbindung (nicht gezeigt) verbunden. Der Vorteil dieser Ausgestaltung liegt darin, daß die Werkstücke 2 unidirektional weitertransportiert werden können. Gleichzeitig ist es möglich, daß die Werkstücke zweiseitig bearbeitbar sind. An den Türmen 103, 104 sind natürlich auch Führungen 15 vorgesehen, die zur Führung der Werkstückschlitten 4, 4' dienen. Die Werkstücke werden unmittelbar oder mittelbar über Werkstückträger von den beiden Werkstückschlitten 4, 4' gemeinsam oder gegebenenfalls auch einzeln aufgenommen, positioniert und gegebenenfalls auch während der Bearbeitung bewegt. Auch hier ist es wieder möglich, eine Verdrehung um eine Drehachse A und/oder gegebenenfalls um eine Drehachse B zu realisieren.

In Fig. 29 ist gezeigt, daß diese erfindungsgemäße Variante in einem gemeinsamen Bett 19 in einfacher Weise, gegebenenfalls auch modulhaft oder modulweise realisierbar ist.

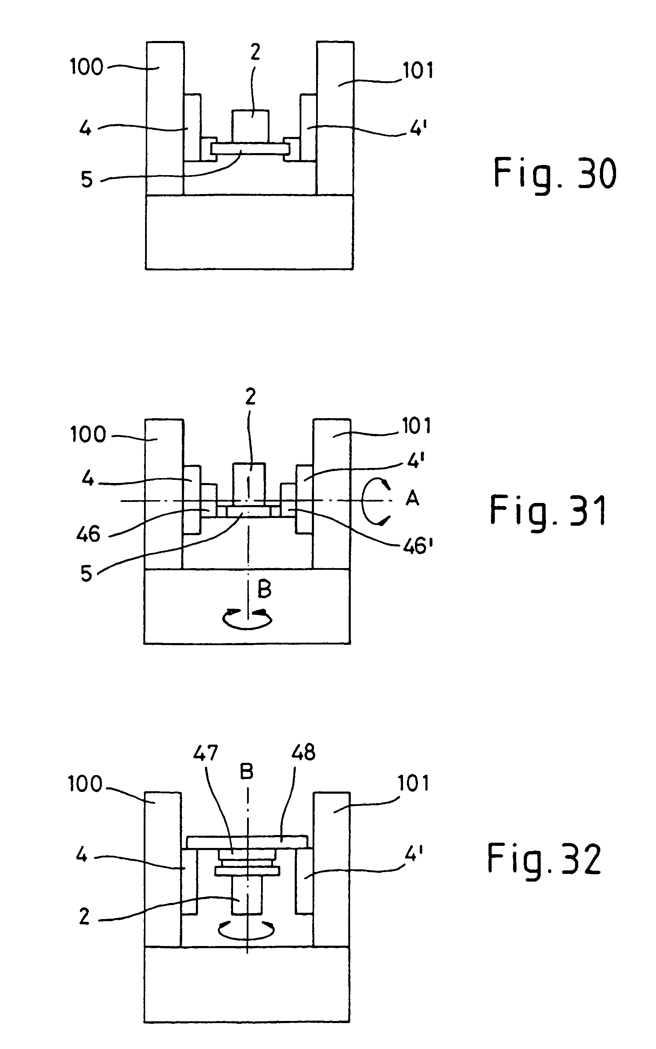

In den Figuren 30 bis 32 sind verschiedene weitere Varianten der Erfindung gezeigt. Auch hier wird das Werkstück 2 von einem Werkstückträger 5 gehalten, wobei der Werkstückträger 5 jeweils seitlich von den beiden Werkstückschlitten 4, 4' gespannt und gehalten wird. Die Bewegung der Werkstückschlitten 4, 4' entlang der Türme 100, 101 ist synchron. Diese Variante besitzt keine Rotationsachse für das Werkstück.

In Fig. 31 wird zusätzlich eine Rotationsachse A angeboten. Diese ist horizontal orientiert. Die Werkstückschlitten 4, 4' besitzen hierzu Träger 46, die eine Verdrehung bezüglich des Werkstückschlittens 4, 4' erlauben. Günstigerweise wirkt eine horizontale Rotationsachse A gleichzeitig auf mehrere auf dem Werkzeugschlitten befindliche Werkstücke.

In Fig. 32 ist eine weitere erfindungsgemäße Variante gezeigt, bei welcher das Werkstück 2 in diesem Fall an dem Werkstückträger 5 nach unten hängend angeordnet ist. In diesem Fall dient nicht der Werkstückträger 5 als Verbindung zwischen den beiden Werkstückschlitten 4, 4', sondern eine eigens hierfür angeordnete Brücke 48. Auf dieser Brücke 48 befindet sich das Karussell 47 und erlaubt so eine Rotation um eine vertikale B-Achse. Es können auch mehrere B-Achsen für eine große Anzahl von Werkstücken vorgesehen sein.

Natürlich ist es möglich, eine Anordnung zu finden, bei welcher mehrere Werkstückschlitten 4 an Türmen 100 geführt sind, und sowohl eine Rotation um eine horizontale Achse A wie auch um eine vertikale Achse B erlauben.

Die Anordnung der Schlitten 4, 4' nach Fig. 32 zusammen mit der verbindenden Brücke 48 kann auch in einem Bauteil zusammengefaßt sein. Prinzipiell ist es möglich, dies gilt für alle Ausführungsbeispiele der Beschreibung, das Werkstück 2 auch ohne Einsatz eines Werkstückträgers 5 auf den Werkstückschlitten (einem oder mehreren) aufzuspannen.

Die in Fig. 30 bis Fig. 32 gezeigten Varianten sind analog auch auf die Ausführungsbeispiele mit nur einem Werkstückschlitten einsetzbar.

Es wurde in dieser Beschreibung oftmals davon ausgegangen, daß die Bearbeitungseinheit 3 eigentlich nur als spanabhebende Bearbeitungseinheit auszubilden ist. Hierauf ist die Erfindung aber nicht beschränkt, es können natürlich jegliche andere Bearbeitungen an dem Werkstück im Sinne der Erfindung durchgeführt werden. Die erfindungsgemäße Anordnung ist insofern unabhängig von dem eingesetzten Bearbeitungsverfahren. Dies können zum Beispiel auch Bearbeitungslaser oder dergleichen sein. Auch der Zweck der Bearbeitungsstation beschränkt in keinster Weise die Erfindung.

Des Weiteren ist die Erfindung auch dazu geeignet, sowohl für einen parallelen Bearbeitungsprozeß wie auch für einen seriellen Bearbeitungsprozeß einsetzbar zu sein.

Ein paralleler Bearbeitungsprozeß sieht vor, daß entlang einer Bearbeitungsanlage mehrere Bearbeitungsstationen vorgesehen sind, die die gleichen Bearbeitungen vornehmen. Das bedeutet, daß ein Werkstück nicht zwingend alle Bearbeitungsstationen dieser Bearbeitungsanlage durchlaufen muß. Ein paralleles Konzept ist zum Beispiel dann von Vorteil, wenn langandauernde Bearbeitungsschritte erfolgen müssen, wobei zu beachten ist, daß die langsamste Bearbeitungsstation die Gesamtgeschwindigkeit der gesamten Anlage bestimmt. Auch kann eine Redundanz von Bearbeitungsstationen günstig für Wartungen oder Ausfälle sein. Üblicherweise besitzt ein paralleler Bearbeitungsprozeß zwei Transportbänder, nämlich ein erstes für die Rohteile und ein zweites Band für die bearbeitenden Teile, es gibt alber auch Konzepte (zum Beispiel Fig. 18), wo ein paralleles Konzept mit einem Transportband realisiert werden kann, welches dann zum Beispiel durch die Bearbeitungsstation führt.

Hingegen ist bei einem seriellen Bearbeitungsprozeß vorgesehen, daß ein Werkstück alle Bearbeitungsstationen entlang einer Bearbeitungsanlage durchläuft, um dabei alle notwendigen Bearbeitungsschritte zu erfahren. Typischerweise kann bei einem solchen seriellen Bearbeitungsprozeß ein Transportband für den Transport der Werkstücke ausreichen, da nicht die Gefahr besteht, Rohteile und bearbeitete Teile zu mischen.

Ein wesentlicher Vorteil der Erfindung liegt insbesondere darin, daß die erfindungsgemäße Bearbeitungsstation sowohl für einen parallelen Bearbeitungsprozeß wie auch für einen seriellen Bearbeitungsprozeß einsetzbar ist.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik, beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Bearbeitungsstation, wobei für das Bearbeiten von mindestens einem Werkstück (2) mindestens eine Bearbeitungseinheit (3), insbesondere eine ein Werkzeug tragende Werkzeugspindel (30) vorgesehen ist und das Werkstück (2) an eine Übergabestelle (60) herantransportierbar ist und an dieser von zumindest einem Werkstückschlitten (4) auf nehmbar ist, wobei der Werkstückschlitten (4) das Werkstück (2) für eine Bearbeitung an die Bearbeitungseinheit (3) heranfahren, kann, **dadurch gekenntzeichnet, daß** der werkstückschlitten (4) das Werkstück (2) während der Bearbeitung vertikal durch die Bearbeitungseinheit (3) bewegen, kann wobei das Werkstück durch den Werkstückschlitten (4) entlang nur einer vertikalen Linearachse (Y) bewegbar ist.

2. Bearbeitungsstation nach Anspruch 1, **dadurch gekennzeichnet, daß** die Werkzeugspindel (30) relativ zum Werkstückschlitten (4) entlang zweier zur Bewegungsrichtung des werkstückschlittens (4) entlang der ersten Linearachse jeweils rechtwinklig angeordneten zweiten (X) und dritten (Z) Linearachse bewegbar ist.

3. Bearbeitungsstation nach einem der vorhergehenden Ansprüche, **dadurch gekennzeichnet, daß** sich die Übergabestelle (60) in der Bearbeitungsstation bzw. im Arbeitsraum befindet und/oder eine Aufteilung der Achsen in werkstückschlittenachse und in Bearbeitungsachse vorgesehen ist.

4. Bearbeitungsstation nach einem der vorhergehenden Ansprüche, **dadurch gekennzeichnet, daß** der Werkstückschlitten (4) das Werkstück (2) zumindest um eine Drehachse (A, B, C) zu drehen vermag und/oder der Werkstückschlitten (4) mehrere Werkstücke (2) trägt und/oder der werkstückschlitten (4) in einem Ständer (10) oder Turm (100) geführt ist.

5. Bearbeitungsstation nach einem der vorhergehenden Ansprüche, **dadurch gekennzeichnet, daß** das Werkstück (2) auf einem Werkstückträger (5) aufgespannt ist und/oder das Werkstück (2) stehend, hängend, seitlich oder schräg auf dem Werkstückträger (5) aufgespannt ist.

6. Bearbeitungsstation nach einem der vorhergehenden Ansprüche, **dadurch gekennzeichnet, daß** der Werkstückschlitten (4) das Werkstück (2) beziehungsweise den das Werkstück (2) tragenden Werkstückträger (5) von oben, schräg von der Seite und/oder von unten ergreift und hält.

7. Bearbeitungsstation nach einem der vorhergehenden Ansprüche, **dadurch gekennzeichnet, daß** der Werkstückschlitten (4) rahmenartig oder wippenartig ausgebildet ist und/oder der Werkstückschlitten (4) tischartig ausgebildet ist und das Werkstück (2) auf dem Werkstücktisch (45) des Werkstückschlittens (4) aufliegt.

8. Bearbeitungsstation nach einem der vorhergehenden Ansprüche, **dadurch gekennzeichnet, daß** die Drehachse rechtwinklig (A, C), parallel (B) oder winklig (CB) zur vertikalen Bewegungsrichtung (Y) des Werkstückschlittens (4) ist und/oder der Werkzeugschlitten (4) das Werkstück (2) um zwei oder drei, jeweils aufeinander rechtwinklig stehenden Achsen (A, B, C) zu drehen vermag.

9. Bearbeitungssation nach einem der vorhergehenden Ansprüche, **dadurch gekennzeichnet, daß** an dem Werkstückschlitten (4) ein Schwenklager (42) insbesondere um die Drehachse (A) bzw. um eine horizontale Achse vorgesehen ist.

10. Bearbeitungsstation nach einem der vorhergehenden Ansprüche, **dadurch gekennzeichnet, daß** mehrere auf dem werkstückschlitten (4) befindliche Werkstücke (2) um eine gemeinsame horizontale Drehachse (A) drehbar sind.

11. Bearbeitungsstation nach einem der vorhergehenden Ansprüche, **dadurch gekennzeichnet, daß** an dem werkstückschlitten (4) mindestens eine, bevorzugt zwei seitliche Wangen (43) vorgesehen sind, welche drehbar einen Träger (46) tragen und der Träger (46) das Werkstück (2) oder den werkstückträger (5) hält.

12. Bearbeitungsstation nach einem der vorhergehenden Ansprüche, **dadurch gekennzeichnet, daß** das Werkstück (2) oder der Werkstückträger (5) von einem Karussell (47) gehalten ist, welches am Träger (46) drehbar gelagert ist.

13. Bearbeitungsstation nach einem der vorhergehenden Ansprüche, **dadurch gekennzeichnet, daß** die seitlichen Wangen (43) das Schwenklager (42) aufnehmen.

14. Bearbeitungsstation nach einem der vorhergehenden Ansprüche, **dadurch gekennzeichnet, daß** das Karussell (47) bevorzugt um die B-Achse, insbesondere um eine vertikale Achse, verdrehbar ist.

15. Bearbeitungsstation nach einem der vorhergehenden Ansprüche, **dadurch gekennzeichnet, daß** für jedes von dem Werkstückschlitten (4) getragenes Werkstück (2) eine eigene, insbesondere durch jeweils eigene Karusselle gebildete, bevorzugt vertikal orientierte Drehachse (B) vorgesehen ist.

16. Bearbeitungsstation nach einem der vorhergehenden Ansprüche, **dadurch gekennzeichnet, daß** der Werkstückschlitten (4) in einem Rahmen (11) geführt ist und/oder der Werkstückschlitten (4) so geführt ist, daß eine zweiseitige Bearbeitung, insbesondere von beiden Seiten, bezüglich der Transportbahn (6) erfolgt.

17. Bearbeitungsstation nach einem der vorhergehenden Ansprüche, **dadurch gekennzeichnet, daß** der Ständer (10) für die Führung des Werkstückschlittens (4) im Bereich der Übergabestelle (60) auf der der Bearbeitungseinheit (3) gegenüberliegenden Seite angeordnet ist.

18. Bearbeitungsstation nach einem der vorhergehenden Ansprüche, **dadurch gekennzeichnet, daß** sich der Rahmen (11) im Bereich der Übergabestelle (60) auf beiden Seiten der Übergabestelle (60) erstreckt beziehungsweise abstützt.

19. Bearbeitungsstation nach einem der vorhergehenden Ansprüche, **dadurch gekennzeichnet, daß** die vertikal orientierten Ständer- beziehungsweise Rahmenteile (12) Führungsschienen (15) aufweisen, auf welche sich je mindestens ein, bevorzugt zwei Führungsschuhe des Werkstückschlittens (4) bewegen.

20. Bearbeitungsstation nach einem der vorhergehenden Ansprüche, **dadurch gekennzeichnet, daß** das Werkstück (2) entlang einer Transportbahn (6) bewegt wird und die Übergabestelle (60) Teil dieser Transportbahn (6) ist bzw. die Transportbahn (6) an der Übergabestelle (60) anschließt.

21. Bearbeitungsstation nach einem der vorhergehenden Ansprüche, **dadurch gekennzeichnet, daß** an der Bearbeitungsstation eine erste Übergabestelle (66) für das Antransportieren und eine hiervon entfernte zweite Übergabestelle (67) für das Abtransportieren der Werkstücke (2) vorgesehen ist.

22. Bearbeitungsstation nach einem der vorhergehenden Ansprüche, **dadurch gekennzeichnet, daß** die Bearbeitungsstation (3) Transportmittel (62) für die Bewegung des Werkstückes (2) bzw. des Werkstückträgers (5) auf der Transportbahn (6) zumindest im Bereich der Be-arbeitungsstation (1) aufweist.

23. Bearbeitungsstation nach einem der vorhergehenden Ansprüche, **dadurch gekennzeichnet, daß** das Transportmittel (62) ein vor der Bearbeitungsstation auf der Transportbahn (6) wartendes Werkstück (2) bzw. einen Werkstückträger (5) in die Bearbeitungsstation hereintransportiert und/oder das Transportmittel (62) fertig bearbeitete Werkstücke (2) zu der in Flußrichtung hinter der Bearbeitungsstation liegenden Transportbahn transportiert.

24. Bearbeitungsstation nach einem der vorhergehenden Ansprüche, **dadurch gekennzeichnet, daß** die Bearbeitungseinheit (3) im wesentlichen rechtwinklig zur Bewegung des Werkstückschlittens (4) bewegbar und positionierbar ist und/oder die Bearbeitungseinheit (3) eine oder mehrere Werkzeugspindeln (30) trägt und/oder die Bearbeitungsstation mehrere Bearbeitungseinheiten (3) aufweist.

25. Bearbeitungsstation nach einem der vorhergehenden Ansprüche, **dadurch gekennzeichnet, daß** sich das Werkstück (2) während der Bearbeitung zwischen zwei Bearbeitungseinheiten (3) der Bearbeitungsstation befindet.

26. Bearbeitungsstation nach einem der vorhergehenden Ansprüche, **dadurch gekennzeichnet, daß** die Drehachse (A) rechtwinklig zur Spindelachse (31) einerseits und rechtwinklig zur Bewegungsrichtung (Y) des Werkstückschlittens (4) andererseits ist.

27. Bearbeitungsstation nach einem der vorhergehenden Ansprüche, **dadurch gekennzeichnet, daß** der Werkstückschlitten (4) ein Werkzeugmagazin (32) für die Bearbeitungseinheit (3) trägt und der Werkstückschlitten (4) für einen Werkzeugwechsel an der Bearbeitungseinheit (3) entsprechend positionierbar ist.

28. Bearbeitungsstation nach einem der vorhergehenden Ansprüche, **dadurch gekennzeichnet, daß** unabhängig von der Bewegung des Werkstückschlittens auch das Werkzeugmagazin verfahrbar und positionierbar ist.

29. Bearbeitungsstation nach einem der vorhergehenden Ansprüche, **dadurch gekennzeichnet, daß** eine Spannvorrichtung (50) vorgesehen ist, um das Werkstück (2) bzw. den das Werkstück (2) tragenden Werkstückträger (5) mit dem Werkstückschlitten (4) zu verbinden.

30. Bearbeitungsstation nach einem der vorhergehenden Ansprüche, **dadurch gekennzeichnet, daß** die Relativbewegung (Y) des Werkstückschlittens (4) für ein Ergreifen bzw. Lösen des Werkstückes (2) bzw. des Werkstückträgers (5) von dem Werkstückschlitten (4) dient.

31. Bearbeitungsstation nach einem der vorhergehenden Ansprüche, **dadurch gekennzeichnet, daß** eine Spannvorrichtung an dem Werkstückschlitten (4) durch einen heb- und senkbaren Greifer (500) gebildet ist und für das Heben und Senken des Greifers (500) ein Exzenterantrieb (503), welcher mit dem Werkstückschlitten (4) mitfährt, vorgesehen ist.

32. Bearbeitungsstation nach einem der vorhergehenden Ansprüche, **dadurch gekennzeichnet, daß** an dem Schwenklager (42) ein Gewichtsausgleich (8) vorgesehen ist.

33. Bearbeitungsstation nach einem der vorhergehenden Ansprüche, **dadurch gekennzeichnet, daß** der Gewichtsausgleich von einem Arbeitszylinder gebildet ist, der auf eine Kurbel des Trägers (46) wirkt.

34. Bearbeitungsstation nach einem der vorhergehenden Ansprüche, **dadurch gekennzeichnet, daß** die Bearbeitungsstation (1) für die Bewegung des Werkstückes (2) zwei Türme (100, 101) aufweist, jeder Turm einen verfahrbaren Werkstückschlitten trägt und die Werkstückschlitten, gegebenenfalls gemeinsam mindestens ein Werkstück tragen.

35. Bearbeitungsstation nach einem der vorhergehenden Ansprüche, **dadurch gekennzeichnet, daß** je ein Turm (100, 101) auf je einer Seite des Transprtweges angeordnet ist.

36. Bearbeitungsstation nach einem der vorhergehenden Ansprüche, **dadurch gekennzeichnet, daß** die Bearbeitungsstation (1) für die Bewegung des Werkstückes (2) zwei Türme (103, 104) aufweist, die Türme (103, 104) in Transportrichtung der Werkstücke (2) hintereinander angeordnet sind und sich jeder Turm (103, 104) auf beiden Seiten des Transportweges (6) abstützt, wofür jeder Turm (103, 104) eine Öffnung (105) für den Transportweg (6) besitzt.

37. Bearbeitungsstation nach einem der vorhergehenden Ansprüche, **dadurch gekennzeichnet, daß** sich die Übergabestelle (60) zwischen den Türmen (100, 101, 103, 104) befindet und/oder sich das Transportmittel (62) zwischen den Türmen (100, 101) befindet und/oder die Türme (100, 101) im oberen Bereich (102) verbunden sind.

38. Bearbeitungsstation nach einem der vorhergehenden Ansprüche, **dadurch gekennzeichnet, daß** die Werkzeugspindel (30) zwischen den Türmen (103, 104) angeordnet ist.

39. Bearbeitungsstation nach einem der vorhergehenden Ansprüche, **dadurch gekennzeichnet, daß** ein Werkstück (2) oder ein das Werkstück (2) tragender Werkstückträger (5) von zumindest einem Werkzeugschlitten (4) oder beiden Werkstückschlitten (4, 4') der beiden Türme (100, 101, 103, 104) bewegt wird.

40. Bearbeitungsstation nach einem der vorhergehenden Ansprüche, **dadurch gekennzeichnet, daß** jeder Turm (100, 101, 103, 104) einen Antrieb für den Werkstückschlitten (4, 4') besitzt.

41. Bearbeitungsstation nach einem der vorhergehenden Ansprüche, **dadurch gekennzeichnet, daß** die Werkstückschlittenantriebe der beiden Türme (100, 101, 103, 104) zueinander synchronisiert sind.

42. Bearbeitungsstation nach einem der vorhergehenden Ansprüche, **dadurch gekennzeichnet, daß** die Werkstückschlitten (4, 4') beider Türme (100, 101, 103, 104) eine gemeinsame Drehachse (A) besitzen.

43. Bearbeitungsstation nach einem der vorhergehenden Ansprüche, **dadurch gekennzeichnet, daß** die Werkstückschlitten (4, 4') je einen Drehantrieb für die gemeinsame Drehachse (A) besitzen und diese Drehantriebe zueinander synchronisierbar sind.

44. Bearbeitungsstation nach einem der vorhergehenden Ansprüche, **dadurch gekennzeichnet, daß** der Werkstückschlitten (4, 4') für das Werkstück (2) einen Drehantrieb für eine Drehachse (B) aufweist, die parallel zur Bewegungsrichtung (Y) des Werkstückschlittens (4, 4') orientiert ist.

45. Bearbeitungsstation nach einem der vorhergehenden Ansprüche, **dadurch gekennzeichnet, daß** die Werkstückschlitten (4, 4') beider Türme (100, 101, 103, 104) durch eine Brücke (47) verbindbar sind, wobei die Brücke (47) das mindestens eine Werkstück (2) um mindestens eine zur Bewegungsrichtung der Werkstückschlitten (4, 4') parallelen Drehachsen (B), gegebenenfalls untereinander auch unabhängig zu drehen vermag.

46. Bearbeitungsstation nach einem der vorhergehenden Ansprüche, **dadurch gekennzeichnet, daB** das Transportmittel (62) sowohl den An- wie auch den Abtransport der unbearbeiteten beziehungsweise bearbeiteten Werkstücke (2) leistet und/oder das Transportmittel (62) ein Anförder- und ein Abfördermittel (600) aufweist, wobei auf dem Anfördermittel (601) die unbearbeiteten Werkstücke (2) angefördert und auf dem Abfördermittel (600) die bearbeiteten Werkstücke (2) abtransportiert werden.

47. Bearbeitungsstation nach einem der vorhergehenden Ansprüche, **dadurch gekennzeichnet, daß** das Anfördermittel (601) und Abfördermittel (600) übereinander oder nebeneinander angeordnet sind.

48. Bearbeitungsstation nach einem der vorhergehenden Ansprüche, **dadurch gekennzeichnet, daß** zwei oder mehrere Werkstücke (2) auf einem Werkstückträger (5) aufgespannt sind.

49. Bearbeitungsstation nach einem der vorhergehenden Ansprüche, **dadurch gekennzeichnet, daß** die Werkstücke (2) auf dem Werkstückträger (5) in Längsrichtung des Transportweges oder rechtwinklig hierzu angeordnet sind.

50. Bearbeitungsstation nach einem der vorhergehenden Ansprüche, **dadurch gekennzeichnet, daß** die Be-arbeitungsstation (1) zwei oder mehrere Werkzeugspindeln (30) aufweist und die Bearbeitungsstation (1) gleichzeitig zwei oder mehrere Werkstücke (2) bearbeitet.

51. Bearbeitungsstation nach einem der vorhergehenden Ansprüche, **dadurch gekennzeichnet, daß** mehrere Werkstücke (2) von einem oder mehreren der Werkstückschlitten (4, 4') gleichartig oder zumindest teilweise unterschiedlich bewegt beziehungsweise gedreht werden.

52. Bearbeitungsstation nach einem der vorhergehenden Ansprüche, **dadurch gekennzeichnet, daß** die Spindelachse (31) der Werkzeugspindel (30) parallel oder rechtwinklig zur Transportrichtung des Werkstückes (2) auf dem Transportweg orientiert sind.

53. Bearbeitungsanlage, insbesondere Transferstraße, bestehend aus zumindest einem oder mehreren Bearbeitungstationen nach einer der vorhergehenden Ansprüche, wobei an allen Bearbeitungsstationen für den An- und Abtransport des Werkstückes (2) eine Transportbahn (6) vorgesehen ist.

54. Bearbeitungsanlage nach dem vorhergehenden Anspruch 53,
**dadurch gekennzeichnet, daß** hintereinander zwei oder mehrere Bearbeitungsstationen vorgesehen sind und angeförderte Werkstücke durch eine erste Bearbeitungsstation durchgefördert werden zu einer freien Bearbeitungsstation.

55. Bearbeitungsanlage nach einem der vorhergehenden Ansprüche 53 und 54, **dadurch gekennzeichnet, daß** jedes Werkstück beziehungsweise jeder werkstückträger ein gegebenenfalls auch beschreibbares Identifikationselement trägt.

56. Bearbeitungsanlage nach einem der vorhergehenden Ansprüche 53 bis 55, **dadurch gekennzeichnet, daß** die Bearbeitungsstationen hintereinander angeordnet sind und die Abtransportbahn der ersten Bearbeitungsstation die Antransportbahn der zweiten Bearbeitungsstation ist.

57. Bearbeitungsanlage nach einem der vorhergehenden Ansprüche 53 bis 56, **dadurch gekennzeichnet, daß** mehrere Bearbeitungsstationen zwischen einer für die Bearbeitungsstation gemeinsamen Antransportbahn und Ab-transportbahn angeordnet sind.

58. Bearbeitungsanlage nach einem der vorhergehenden Ansprüche 53 bis 57, **dadurch gekennzeichnet, daß** von der Abtransportbahn eine Verbindungsstation zur Antransportbahn besteht und bereits bearbeitete Werkstücke nochmals auf der Antransportbahn zur Bearbeitung herangeführt werden.

59. Bearbeitungsanlage nach einem der vorhergehenden Ansprüche 53 bis 58, **dadurch gekennzeichnet, daß** die Bearbeitungsstationen parallel und/oder seriell zueinander angeordnet und durch eine Transportbahn verbunden sind.

60. Bearbeitungsanlage nach einem der vorhergehenden Ansprüche 53 bis 59, **dadurch gekennzeichnet, daß** für den Transport der Werkstücke mindestens zwei im wesentlichen parallel zueinander angeordnete, nebeneinander oder übereinander verlaufende Transportbahnen vorgesehen sind.

61. verfahren für das Positionieren eines Werkstückes an einer Bearbeitungseinheit, insbesondere eine ein Werkzeug trangende Werkzeugspindel, wobei das Werkstück auf einer Transportbahn an die Übergabestelle transportiert wird, dort von einem Werkstückschlitten aufgenommen, insbesondere angehoben wird und der Werkstückschlitten das Werkstück an die Bearbeitungseinheit transportiert und/oder der Werkstückschlitten das Werkstück während der Bearbeitung in vertikaler Richtung durch die Bearbeitungseinheit bewegt und das Werkstück nach Abschluß der Bearbeitung vom Werkstückschlitten an der Übergabestelle wieder abgelegt wird und das Werkstück hernach auf der Transportbahn abtransportiert wird, wobei das Werkstück entlang nur der vertikalen Linearachse durch den Werkstückschlitten bewegt wird.

62. Verfahren nach dem vorgehenden Anspruch 61, **dadurch gekennzeichnet, daß** der Werkstückschlitten für den Ab-transport des Werkstückes angehoben wird und/oder der Werkstückschlitten erst dann an die Übergabestelle heranfährt, wenn das Werkstück eingefördert wurde.

## Claims

1. Machining station wherein for machining of at least one workpiece (2) at least one machining unit (3), in particular a tool spindle (30) carrying a tool, is provided, and the workpiece (2) can be conveyed to a discharge point (60), and can be picked up there by at least one workpiece carriage (4), the workpiece carriage (4) being able to convey the workpiece (2) to the machining unit (3) for a machining, **characterised in that** the workpiece carriage (4) can move the workpiece (2) vertically through the machining unit (3) during the machining, the workpiece being movable by the workpiece carriage (4) along only one vertical linear axis (Y).

2. Machining station according to claim 1, **characterised in that** the tool spindle (30) is movable relatively to the workpiece carriage (4) along two to the direction of movement of the workpiece carriage (4) along the first linear axis each rectangular arranged second (X) and third (Z) linear axis.

3. Machining station according to one of the preceding claims , **characterised in that** the discharge point (60) is located within the machining station, respectively the working area, and/or a separation of the axes in workpiece carriage axis and in machining axis is provided.

4. Machining station according to one of the preceding claims, **characterised in that** the workpiece carriage (4) is able to rotate the workpiece (2) around a rotational axis (A, B, C,) and or the workpiece carriage (4) carries several workpieces (2), and/or the workpiece carriage (4) is guided in a stand (10) or a tower (100).

5. Machining station according to one of the preceding claims, **characterised in that** the workpiece (2) is clamped on a workpiece carrier (5), and/or the workpiece (2) is clamped on the workpiece carrier (5) upright, suspended, lateral or inclined.

6. Machining station according to one of the preceding claims, **characterised in that** the workpiece carriage (4) grasps and holds the workpiece (2), respectively the workpiece carrier (5) which carries the workpiece (2), from above, inclined from the side and/or from below.

7. Machining station according to one of the preceding claims, **characterised in that** the workpiece carriage (4) is designed like a frame or a rocker and/or the workpiece carriage (4) is designed like a table, and the workpiece (2) is supported by the workpiece table (45) of the workpiece carriage (4).

8. Machining station according to one of the preceding claims, **characterised in that** the rotational axis is rectangular (A, C), parallel (B), or angular (CB) to the vertical direction of movement (Y) of the workpiece carriage (4), and/or the workpiece carriage (4) is able to turn the workpiece (2) around two or three axes (A, B, C) directed rectangular to each other.

9. Machining station according to one of the claims, **characterised in that** a hinged bearing (42), in particular around the rotational axis (A), respectively around a horizontal axis, is provided on the workpiece carriage (4).

10. Machining station according to one of the preceding claims, **characterised in that** several workpieces (2) which are positioned on the workpiece carriage (4) can be rotated around a common horizontal axis (A).

11. Machining station according to one of the preceding claims, **characterised in that** on the workpiece carriage (4) at least one, preferably two, lateral cheeks (43) are provided which rotatably carry a carrier (46), and the carrier (46) holds the workpiece (2) or the workpiece carrier (5).

12. Machining station according to one of the preceding claims, **characterised in that** the workpiece (2) or the workpiece carrier (5) is held by a carrousel (47) which is supported rotatably on a carrier (46).

13. Machining station according to one of the preceding claims, **characterised in that** the lateral cheeks (43) hold the hinged bearing (42).

14. Machining center according to one of the preceding claims, **characterised in that** the carrousel (47) can be turned preferably around the B-axis, in particular around a vertical axis.

15. Machining center according to one of the preceding claims, **characterised in that** for each workpiece (2) carried by the workpiece carriage (4) a single, in particular also formed each by single carrousels, preferably vertically orientated rotational axis (B) is provided.

16. Machining station according to one of the preceding claims, **characterised in that** the workpiece carriage (4) is guided in a frame (11), and/or the workpiece carriage (4) is guided in such a way that a machining from two sides, in particular from both sides, is carried out with regard to the conveying line (6).

17. Machining station according to one of the preceding claims, **characterised in that** the stand (10) for the guide of the workpiece carriage (4) is arranged in the region of the discharge point (60) on the side opposite the machining unit (3).

18. Machining station according to one of the preceding claims, **characterised in that** the frame (11) extends, respectively is supported, in the region of the discharge point (60) on both sides of the discharge point (60).

19. Machining station according to one of the preceding claims, **characterised in that** the vertically orientated stand parts, respectively frame parts (12), have guide rails (15) on which at least one each, preferably two each, guide shoes of the workpiece carriage (4) move.

20. Machining station according to one of the preceding claims, **characterised in that** the workpiece (2) is moved along a conveying line (6), and the discharge point (60) is part of this conveying line (6), respectively the conveying line (6) is connected to the discharge point (60).

21. Machining station according to one of the preceding claims, **characterised in that** on the machining station a first discharge point (66) for the feeding and a second discharge point (67), distant from the first one, for the removing of the workpieces (2) is provided.

22. Machining station according to one of the preceding claims, **characterised in that** the machining unit (3) has conveying means (62) for the movement of the workpiece (2), respectively of the workpiece carrier (5), on the conveying line (6) at least in the region of the machining station (1).

23. Machining station according to one of the preceding claims, **characterised in that** the conveying means (62) feeds a workpiece (2), respectively a workpiece carrier (5), waiting in front of the machining station on the conveying line (6) into the machining station, and/or the conveying means (62) conveys finished workpieces (2) to the conveying line positioned in flow direction behind the machining station.

24. Machining station according to one of the preceding claims, **characterised in that** the machining unit (3) can essentially be moved and positioned rectangular to the movement of the workpiece carriage (4), and/or the machining unit (3) carries one or more tool spindles (30), and/or the machining station has several machining units (3).

25. Machining station according to one of the preceding claims, **characterised in that** the workpiece (2) is positioned between two machining units (3) of the machining station during the machining.

26. Machining station according to one of the preceding claims, **characterised in that** the rotational axis (A) is, on the one hand, rectangular to the spindle axis (31) and, on the other hand, is rectangular to the direction of movement (Y) of the workpiece carriage (4).

27. Machining station according to one of the preceding claims, **characterised in that** the workpiece carriage (4) carries a tool magazine (32) for the machining unit (3), and the workpiece carriage (4) can be positioned correspondingly for a change of tools on the machining unit (3).

28. Machining station according to one of the preceding claims, **characterised in that** independently from the movement of the workpiece carriage also the tool magazine can be moved and positioned.

29. Machining station according to one of the preceding claims, **characterised in that** a clamping device (50) is provided in order to connect the workpiece (2), respectively the workpiece carrier (5) carrying the workpiece (2), with the workpiece carriage (4).

30. Machining station according to one of the preceding claims, **characterised in that** the relative motion (Y) of the workpiece carriage (4) serves for grasping, respectively releasing, the workpiece (2), respectively the workpiece carrier (5), from the workpiece carriage (4).

31. Machining station according to one of the preceding claims, **characterised in that** a clamping device on the workpiece carriage (4) is formed by a gripper (500) which can lifted and lowered, and that for lifting and lowering the gripper (500) an eccentric drive (503) is provided which moves together with the workpiece carriage (4).

32. Machining station according to one of the preceding claims, **characterised in that** a counterweight (8) is provided on the hinged bearing (42).

33. Machining station according to one of the preceding claims, **characterised in that** the counterweight is formed by a working cylinder which acts on a crank of a carrier (46).

34. Machining station according to one of the preceding claims, **characterised in that** the machining station (1) has two towers (100, 101) for the movement of the workpiece (2), that each tower carries a movable workpiece carriage and the workpiece carriages, if necessary together, carry at least one workpiece.

35. Machining station according to one of the preceding claims, **characterised in that** one tower (100, 101) each is arranged on one side each of the conveying way.

36. Machining station according to one of the preceding claims, **characterised in that** the machining station (1) has two towers (103, 104) for the movement of the workpiece (2), that the towers (103, 104) are arranged one behind the other in direction of conveying of the workpieces (2), and that each tower (103, 104) is supported on both sides of the conveying line (6), each tower (103, 104) having an opening (105) for the conveying line for that purpose.

37. Machining station according to one of the preceding claims, **characterised in that** the discharge point (60) is located between the towers (100, 101, 103, 104), and/or that the conveying means (62) is located between the towers (100, 101), and/or the towers (100, 101) are connected in their top region (102).

38. Machining station according to one of the preceding claims, **characterised in that** the tool spindle (30) is arranged between the towers (103, 104).

39. Machining station according to one of the preceding claims, **characterised in that** a workpiece (2) or a workpiece carrier (5) carrying the workpiece (2) is moved by at least one workpiece carriage (4) or both workpiece carriages (4, 4') of the two towers (100, 101, 103, 104).

40. Machining station according to one of the preceding claims, **characterised in that** each tower (100, 101, 103, 104) has a drive for the workpiece carriage (4, 4').

41. Machining station according to one of the preceding claims, **characterised in that** the workpiece carriage drives of the two towers (100, 101, 103, 104) are synchronised to each other.

42. Machining station according to one of the preceding claims, **characterised in that** the workpiece carriages (4, 4') of both towers (100, 101, 103, 104) have a common rotational axis (A).

43. Machining station according to one of the preceding claims, **characterised in that** the workpiece carriages (4, 4') each have a rotating drive for the common rotational axis (A) and these rotational drives can be synchronised to each other.

44. Machining station according to one of the preceding claims, **characterised in that** the workpiece carriage (4, 4') for the workpiece (2) has a rotational drive for a rotational axis (B) which is orientated parallel to the direction of movement (Y) of the workpiece carriage (4, 4').

45. Machining station according to one of the preceding claims, **characterised in that** the workpiece carriages (4, 4') of both towers (100, 101, 103, 104) can be connected by means of a bridge (47), the bridge (47) being able to rotate the at least one workpiece (2) around at least one rotational axis (B) parallel to the direction of movement of the workpiece carriages (4, 4'), if necessary also independently to each other.

46. Machining station according to one of the preceding claims, **characterised in that** the conveying means (62) carries out the feeding as well as the removing of the unfinished, respectively machined, workpieces (2), and/or the conveying means (62) has a means for feeding and removing (600), the unfinished workpieces (2) being fed on the means of feeding (601) and the machined workpieces (2) being conveyed away on the means for removing (600).

47. Machining station according to one of the preceding claims, **characterised in that** the means for feeding (601) and the means for removing (600) being arranged one above the other or next to each other.

48. Machining station according to one of the preceding claims, **characterised in that** two or more workpieces (2) are clamped on a workpiece carrier (5).

49. Machining station according to one of the preceding claims, **characterised in that** the workpieces (2) are arranged on the workpiece carrier (5) in longitudinal direction of the way of conveying or rectangular to that.

50. Machining station according to one of the preceding claims, **characterised in that** the machining station (1) has two or more tool spindles (30), and the machining station (1) machines simultaneously two or more workpieces (2).

51. Machining station according to one of the preceding claims, **characterised in that** several workpieces (2) are moved, respectively rotated, by one or more workpiece carriages (4, 4') in the same way or at least partly differently.

52. Machining station according to one of the preceding claims, **characterised in that** the spindle axis (31) of the tool spindle (30) is orientated parallel or rectangular to the direction of transport of the workpiece (2) on the conveying way.

53. Machining installation, in particular transfer line, comprising at least one or more machining stations according to one of the preceding claims, all machining stations being provided with a conveying line (6) for feeding and removing the workpiece (2).

54. Machining installation according to the preceding claim 53, **characterised in that** two or more machining stations are provided one behind the other, and fed workpieces are conveyed through a first machining station to a free machining station.

55. Machining installation according to one of the preceding claims 53 and 54, **characterised in that** each workpiece, respectively each workpiece carrier, carries an identification element which also can be written on, if necessary.

56. Machining installation according to one of the preceding claims 53 to 55, **characterised in that** the machining stations are arranged one behind the other, and the line for removing of the first machining station is the feeding line for the second machining station.

57. Machining installation according to one of the preceding claims 53 to 56, **characterised in that** several machining stations are arranged between a feeding line and a line for removing which are common for the machining station.

58. Machining installation according to one of the preceding claims 53 to 57, **characterised in that that** there is a connecting station from the removing line to the feeding line, and already machined workpieces are again fed for machining on the feeding line.

59. Machining installation according to one of the preceding claims 53 to 58, **characterised in that** the machining stations are arranged parallel and/or serial to each other, and are connected by a conveying line.

60. Machining installation according to one of the preceding claims 53 to 59, **characterised in that** for conveying the workpieces at least two conveying lines are provided which are arranged essentially parallel to each other, next to each other or one above the other.

61. Method for positioning a workpiece on a machining unit, in particular a tool spindle carrying a tool, the workpiece being conveyed on a conveying line to the discharge point, picked up there by a workpiece carriage, in particular lifted, and the workpiece carriage conveying the workpiece to the machining unit, and/or the workpiece carriage moving the workpiece during machining through the machining unit in vertical direction, and the workpiece, after finishing the machining, being deposited again by the workpiece carriage on the discharge point, and, after that, the workpiece being removed on the conveying line, the workpiece being moved along only one linear axis by the workpiece carriage.

62. Method according to the preceding claim 61, **characterised in that** the workpiece carriage is lifted for the removing of the workpiece, and/or the workpiece carriage only then drives to the discharge point when the workpiece has been fed.

## Revendications

1. Station d'usinage permettant l'usinage d'au moins une pièce à usiner (2) par au moins une unité d'usinage (3), qui est, en particulier, un arbre de rotation (30) portant un outil, la pièce à usiner (2) pouvant être acheminée vers une zone de transfert (60) dans laquelle un coulisseau (4) peut recevoir cette pièce à usiner (2) pour l'acheminer vers une unité d'usinage (3), **caractérisée en ce que** le coulisseau (4) peut mouvoir la pièce à usiner (2) en position verticale à travers l'unité d'usinage (3) le long d'un seul axe vertical linéaire (Y).

2. Station d'usinage selon la revendication 1, **caractérisée en ce que** l'arbre de rotation (30) est mobile le long de deux axes (X) et (Z) perpendiculaires entre eux et perpendiculaires par rapport au premier axe (Y) que suit le coulisseau (4).

3. Station d'usinage selon une des deux revendications précédentes, **caractérisée en ce que** la zone de transfert (60) est située à l'intérieur de la station d'usinage ou à l'intérieur de la zone d'usinage et/ou **en ce qu'**il y a une séparation des axes en un axe du coulisseau et en un axe d'usinage.

4. Station d'usinage selon une des revendications précédentes, **caractérisée en ce que** le coulisseau (4) peut faire pivoter la pièce à usiner (2) autour d'au moins un axe (A, B, C) et/ou **en ce que** le coulisseau (4) porte plusieurs pièces à usiner (2) et/ou **en ce que** le coulisseau (4) est guidé par une colonne (10) ou par une tour (100).

5. Station d'usinage selon une des revendications précédentes, **caractérisée en ce que** la pièce à usiner (2) est assujettie à un support (5) et/ou **en ce que** la pièce à usiner (2) est assujettie à un support (5) en position verticale, fixée par l'une ou l'autre extrémité, horizontale ou en biais.

6. Station d'usinage selon une des revendications précédentes, **caractérisée en ce que** le coulisseau (4) saisit et maintient la pièce à usiner (2) ou le support (5) portant la pièce à usiner (2) par le haut, par le côté et/ou par le bas.

7. Station d'usinage selon une des revendications précédentes, **caractérisée en ce que** le coulisseau (4) possède une forme de cadre ou de bascule et/ou **en ce que** le coulisseau (4) possède une forme de table (45) sur laquelle repose la pièce à usiner (2).

8. Station d'usinage selon une des revendications précédentes, **caractérisée en ce que** l'axe de pivotement est perpendiculaire (A, C), parallèle (B) ou en biais (CB) par rapport à la direction de mouvement vertical (Y) du coulisseau (4) et/ou **en ce que** le coulisseau (4) peut faire pivoter la pièce à usiner autour de deux ou trois axes (A, B, C), chacun perpendiculaire à l'autre.

9. Station d'usinage selon une des revendications précédentes, **caractérisée en ce qu'**il existe un roulement (42) au niveau du coulisseau (4) permettant en particulier un pivotement autour de l'axe (A) ou autour d'un axe horizontal.

10. Station d'usinage selon une des revendications précédentes, **caractérisée en ce que** plusieurs pièces à usiner (2) situées sur le coulisseau (4) peuvent être pivotées autour d'un axe commun (A).

11. Station d'usinage selon une des revendications précédentes, **caractérisée en ce qu'**il existe au moins une, et de préférence deux jumelles latérales (43) au niveau du coulisseau (4) portant de façon pivotable un élément de support (46), qui maintient la pièce à usiner (2) ou un élément de support (5) prévu pour la pièce à usiner.

12. Station d'usinage selon une des revendications précédentes, **caractérisée en ce que** la pièce à usiner (2) ou le support (5) sont fixés sur un carrousel (47), qui est fixé de façon pivotable sur l'élément de support (46).

13. Station d'usinage selon une des revendications précédentes, **caractérisée en ce que** les jumelles latérales (43) supportent le roulement de pivotement (42).

14. Station d'usinage selon une des revendications précédentes, **caractérisée en ce que** le carrousel (47) tourne de préférence autour de l'axe B et en particulier autour d'un axe vertical.

15. Station d'usinage selon une des revendications précédentes, **caractérisée en ce que** l'existence d'un carrousel (47) par pièce à usiner rend possible le fait que chacune des pièces à usiner (2) maintenues sur le coulisseau (4) puisse posséder un axe de rotation différent, de préférence vertical tel l'axe B.

16. Station d'usinage selon une des revendications précédentes, **caractérisée en ce que** le coulisseau (4) est guidé à l'intérieur d'un cadre (11) et/ou **en ce que** le coulisseau (4) est guidé de telle façon qu'un usinage des deux côtés est possible, et de préférence, des deux côtés du transporteur (6).

17. Station d'usinage selon une des revendications précédentes, **caractérisée en ce que** la colonne (10) prévue pour le guidage du coulisseau (4) est située dans la zone de transfert (60), en face de l'unité d'usinage (3).

18. Station d'usinage selon une des revendications précédentes, **caractérisée en ce que** le cadre (11) s'étend et s'appuie des deux côtés de la zone de transfert (60).

19. Station d'usinage selon une des revendications précédentes, **caractérisée en ce que** les éléments verticaux (12) des colonnes ou du cadre possèdent des rails de guidage (15) et, **en ce qu'**au moins un pied de guidage appartenant au coulisseau (4) transportant la pièce à usiner se déplace sur chacun de ces rails de guidage (15).

20. Station d'usinage selon une des revendications précédentes, **caractérisée en ce que** la pièce à usiner (2) est déplacée le long d'un rail de transport (6) et, **en ce que** la zone de transfert (60) fait partie de ce rail de transport (6) ou tout au moins **en ce que** la zone de transfert (60) prolonge ce rail de transport (6).

21. Station d'usinage selon une des revendications précédentes, **caractérisée en ce que** la station d'usinage possède une première zone de transfert (66) pour l'arrivage des pièces à usiner (2) et une deuxième zone de transfert (67), à distance de la première, pour le départ des pièces usinées (2).

22. Station d'usinage selon une des revendications précédentes, **caractérisée en ce que** la station d'usinage (3) comporte au moins dans la zone de la station d'usinage (1) des moyens de transport (62) pour le déplacement de la pièce à usiner (2) ou du support (5) sur le rail de transport (6).

23. Station d'usinage selon une des revendications précédentes, **caractérisée en ce que** le moyen de transport (62) achemine une pièce à usiner (2) ou un support (5) pour ladite pièce, qui stationne devant la station d'usinage sur le rail de transport (6) allant vers l'intérieur de la station d'usinage et/ou **en ce que** le moyen de transport (62) achemine des pièces usinées (2) vers le rail de transport situé en aval.

24. Station d'usinage selon une des revendications précédentes, **caractérisée en ce que** l'unité d'usinage (3) peut être déplacée et positionnée approximativement perpendiculairement à la direction du mouvement du coulisseau (4) et/ou **en ce que** l'unité d'usinage (3) comporte un ou plusieurs arbres de rotation (30) et/ou **en ce que** la station d'usinage comporte plusieurs unités d'usinage (3).

25. Station d'usinage selon une des revendications précédentes, **caractérisée en ce que** la pièce en cours d'usinage (2) est située entre deux unités d'usinage (3).

26. Station d'usinage selon une des revendications précédentes, **caractérisée en ce que** l'axe de rotation (A) est d'un côté perpendiculaire à l'axe de l'arbre de rotation (31) et, de l'autre côté perpendiculaire à la direction du mouvement (Y) du coulisseau (4).

27. Station d'usinage selon une des revendications précédentes, **caractérisée en ce que** le coulisseau (4) porte un magasin d'outils (32) pour l'unité d'usinage (3) et, **en ce que** le coulisseau (4) peut être positionné au niveau de l'unité d'usinage de manière appropriée afin d'effectuer le changement d'outil.

28. Station d'usinage selon une des revendications précédentes, **caractérisée en ce que** le magasin d'outils peut être déplacé et positionné indépendamment du mouvement du coulisseau.

29. Station d'usinage selon une des revendications précédentes, **caractérisée en ce qu'**il existe un dispositif de serrage (50) fixant la pièce à usiner (2) ou le support (5) portant la pièce à usiner (2) sur le coulisseau (4).

30. Station d'usinage selon une des revendications précédentes, **caractérisée en ce que** le mouvement relatif (Y) du coulisseau (5) sert à saisir la pièce à usiner (2) ou le support (5), ou permet de la libérer de la fixation sur le coulisseau (4).

31. Station d'usinage selon une des revendications précédentes, **caractérisée en ce qu'**un dispositif de serrage au niveau du coulisseau (4) est formé par un grappin (500), qui peut être levé ou abaissé à l'aide d'une commande excentrique (503) se déplaçant avec le coulisseau.

32. Station d'usinage selon une des revendications précédentes, **caractérisée en ce qu'**un dispositif équilibrant les poids (8) est situé au niveau du roulement de pivotement (42).

33. Station d'usinage selon une des revendications précédentes, **caractérisée en ce que** l'équilibrage des poids est effectué par un vérin agissant via une manivelle sur l'élément de support (46).

34. Station d'usinage selon une des revendications précédentes, **caractérisée en ce que** la station d'usinage (1) permet de déplacer la pièce à usiner (2) à l'aide de deux tours (100, 101), dont chacune possède un coulisseau mobile et, **en ce que** les coulisseaux portent au moins une pièce à usiner, le cas échéant ensemble.

35. Station d'usinage selon une des revendications précédentes, **caractérisée en ce que** les tours (100, 101) sont situées chacune d'un côté du rail de transport.

36. Station d'usinage selon une des revendications précédentes, **caractérisée en ce que** la station d'usinage (1) permet de déplacer la pièce à usiner (2) à l'aide de deux tours (103, 104) alignées dans la direction du transport des pièces à usiner (2) et chacune des tours s'appuyant de chaque côté du rail de transport (6) et possédant une couverture (105) pour le passage du rail de transport (6).

37. Station d'usinage selon une des revendications précédentes, **caractérisée en ce que** la zone de transfert (60) est située entre les tours (100, 101, 103, 104) et/ou **en ce que** le moyen de transport (62) est situé entre les tours (100, 101) et/ou **en ce que** les tours (100, 101) sont unies dans leur partie supérieure (102).

38. Station d'usinage selon une des revendications précédentes, **caractérisée en ce que** l'arbre de rotation (30) est situé entre les tours (103, 104).

39. Station d'usinage selon une des revendications précédentes, **caractérisée en ce qu'**une pièce à usiner ou un support (5) portant une pièce à usiner (2) est déplacée par au moins un coulisseau (4) ou par deux coulisseaux (4, 4') de deux tours (100, 101, 103, 104).

40. Station d'usinage selon une des revendications précédentes, **caractérisée en ce que** chacune des tours (100, 101, 103, 104) possède une commande pour le déplacement du coulisseau (4, 4').

41. Station d'usinage selon une des revendications précédentes, **caractérisée en ce que** les commandes des coulisseaux des deux tours (100, 101, 103, 104) sont synchronisées entre elles.

42. Station d'usinage selon une des revendications précédentes, **caractérisée en ce que** les coulisseaux (4, 4') des deux tours (100, 101, 103, 104) possèdent un axe de rotation commun (A).

43. Station d'usinage selon une des revendications précédentes, **caractérisée en ce que** les coulisseaux (4, 4') comportent chacun une commande de pivotement autour de l'axe de rotation commun (A) et **en ce que** ces commandes de pivotement peuvent être synchronisées.

44. Station d'usinage selon une des revendications précédentes, **caractérisée en ce que** le coulisseau (4, 4') possède une commande de rotation de la pièce à usiner (2) autour d'un axe (B), parallèle à la direction du mouvement (Y) du coulisseau (4, 4').

45. Station d'usinage selon une des revendications précédentes, **caractérisée en ce que** les coulisseaux (4, 4') des deux tours (100, 101, 103, 104) peuvent être unifiés par un pont (47), qui permet de faire tourner la ou les pièces à usiner (2), le cas échéant l'une indépendamment de l'autre, autour d'au moins un axe (B) parallèle à la direction du mouvement des coulisseaux (4, 4').

46. Station d'usinage selon une des revendications précédentes, **caractérisée en ce que** le moyen de transport (62) réalise autant l'acheminement des pièces avant usinage qu'après usinage (2) et/ou **en ce que** le moyen de transport (62) possède un dispositif d'arrivage (601) et de départ (600), le premier permettant de faire venir les pièces à usiner (2) et le deuxième de faire partir les pièces usinées.

47. Station d'usinage selon une des revendications précédentes, **caractérisée en ce que** les dispositifs d'arrivage (601) et de départ (600) sont situés l'un au-dessus de l'autre ou l'un à côté de l'autre.

48. Station d'usinage selon une des revendications précédentes, **caractérisée en ce que** deux voire plus de deux pièces à usiner (2) sont maintenues sur un support (5).

49. Station d'usinage selon une des revendications précédentes, **caractérisée en ce que** les pièces à usiner (2) sont orientées sur le support (5) soit dans le sens soit perpendiculairement au mouvement de transport.

50. Station d'usinage selon une des revendications précédentes, **caractérisée en ce que** la station d'usinage (1) possède deux ou plus de deux arbres de rotation (30), et **en ce que** la station d'usinage (1) usine simultanément deux ou plus de deux pièces.

51. Station d'usinage selon une des revendications précédentes, **caractérisée en ce que** plusieurs pièces à usiner (2) sont déplacées ou pivotées de façon complètement ou partiellement identique par un ou plusieurs coulisseaux (4, 4').

52. Station d'usinage selon une des revendications précédentes, **caractérisée en ce que** l'axe (31) de l'arbre de rotation (30) possède une orientation parallèle ou perpendiculaire à la direction de transport de la pièce à usiner (2) sur le rail de transport.

53. Ligne d'usinage consistant, en particulier, en une ligne de transfert comportant au moins une station d'usinage, voire plusieurs selon une des revendications précédentes, **caractérisée en ce que** chacune des stations d'usinage possèdent un dispositif de transport (6) permettant d'apporter et d'emporter les pièces à usiner (2).

54. Ligne d'usinage selon la revendication précédente 53,
**caractérisée en ce qu'**elle possède deux ou plus de deux stations d'usinage situées l'une derrière l'autre, et **en ce que** les pièces à usiner (2) sont acheminées à travers une première station d'usinage vers une station d'usinage libre.

55. Ligne d'usinage selon une des deux revendications précédentes 53 ou 54, **caractérisée en ce que** chaque pièce à usiner ou chacun des supports de ces pièces possède un élément d'identification reconnaissable.

56. Ligne d'usinage selon une des revendications précédentes 53 à 55, **caractérisée en ce que** les stations d'usinage sont situées l'une derrière l'autre, et **en ce que** le dispositif de transport de départ de la première station d'usinage est égal au dispositif de transport d'arrivée de la deuxième station d'usinage.

57. Ligne d'usinage selon une des revendications précédentes 53 à 56, **caractérisée en ce que** plusieurs stations d'usinage sont situées entre un dispositif de transport d'arrivage et un dispositif de transport de départ communs.

58. Ligne d'usinage selon une des revendications précédentes 53 à 57, **caractérisée en ce qu'**il existe une station permettant de renvoyer les pièces usinées du dispositif de transport de départ vers le dispositif de transport d'arrivée, afin de pouvoir effectuer de nouveau des usinages de pièces déjà usinées.

59. Ligne d'usinage selon une des revendications précédentes 53 à 58, **caractérisée en ce que** les stations d'usinage sont situées en parallèle et/ou en série, et **en ce qu'**elles sont connectées par un dispositif de transport.

60. Ligne d'usinage selon une des revendications précédentes 53 à 59, **caractérisée en ce que** le transport des pièces à usiner est assuré par au moins deux dispositifs de transport approximativement parallèles, situés soit côte à côte, soit l'un au-dessus de l'autre.

61. Procédé de positionnement d'une pièce à usiner sur une station d'usinage pouvant être, en particulier, un arbre de rotation portant un outil d'usinage, la pièce à usiner étant d'abord transportée par un dispositif de transport vers une zone de transfert où elle est saisie et plus particulièrement soulevée par un coulisseau de transport l'acheminant vers la station d'usinage et/ou la maintenant et la transportant lors de l'usinage uniquement le long d'un axe vertical à travers la station d'usinage d'où elle est, après usinage, acheminée vers la zone de transport et déposée sur le dispositif de transport.

62. Procédé selon la revendication précédente 61, **caractérisé en ce que** le coulisseau est soulevé afin d'enlever la pièce usinée et/ou **en ce que** le coulisseau s'approche de la zone de transfert seulement lorsque la pièce à usiner est arrivée dans la zone de transfert.
